(19) Europäisches Patentamt
European Patent Office
Office européen des brevets

(11) EP 2 623 575 A1

(12) # EUROPEAN PATENT APPLICATION
published in accordance with Art. 153(4) EPC

(43) Date of publication:
**07.08.2013 Bulletin 2013/32**

(21) Application number: **10857878.2**

(22) Date of filing: **01.10.2010**

(51) Int Cl.:
***C09J 163/00*** *(2006.01)*
***C09D 4/00*** *(2006.01)*
***C09D 11/00*** *(2006.01)*
***C09D 163/00*** *(2006.01)*
***C09J 4/00*** *(2006.01)*

(86) International application number:
**PCT/JP2010/067250**

(87) International publication number:
**WO 2012/042665 (05.04.2012 Gazette 2012/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicants:
- **Riken Technos Corp.**
  **Chuo-ku**
  **Tokyo 103-8438 (JP)**
- **BASF SE**
  **67056 Ludwigshafen (DE)**

(72) Inventors:
- **TASAKA, Michihisa**
  **Kawasaki-city**
  **Kanagawa 215-0001 (JP)**
- **KANNO, Hiroyasu**
  **Tokyo 175-0094 (JP)**

(74) Representative: **Wilson, Justin Scott**
**Withers & Rogers LLP**
**4 More London Riverside**
**London SE1 2AU (GB)**

(54) **ADHESIVE COMPOSITION, COATING COMPOSITION, PRIMER USING SAME, INKJET INK, ADHESIVE METHOD, AND LAMINATE**

(57) An adhesive composition or a coating composition of the present invention contains (a) 10 to 30 % by mass of an epoxy resin; (b) 25 to 55 % by mass of an oxetane compound; (c) 25 to 55 % by mass of a vinyl ether compound; (d) 1 to 15 % by mass of a modifier (wherein the total amount of the components (a) to (d) is 100 % by mass); and (e) 3 to 15 parts by mass of a photocationic polymerization initiator with respect to 100 parts by mass of the total amount of the components (a) to (d).

EP 2 623 575 A1

## Description

### Technical Field

The present invention relates to an adhesive composition and a coating composition and also relates to a primer, an inkjet ink, an adhesion method and a laminate using the same composition. More particularly, the present invention relates to an adhesive composition, a coating composition and an inkjet ink that exhibit high adhesion to a layer of a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin.
The inkjet ink of the present invention has superior long-term storage stability and achieves superior color development of images.
The present invention also relates to a method for adhering the adhesive composition to each of the above-described layers.
The present invention further relates to a laminate of the adhesive composition or the coating composition and each of the above-described layers.
In addition, the present invention also relates to a primer layer containing the coating material and disposed on an inkjet recording medium, as well as to a printed article printed using the inkjet ink.

### Background Art

Plastic materials have been used in a variety of applications because of their unique characteristics such as toughness and workability. Nonetheless, many plastic materials have soft surfaces that can easily be scratched and many techniques have been proposed thus far to address this problem by improving hardness and scratch resistance of the surfaces of plastic materials. A typical example of these techniques is to coat the surfaces of plastic materials with an active energy ray-curable composition that cures upon irradiation with an active energy ray such as UV light or electron beam. Advantages of this technique are that a wide range of characteristics can be achieved by the composition by selecting oligomers that serve as curable components; the composition can cure fast; the pot life is long; and that the composition is essentially a solvent-free system. However, most of the conventional active energy ray-curable compositions for coating plastic materials use a polyfunctional acrylate or unsaturated polyester that is curable by radical polymerization initiated by an active energy ray. In general, in plastic coating applications in which the coating film is as thin as several micrometers, the curing of the acrylate and polyester can be significantly affected by the inhibition of the polymerization by oxygen. As a result, the adhesion and curability of the composition, as well as the scratch resistance and surface smoothness of the resulting coating film, tend to be significantly reduced.
Also, when used as an adhesive for plastics, the polyfunctional acrylate or unsaturated polyester that is curable by radical polymerization initiated by an active energy ray can only provide insufficient adhesion.
In addition, when used as an adhesive or a coating material for glass or metal materials, the polyfunctional acrylate or unsaturated polyester that is curable by radical polymerization initiated by an active energy ray can also provide insufficient adhesion.
One active energy ray-curing technique other than the active energy ray-initiated radial polymerization that has been put to practical use is the active energy ray-initiated cationic polymerization. In particular, the active energy ray-initiated cationic polymerization is not inhibited by oxygen and does not necessarily have to be carried out under inert atmosphere. Thus, the technique has an advantage that the quick and complete polymerization can be achieved in the air. To date, the active energy ray-initiated cationic polymerization have been based mostly on the polymerization of two types of monomers: epoxy resins and vinyl ethers. In particular, the photocurable epoxy resins exhibit high adhesion and can form coating films that exhibit high heat resistance and high chemical resistance. However, the relatively slow polymerization rate of conventional photocurable epoxy resins makes them inapplicable for applications where fast photocuring is required. Also, the adhesion of these epoxy resins to glass or various plastic or metal materials is insufficient. On the other hand, many of the photocurable vinyl ethers are volatile and give off strong odor when used alone. Also, the photocurable vinyl ethers tend to undergo greater contraction upon curing as compared to the photocurable epoxy resins. Many of them exhibit insufficient adhesion to glass or various plastic or metal materials.
The patent document 1 given below discloses an active energy ray-curable composition for coating plastics that includes a specific compound having an oxetane ring and exhibits high curability. According to the disclosure, the coating film formed of the composition also exhibits high adhesion, scratch resistance and surface smoothness. However, the coating film shows poor adhesion to a layer of a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin. Moreover, the balance of the transparency, surface smoothness, flexibility and impact resistance in

this coating film is not desirable.

Different image recording techniques for forming images on paper and other recording medium based on image data signals are known, including Xerography, sublimation dye thermal transfer and fusible thermal transfer, and inkjet techniques. Xerography requires a process for forming an electrostatic latent image on a photoreceptor drum by charging the drum and exposing the charged drum to light. This makes the system complicated and consequently increases the production cost. The thermal transfer techniques, while using inexpensive apparatuses, require ink ribbons, which increase the running cost and produce waste materials.

The inkjet technique employs inexpensive apparatuses and can operate with a small running cost by efficiently making use of ink by discharging ink only where an image is needed, so as to form the image directly on the recording medium. Furthermore, this technique produces little noise, making it a particularly favorable image recording technique.

The following patent document 2 discloses an ink composition containing vinyl caprolactam that can form a highly flexible cured film and exhibit high adhesion to substrate. However, the ink composition described in the patent document 2 contains a polymer and an oligomer as principal components of the ink. These components make the ink composition highly viscous and make it difficult to discharge the ink as an inkjet.

The following patent document 3 discloses radiation-curable inkjet ink composition that can be discharged as an inkjet, including:

(a) an oligo/resin component; and
(b) a radiation-curable reactive diluent containing

(i) 0.1 to 50 % by mass of an adhesion-enhancing, radiation-curable component containing one or more heterocyclic radiation-curable monomers and/or alkoxylated monomers containing a pendant alkoxylated functionality, but not containing any backbone alkoxylated functionalities; and
(ii) about 10 % by mass or less of an optional alkoxylated radiation-curable monomer containing a backbone alkoxylated functionality.

The following patent document 4 discloses a film for inkjet printing including a plastic substrate film and an inkjet ink-receiving layer disposed on at least one side of the plastic substrate film, the receiving-layer containing a hydrophobic polyurethane resin and a hydrophilic polyurethane resin, wherein the mass ratio of the amount of the hydrophilic polyurethane resin to the amount of the hydrophobic polyurethane resin is 20 to 400 parts by weight of the hydrophilic polyurethane resin with respect to 100 parts by weight of the hydrophobic polyurethane resin.

However, the technologies described in the patent documents 3 and 4 or other conventional technologies can only provide insufficient long-term storage stability of coating materials, as well as insufficient adhesion of the coating material to a layer of various substrates, such as a soft and hard vinyl chloride resin; a styrene resin; a polycarbonate resin; glass; aluminum; a steel plate; a polyolefin resin; a polyolefin resin modified by a polar group-containing compound or a copolymer of an olefin and a polar group-containing compound; magnesium; an acrylonitrile-butadiene-styrene copolymer; a polyester resin; or an acrylic resin. In addition, none of these technologies can achieve sufficient color development of images. The impact resistance and flexibility provided by these technologies also have much to be improved.

Prior Art Documents

Patent Documents

Patent Document 1: Japanese Patent Application Laid-Open No. H8-208832
Patent Document 2: Japanese Patent No. 2880845
Patent Document 3: Japanese Patent Application Laid-Open No. 2004-514014
Patent Document 3: Japanese Patent Application Laid-Open No. 2007-050620

[Disclosure of the Invention]

[Problems to be Solved by the Invention]

Accordingly, it is an object of the present invention to provide an adhesive composition and a coating composition that exhibit high adhesion to polar resins, ceramics, metals and other materials and have transparency, surface smoothness, flexibility and impact resistance in a well-balanced manner, as well as an adhesion method and a laminate using such a composition.

It is another object of the present invention to provide a coating material and an inkjet ink that have superior long-term storage stability and high adhesion to a layer of various substrates such as soft and hard vinyl chloride resins; styrene resins; polycarbonate resins; glass; aluminum; steel plates; polyolefin resins; a polyolefin resin modified by a polar group-containing compound or a copolymer of an olefin and a polar group-containing compound; magnesium; acrylonitrile-butadiene-styrene copolymers; polyester resins; or acrylic resins, that achieve superior color development of images, and that exhibit high impact resistance and flexibility, as well as to provide a primer layer containing the coating material and disposed on an inkjet recording medium, and a printed article printed using the inkjet ink.

[Means for Solving the Problems]

In the course of extensive studies, the present inventors have found out that a composition that contains the following components (a), (b), (c), (d) and (e) in a specific quantitative relation can achieve the above-described objects to complete the present invention.

Accordingly, the present invention is as follows:

1. An adhesive composition containing:

    (a) 10 to 30 % by mass of an epoxy resin;
    (b) 25 to 55 % by mass of an oxetane compound;
    (c) 25 to 55 % by mass of a vinyl ether compound;
    (d) 1 to 15 % by mass of a modifier, wherein the total amount of the components (a) to (d) is 100 % by mass; and
    (e) 3 to 15 parts by mass of a photocationic polymerization initiator with respect to 100 parts by mass of the total amount of the components (a) to (d).

2. The adhesive composition according to item 1 above, wherein the component (d) is at least one selected from the group consisting of (d-1) a polyol having a hydroxyl value of 40 to 330 mg KOH/g; (d-2) a polyol having a hydroxyl value of 40 to 330 mg KOH/g and an acid value of 2 to 20 mg KOH/g; (d-3) a modified rubber; and (d-4) a compound having an epoxy equivalent of 150 to 700 g/mol.
3. The adhesive composition according to item 2 above, wherein the component (d-1) is at least one selected from the group consisting of (d-1-1) a castor oil-based polyol having a hydroxyl value of 40 to 330 mg KOH/g; (d-1-2) a polybutadiene-based polyol having a hydroxyl value of 40 to 330 mg KOH/g; and (d-1-3) a polyisoprene-based polyol having a hydroxyl value of 40 to 330 mg KOH/g or a hydrogenated product thereof.
4. The adhesive composition according to item 3 above, wherein the component (d-1) is (d-1-1-1) an aromatic castor oil-based polyol having a hydroxyl value of 40 to 330 mg KOH/g.
5. The adhesive composition according to item 3 above, wherein the component (d-2) is (d-2-1) a castor oil-based polyol having a hydroxyl value of 40 to 330 mg KOH/g and an acid value of 2 to 20 mg KOH/g.
6. The adhesive composition according to item 3 above, wherein the component (d-3) is an acid-modified polybutadiene or an acid-modified polyisoprene.
7. The adhesive composition according to item 3 above, wherein the component (d-4) is (d-4-1) a polyepoxy compound having an epoxy equivalent of 150 to 250 g/mol.
8. The adhesive composition according to item 3 above, wherein the component (d-4) is (d-4-2) a polymer with a saturated backbone having an epoxy equivalent of 500 to 700 g/mol.
9. The adhesive composition according to any of items 1 to 8 above, further containing (f) an ionic liquid to serve as an antistatic material in an amount of 0.5 to 10 parts by mass with respect to 100 parts by mass of the total amount of the component (a) to (d).
10. The adhesive composition according to item 9 above, wherein the ionic liquid (f) contains at least one cation selected from the group consisting of imidazolium, pyridinium, pyrrolidinium, phosphonium, ammonium and sulfonium.
11. The adhesive composition according to item 10 above, wherein the ionic liquid (f) contains an anion selected from the group consisting of halogens, carboxylates, sulfates, sulfonates, thiocyanates, aluminates, borates, phosphates, phosphinates, amides, antimonates, imides and methides.
12. The adhesive composition according to any of items 9 to 11 above, further containing (g) an antistatic improver, wherein the antistatic improver (g) is at least one selected from the group consisting of (g-1) an acidic phosphate and (g-2) a carbodiimide compound and is added in an amount in the range of 0.02 to 30 parts by mass with respect to 1 part by mass of the ionic liquid (f).
13. The adhesive composition according to any of items 1 to 12 above, wherein an adherend with the adhesive composition is a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin.

14. An adhesion method including the following steps of:

(I) preparing an adhesive composition by mixing, in any order, the following components:

(a) 10 to 30 % by mass of an epoxy resin;
(b) 25 to 55 % by mass of an oxetane compound;
(c) 25 to 55 % by mass of a vinyl ether compound;
(d) 1 to 15 % by mass of a modifier, wherein the total amount of the components (a) to (d) is 100 % by mass; and
(e) 3 to 15 parts by mass of a photocationic polymerization initiator with respect to 100 parts by mass of the total amount of the components (a) to (d);

(II) laminating the adhesive composition obtained in Step (1) above onto a surface of a layer (B1) of a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin to form a layer (A) of the adhesion composition; and
(III) further laminating a layer (B2) of a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin onto the layer (A) of the adhesive composition of the laminate obtained in Step (II), wherein the Steps (I), (II) and (III) are sequentially carried out in this order.

15. A laminate formed of a layer (A) placed adjacent to a layer (B1), wherein the layer (A) is formed of an adhesive composition containing:

(a) 10 to 30 % by mass of an epoxy resin;
(b) 25 to 55 % by mass of an oxetane compound;
(c) 25 to 55 % by mass of a vinyl ether compound;
(d) 1 to 15 % by mass of a modifier, wherein the total amount of the components (a) to (d) is 100 % by mass; and
(e) 3 to 15 parts by mass of a photocationic polymerization initiator with respect to 100 parts by mass of the total amount of the components (a) to (d); and wherein the layer (B1) is formed of a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin.

16. A laminate formed of a layer (B1), a layer (A) and a layer (B2) that are placed in this order and adjacent to one another, wherein the layer (B1) is formed of a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin; wherein the layer (A) is formed of an adhesive composition containing:

(a) 10 to 30 % by mass of an epoxy resin;
(b) 25 to 55 % by mass of an oxetane compound;
(c) 25 to 55 % by mass of a vinyl ether compound;
(d) 1 to 15 % by mass of a modifier, wherein the total amount of the components (a) to (d) is 100 % by mass; and
(e) 3 to 15 parts by mass of a photocationic polymerization initiator with respect to 100 parts by mass of the total amount of the components (a) to (d) ; and wherein the layer (B2) is formed of a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin.

17. A coating composition containing:

(a) 10 to 30 % by mass of an epoxy resin;
(b) 25 to 55 % by mass of an oxetane compound;

(c) 25 to 55 % by mass of a vinyl ether compound;
(d) 1 to 15 % by mass of a modifier, wherein the total amount of the components (a) to (d) is 100 % by mass; and
(e) 3 to 15 parts by mass of a photocationic polymerization initiator with respect to 100 parts by mass of the total amount of the components (a) to (d).

18. The coating composition according to item 17 above, wherein the component (d) is at least one selected from the group consisting of (d-1) a polyol having a hydroxyl value of 40 to 330 mg KOH/g; (d-2) a polyol having a hydroxyl value of 40 to 330 mg KOH/g and an acid value of 2 to 20 mg KOH/g; (d-3) a modified rubber; and (d-4) a compound having an epoxy equivalent of 150 to 700 g/mol.
19. The coating composition according to item 18 above, wherein the component (d-1) is at least one selected from the group consisting of (d-1-1) a castor oil-based polyol having a hydroxyl value of 40 to 330 mg KOH/g; (d-1-2) a polybutadiene-based polyol having a hydroxyl value of 40 to 330 mg KOH/g; and (d-1-3) a polyisoprene-based polyol having a hydroxyl value of 40 to 330 mg KOH/g or a hydrogenated product thereof.
20. The coating composition according to item 19 above, wherein the component (d-1) is (d-1-1-1) an aromatic castor oil-based polyol having a hydroxyl value of 40 to 330 mg KOH/g.
21. The coating composition according to item 19 above, wherein the component (d-2) is (d-2-1) a castor oil-based polyol having a hydroxyl value of 40 to 330 mg KOH/g and an acid value of 2 to 20 mg KOH/g.
22. The coating composition according to item 19 above, wherein the component (d-3) is an acid-modified polybutadiene or an acid-modified polyisoprene.
23. The coating composition according to item 19 above, wherein the component (d-4) is (d-4-1) a polyepoxy compound having an epoxy equivalent of 150 to 250 g/mol.
24. The coating composition according to item 19 above, wherein the component (d-4) is (d-4-2) a polymer with a saturated backbone having an epoxy equivalent of 500 to 700 g/mol.
25. The coating composition according to any of items 17 to 24 above, further containing (f) an ionic liquid to serve as an antistatic material in an amount of 0.5 to 10 parts by mass with respect to 100 parts by mass of the total amount of the component (a) to (d).
26. The coating composition according to item 25 above, wherein the ionic liquid (f) contains at least one cation selected from the group consisting of imidazolium, pyridinium, pyrrolidinium, phosphonium, ammonium and sulfonium.
27. The coating composition according to item 26 above, wherein the ionic liquid (f) contains an anion selected from the group consisting of halogens, carboxylates, sulfates, sulfonates, thiocyanates, aluminates, borates, phosphates, phosphinates, amides, antimonates, imides and methides.
28. The coating composition according to any of items 25 to 27 above, further containing (g) an antistatic improver, wherein the antistatic improver (g) is at least one selected from the group consisting of (g-1) an acidic phosphate, (g-2) a carbodiimide compound and (g-3) a vinyl ether compound and is added in an amount in the range of 0.02 to 30 parts by mass with respect to 1 part by mass of the ionic liquid (f).
29. The coating composition according to any of items 17 to 28 above, wherein an adherend for the coating composition is a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin.
30. A laminate formed of a layer (A) placed adjacent to a layer (B1), wherein the layer (A) is formed of a coating composition containing:

(a) 10 to 30 % by mass of an epoxy resin;
(b) 25 to 55 % by mass of an oxetane compound;
(c) 25 to 55 % by mass of a vinyl ether compound;
(d) 1 to 15 % by mass of a modifier, wherein the total amount of the components (a) to (d) is 100 % by mass; and
(e) 3 to 15 parts by mass of a photocationic polymerization initiator with respect to 100 parts by mass of the total amount of the components (a) to (d); and wherein the layer (B1) is formed of a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin.

31. An inkjet ink containing the coating composition according to any of items 17 to 29 above.
32. The inkjet ink according to item 31, further containing a colorant.
33. A primer layer disposed on an inkjet recording medium, the primer layer containing the coating composition according to any of items 17 to 29 above.
34. A printed article formed of an inkjet recording medium printed using the inkjet ink according to item 31 or 32.

[Effects of the Invention]

The adhesive composition and the coating composition of the present invention, which contain the above-described components (a), (b), (c), (d) and (e) in a specific quantitative relationship, exhibit high adhesion to a layer of a soft and hard vinyl chloride resin; polystyrene; polycarbonate; glass; aluminum; a steel plate (e.g., cold-rolled steel plates and hot-rolled steel plates); a polyolefin resin modified by a polar group-containing compound or a copolymer of an olefin and a polar group-containing compound; magnesium; an acrylonitrile-butadiene-styrene copolymer; a polyester resin; or an acrylic resin. These compositions also have transparency, surface smoothness, flexibility and impact resistance in a well-balanced manner.
According to the adhesion method of the present invention, the layer (A) of the adhesive composition containing the above-described components (a), (b), (c), (d) and (e) in a specific quantitative relationship is laminated with the layers (B1) and (B2), each of which is a layer of a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin, in a specific order of steps. As a result, strong adhesion of the three layers can be achieved.
The laminate according to one aspect of the present invention is a laminate formed of the layer (A), which is a layer of the adhesive composition or the coating composition containing the above-described components (a), (b), (c), (d) and (e) in a specific quantitative relationship, and the layer (B1), which is a layer of a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin. The layer (A) of the adhesive composition or the coating composition has transparency, surface smoothness, flexibility and impact resistance in a well-balanced manner and can therefore advantageously serve as a primer layer for the layer (B1).
The laminate according to another aspect of the present invention is a laminate formed of the layer (A), which is a layer of the adhesive composition or the coating composition containing the above-described components (a), (b), (c), (d) and (e) in a specific quantitative relationship, and the layers (B1) and (B2), each of which is a layer of a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin. The layers (A), (B1) and (B2) in such a laminate are firmly adhered to one another. Moreover, the laminate has transparency, surface smoothness, flexibility and impact resistance in a well-balanced manner.
In addition to the above-described characteristics, the coating composition of the present invention has a low viscosity, which makes it suitable for use in an inkjet ink. The coating composition of the present invention, which also exhibits high adhesion to a variety of substrates, is suitable for use in the primer layer disposed on an inkjet recording medium. Furthermore, the printed article printed using such an inkjet ink achieves desirable color development of images and has improved impact resistance and flexibility. As a result, the printed article can achieve high durability of images.

[Embodiments for Carrying Out of the Invention]

The present invention will now be described in further details.

<u>(a) Epoxy resin</u>

The component (a) of the layer of the adhesive composition and the coating composition (these compositions may be collectively referred to simply as "composition, " hereinafter) is an epoxy resin.
The epoxy resin (a) may be any compound containing one or more epoxy groups in its molecule. Preferred compounds containing epoxy groups include alicyclic epoxy compounds and glycidyl group-containing compounds having a cyclohexene oxide or cyclopentene oxide structure in their molecules.
Specific examples of the alicyclic epoxy compounds include dicyclopentadiene dioxide, limonene dioxide, (3,4-epoxycyclohexyl)methyl 3,4-epoxycyclohexanecarboxylate, 3-vinylcyclohexene oxide, bis(2,3-epoxycyclopentyl)ether, bis(3,4-epoxycyclohexylmethyl)adipate, bis(3,4-epoxy-6-methylcyclohexylmethyl)adipate, (3,4-epoxycyclohexyl)methyl alcohol, (3,4-epoxy-6-methylcyclohexyl) methyl-3,4-epoxy-6-methylcyclohexane carboxylate, ethylene glycol bis(3,4-epoxycyclohexyl)ether, 3,4-epoxycyclohexenecarboxylic acid ethylene glycol diester, (3,4-epoxycyclohexyl)ethyltrimethoxy silane, compounds represented by the following formulas:
[Chemical Formula 1]

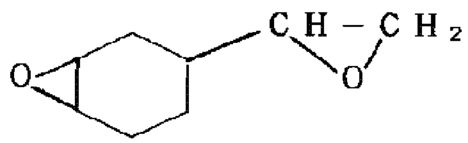

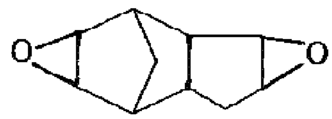

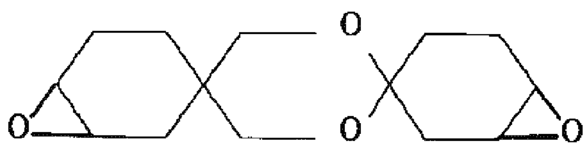

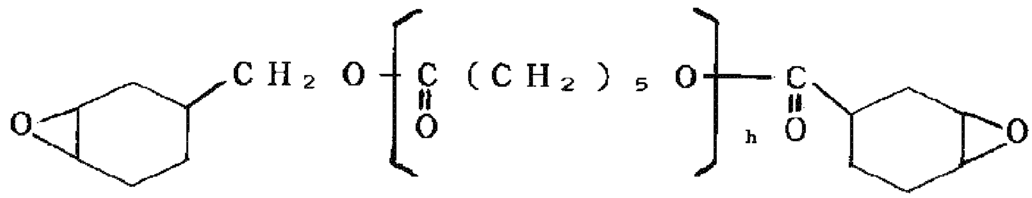

(h denotes an integer of 1 or more.)

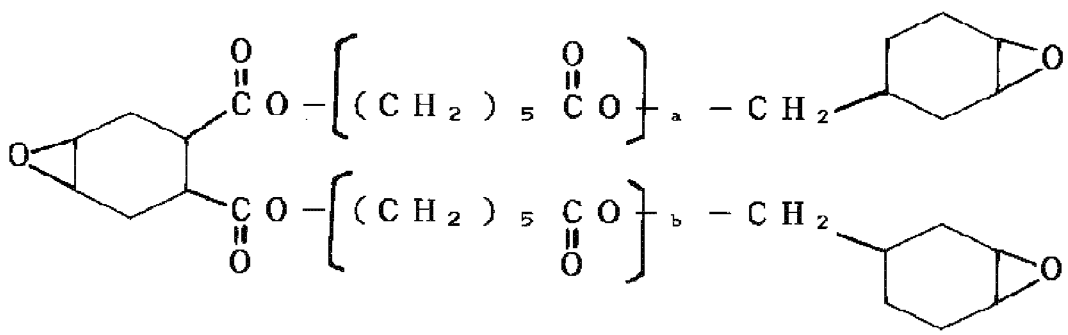

(a and b denote an integer of 0 or more.)

[Chemical Formula 2]

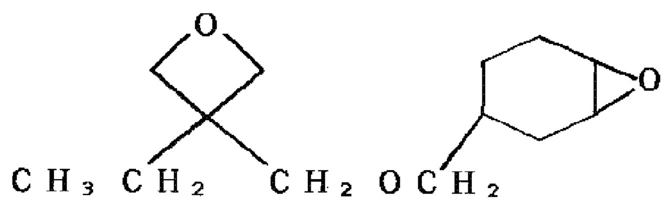

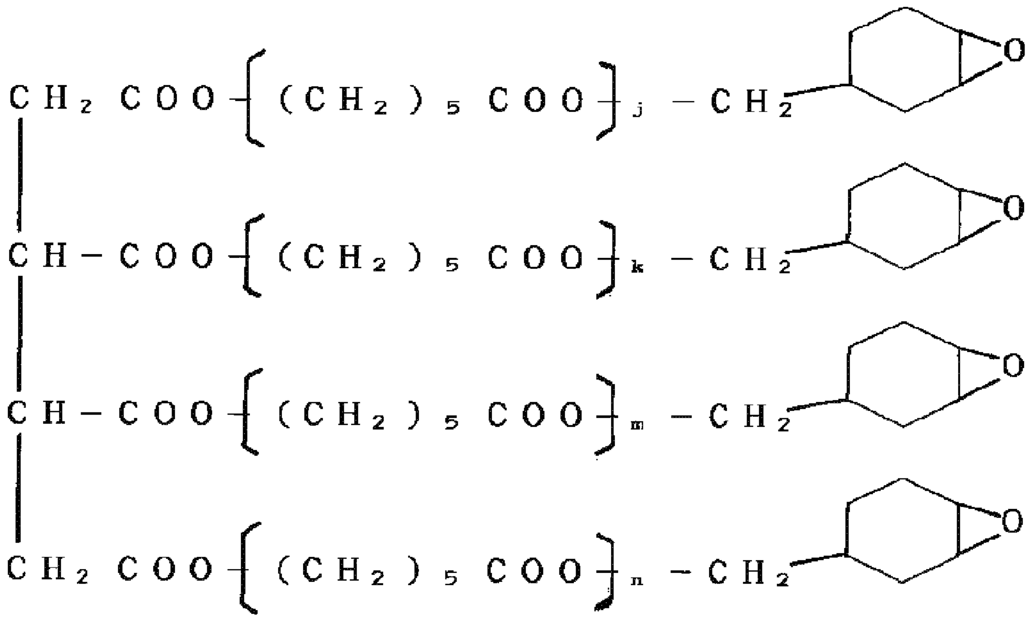

( j, k and m denote an integer of 0 or more.)

[Chemical Formula 3]

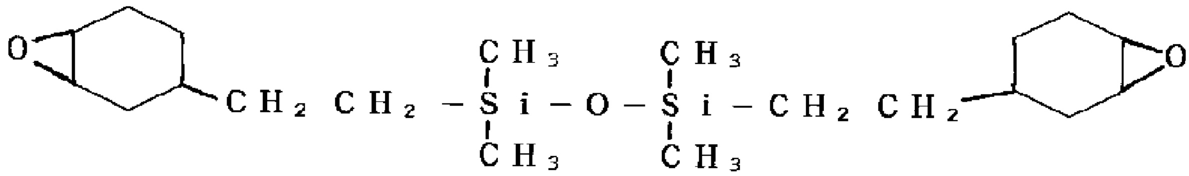

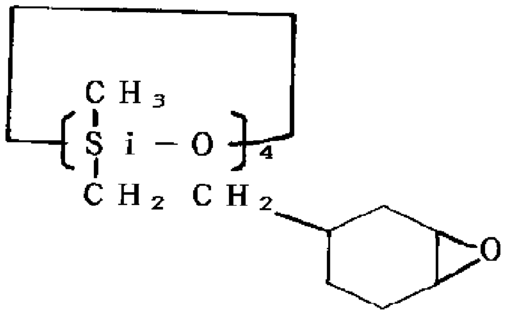

;

and alicyclic epoxy group-containing copolymers obtained by copolymerization of an alicyclic epoxy group-containing ethylenic unsaturated monomer such as 3,4-epoxycyclohexylmethyl (meth)acrylate and optionally other polymerizable unsaturated monomers.

Specific examples of the glycidyl group-containing compound that can be used as the epoxy resin (a) include ethylene glycol diglycidyl ether, propylene glycol diglycidyl ether, polyethylene glycol diglycidyl ether, polypropylene glycol diglycidyl ether, 1,4-butanediol diglycidyl ether, neopentyl glycol diglycidyl ether, 1,6-hexanediol diglycidyl ether, glycerol diglycidyl ether, diglycerol tetraglycidyl ether, trimethylol propane triglycidyl ether, spiroglycol diglycidyl ether, 2, 6-diglycidyl phenyl ether, sorbitol polyglycidyl ether, triglycidyl isocyanulate, bisphenol A diglycidyl ether, butadiene dioxide, phthalic acid diglycidyl ester, 3-ethyl-3-glycidyl oxetane, epoxidized polybutadiene, novolac-type epoxy resin, epoxidized xylylene resin; and glycidyl group-containing copolymers obtained by (co)polymerization of a glycidyl group-containing ethylenic unsaturated monomer such as glycidyl(meth)acrylate and optionally other polymerizable unsaturated monomers.

Other unsaturated monomers for use in the production of the above-described alicyclic epoxy group-containing copolymers or glycidyl group-containing copolymers include $C_{1-24}$ alkyl(meth)acrylates, such as methyl(meth)acrylate, ethyl(meth)acrylate, n-propyl(meth)acrylate, isopropyl(meth)acrylate, n-butyl(meth)acrylate, isobutyl(meth)acrylate, tert-butyl(meth)acrylate, 2-ethylhexylacrylate, n-octyl(meth)acrylate, lauryl(meth)acrylate, tridecyl(meth)acrylate and stearyl (meth)acrylate; epoxy group-containing polymerizable unsaturated monomers, such as glycidyl(meth)acrylate, methylglycidyl(meth)acrylate, 3,4-epoxycyclohexylmethyl(meth)acrylate, allyl glycidyl ether and vinyl glycidyl ether; mono-esterified compounds of a polyol and acrylic acid or methacrylic acid, such as 2-hydroxyethyl(meth)acrylate, hydroxypropyl (meth)acrylate, 2,3-dihydroxybutyl(meth)acrylate, 4-hydroxybutyl(meth)acrylate and polyethylene glycol mono(meth) acrylate; hydroxyl group-containing monomers, such as compounds obtained by ring-opening polymerization of the mono-esterified compounds of a polyol and acrylic acid or methacrylic acid with ε-caprolactone; carboxyl group-containing polymerizable unsaturated monomers, such as acrylic acid, methacrylic acid, maleic acid and maleic anhydride; aminoalkyl(meth)acrylates, such as N,N-dimethylaminoethyl(meth)acrylate, N,N-diethylaminoethyl(meth)acrylate and N,N-dimethylaminopropyl(meth)acrylate; (meth)acrylamides and derivatives, such as acrylamide, methacrylamide, N,N-dimethylaminoethyl(meth)acrylamide, N,N-diethylaminoethyl(meth)acrylamide, N,N-dimethylaminopropyl(meth)acrylamide, N-methylolacrylamide, N-methylolacrylamidemethyl ether and N-methylolacrylamide butyl ether; compounds having an oxetane ring and an ethylenic unsaturated group in their molecules obtained by reacting a hydroxyl group-containing oxetane such as 3-ethyl-3-hydroxymethyl oxetane with an unsaturated monomer (e.g., 2-isocyanatoethyl (meth)acrylate, m-isopropenyl-α,α-dimethylbenzyl isocyanate and methyl (meth) acrylate) that contains a functional group that reacts with the hydroxyl group, but essentially not with the oxetane ring (e.g., isocyanate group and methyl ester group) and an ethylenic unsaturated group (such as acryloyl group, methacryloyl group and vinyl group); and styrene, acrylonitrile, methacrylonitrile and vinyl acetate. These compounds can be used either individually or in a combination of two or more. As used herein, "(meth)acrylate" is intended to mean an acrylate or a methacrylate and "(meth)acrylamide" is intended to mean an acrylamide or a methacrylamide.

It is preferred that the epoxy resin (a) typically have a molecular weight in the range of 100 to 10,000 in terms of, for example, the reactivity in cationic polymerization.

Preferably, the epoxy resin (a) is a liquid epoxy resin (a-1), in particular, a straight-chained aliphatic liquid

epoxy resin represented by the general formula (a-1). The epoxy resin has a low viscosity and the viscosity of the entire composition can be reduced by using this epoxy resin.

[Chemical Formula 4]

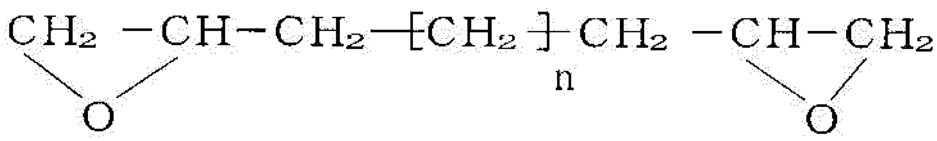

(a-1)

**[In the above formula (a-1), n denotes an integer of 2- 10.]**

In the formula above, the repeat number n is an integer of 2 to 10, preferably an integer of 4 to 10.

In the present invention, the above-described specific epoxy resin (a-1) may be used in conjunction with other epoxy resins. Such other epoxy resins include bisphenol A-type epoxy resins, bisphenol F-type epoxy resins, alicyclic epoxy resins, hydrogenated bisphenol A-type epoxy resins and hydrogenated bisphenol F-type epoxy resins. When used in conjunction with the epoxy resin (a-1), these other epoxy resins are used in a proportion of 20 wt% or less with respect to the total amount with the specific epoxy resin (a-1). If used in amounts greater than 20 wt%, these other resins tend to lead to decreased transmittance and moisture resistance.

Also preferred in the present invention is 3,4-epoxycyclohexylmethyl-3,4-epoxycyclohexane carboxylate represented by the following formula (a-2) (CELLOXIDE 2021P manufactured by Daicel Corporation).

[Chemical Formula 5]

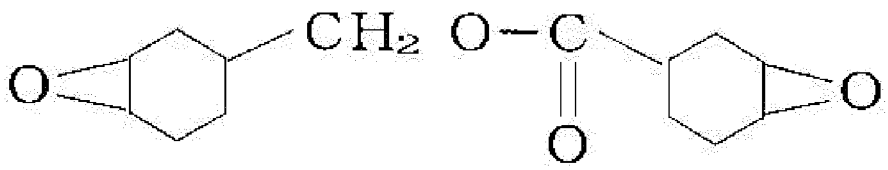

(a-2)

<u>(b) Oxetane compound</u>

The component (b) of the composition of the present invention is an oxetane compound.

The oxetane compound (b) is a compound other than the above-described epoxy resin (a) that contains in its molecule at least one oxetane ring represented by the following formula:

[Chemical Formula 6]

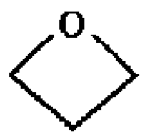

.

Specific examples of the oxetane compounds (b) include 3-ethyl-3-methoxymethyl oxetane, 3-ethyl-3-ethoxymethyl oxetane, 3-ethyl-3-butoxymethyl oxetane, 3-ethyl-3-hexyloxymethyl oxetane, 3-ethyl-3-allyloxymethyl oxetane, 3-methyl-3-hydroxymethyl oxetane, 3-ethyl-3-hydroxymethyl oxetane, 3-ethyl-3-(2'-hydroxyethyl)oxymethyl oxetane, 3-ethyl-3-(2'-hydroxy-3'-phenoxypropyl)oxymethyl oxetane, 3-ethyl-3-(2'-hydroxy-3'-butoxypropyl)oxymethyl oxetane, 3-ethyl-3-[2'-(2''-ethoxyethyl)oxymethyl] oxetane, 3-ethyl-3-(2'-butoxyethyl)oxymethyl oxetane, 3-ethyl-3-benzyloxymethyl oxetane, 3-ethyl-3-(p-*tert*-butylbenzyloxymethyl) oxetane, 3-ethyl-3-glycidyloxymethyl oxetane, 3-ethyl-3-(3,4-epoxycyclohexylmethyl)oxymethyl oxetane, bis(3-ethyloxetanyl-3-methyl)oxide, compounds having polymerizable unsaturated groups and oxetane rings [e.g., copolymers having oxetane rings obtained by radical copolymerization using 3-ethyl-3-(acryloyloxyethyl)oxymethyl oxetane as a monomer component.]; and the compound represented by the following formula (b-1):

[Chemical Formula 7]

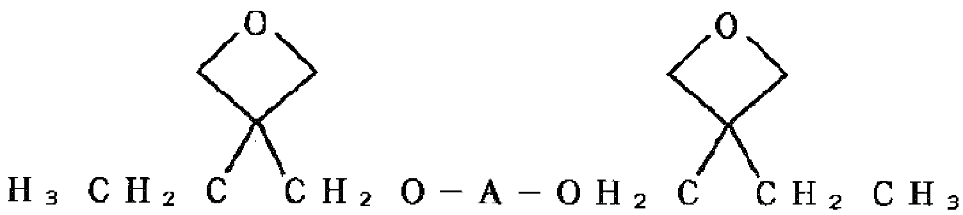

(b-1)

(wherein A represents a divalent hydrocarbon group having 1 to 23 carbon atoms which may or may not contain a hetero atom such as an oxygen atom).

Examples of "A" in the compound represented by the formula (b-1) above include straight-chained, branched, or cyclic alkylene groups (in particular, alkylene groups having 1 to 15 carbon atoms, such as methylene, ethylene, propylene, butylene and cyclohexylene), polyalkyleneoxy groups having 4 to 30, preferably 4 to 8 carbon atoms (e.g., poly(ethyleneoxy) and poly(propyleneoxy)), phenylene, xylylene, and divalent aromatic hydrocarbon groups represented by the following formula:

[Chemical Formula 8]

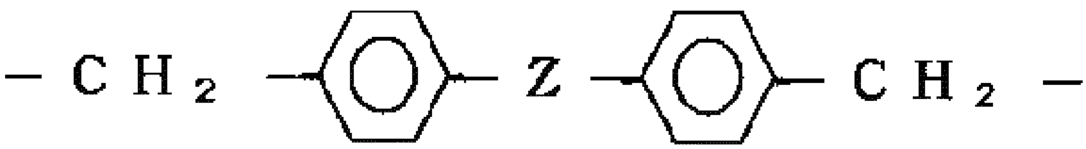

(wherein Z represents O, S, $CH_2$, NH, SO, $SO_2$, $C(CF_3)_2$ or $C(CH_3)_2$).

Preferred oxetane compounds include the compounds having 1 to 4 oxetane rings as described below.

(Compounds having 1 to 4 oxetane rings)

In a preferred embodiment, the compound having an oxetane ring(s) for use in the present invention includes 1 to 4 oxetane rings. If a compound having 5 or more oxetane rings is used, then the cured film of the composition will lose flexibility and may crack when bent. The compound having oxetane rings for use in the present invention may be any of the various compounds that include 1 to 4 oxetane rings. Examples of the compound having one oxetane ring include the compounds shown in the following general formula (1):

[Chemical Formula 9]

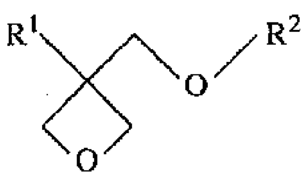

(1)

In the formula (1), $R^1$ is a hydrogen atom, an alkyl group having 1 to 6 carbon atoms, such as methyl, ethyl, propyl or butyl group; a fluoroalkyl group having 1 to 6 carbon atoms; allyl group; aryl group; furyl group; or thienyl group. $R^2$ is a an alkyl group having 1 to 6 carbon atoms, such as methyl, ethyl, propyl or butyl group; an alkenyl group having 2 to 6 carbon atoms, such as 1-propenyl group, 2-propenyl group, 2-methyl-1-propenyl group, 2-methyl-2-propenyl group, 1-butenyl group, 2-butenyl group or 3-butenyl group; a group having an aromatic ring, such as phenyl group, benzyl group, fluorobenzyl group, methoxybenzyl group or phenoxyethyl group; an alkylcarbonyl group having 2 to 6 carbon atoms, such as ethylcarbonyl group, propylcarbonyl group or butylcarbonyl group; an alkoxycarbonyl group having 2 to 6 carbon atoms, such as ethoxycarbonyl group, propoxycarbonyl group or butoxycarbonyl group; or an N-alkylcarbamoyl group having 2 to 6 carbon atoms, such as ethylcarbamoyl group, propylcarbamoyl group, butylcarbamoyl group or pentylcarbamoyl group.

Examples of the compound having two oxetane rings include the compounds shown in the following general formula (2):

[Chemical Formula 10]

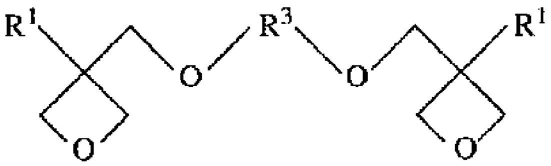

(2)

.

In the formula (2), $R^1$ is the same group as in the general formula (1) above. $R^3$ is, for example, a linear or branched alkylene group, such as ethylene group, propylene group or butylene group; a linear or branched poly(alkyleneoxy) group, such as poly (ethyleneoxy) group or poly(propylene oxy) group; a linear or branched unsaturated hydrocarbon group, such as propenylene group, methylpropenylene group or butenylene group; carbonyl group; an alkylene group including carbonyl group; an alkylene group including carboxyl group; or an alkylene group including carbamoyl group. Alternatively, $R^3$ may be a polyvalent group selected from the groups shown in the following formulas (3), (4) and (5):

[Chemical Formula 11]

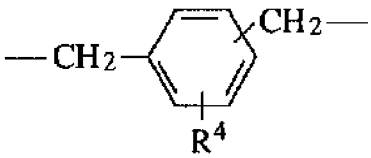

(3)

(In the formula (3), $R^4$ is hydrogen atom; an alkyl group having 1 to 4 carbon atoms, such as methyl group, ethyl group, propyl group or butyl group; an alkoxy group having 1 to 4 carbon atoms, such as methoxy group, ethoxy group, propoxy group or butoxy group; a halogen atom, such as chlorine atom or bromine atom; nitro group; cyano group; mercapto group; a lower alkylcarboxyl group; carboxyl group; or carbamoyl group.);

[Chemical Formula 12]

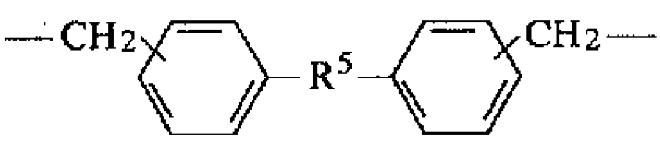

(4)

(In the formula (4), $R^5$ is oxygen atom, sulfur atom, methylene group, NH, SO, $SO_2$, $C(CF_3)_2$ or $C(CH_3)_2$); and

[Chemical Formula 13]

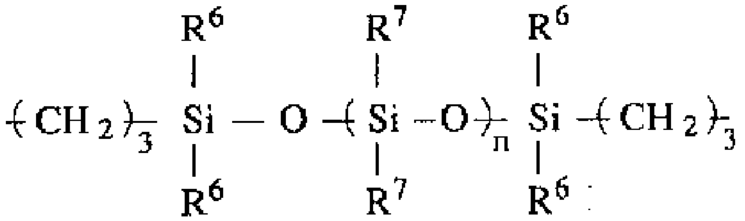

(5)

(In the formula (5), $R^6$ is an alkyl or aryl group having 1 to 4 carbon atoms, such as methyl group, ethyl group, propyl group or butyl group; n is an integer of 0 to 2000; and $R^7$ is an alkyl or aryl group having 1 to 4 carbon atoms, such as methyl group, ethyl group, propyl group or butyl group.). $R^7$ may be a group selected from the groups shown in the following formula (6):

[Chemical Formula 14]

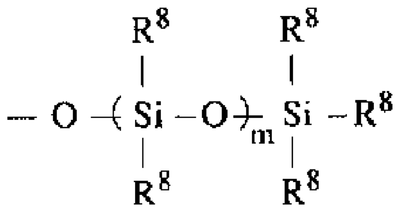

(6)

.

(In the formula (6), $R^8$ is an alkyl or aryl group having 1 to 4 carbon atoms, such as methyl group, ethyl group, propyl group and butyl group; and m is an integer of 0 to 100). Specific examples of the compounds having two oxetane rings include the compounds shown in the following formulas (7) and (8):

[Chemical Formula 15]

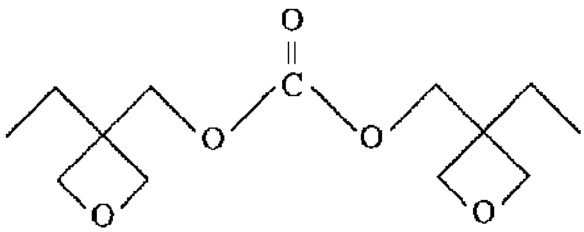

(7)

.

The compound shown in the formula (7) is a compound of the formula (2) where $R^1$ is ethyl group and $R^3$ is carboxyl group.

[Chemical Formula 16]

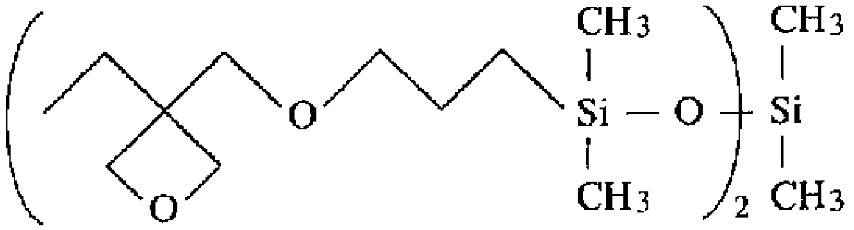

(8)

.

The compound shown in the formula (8) is a compound of the general formula (2) where $R^1$ is ethyl group and $R^3$ is represented by the formula (5) where $R^6$ and $R^7$ are methyl group, and n is 1.

Other preferred examples other than the above-described compounds include the compounds shown in the general formula (9) below. In the formula (9), $R^1$ is the same as in the general formula (1) above.

[Chemical Formula 17]

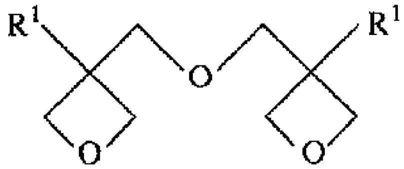

(9)

Examples of the compound having 3 to 4 oxetane rings include the compounds shown in the following general formula (10):

[Chemical Formula 18]

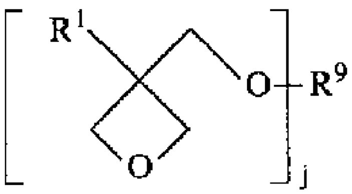

(10)

.

In the formula (10), $R^1$ is the same as in the general formula (1) above; $R^9$ is a branched alkylene group having 1 to 12 carbon atoms, such as those shown in the formulas (11) to (13) below, a branched poly (alkyleneoxy) group, such as those shown in the formula (14) below, or a branched polysiloxy group, such as those shown in the formula (15) below; and j is 3 or 4.

[Chemical Formula 19]

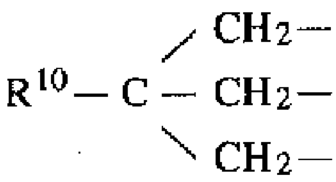

(11)

(In the formula (11), $R^{10}$ is a lower alkyl group, such as methyl group, ethyl group or propyl group.)

[Chemical Formula 20]

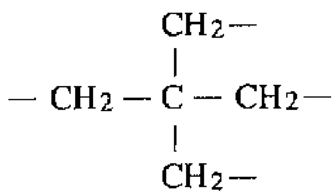

(12)

[Chemical Formula 21]

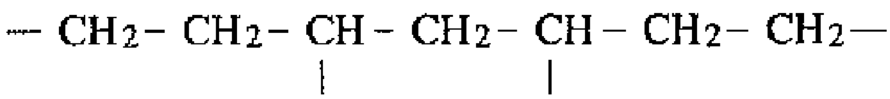

(13)

[Chemical Formula 22]

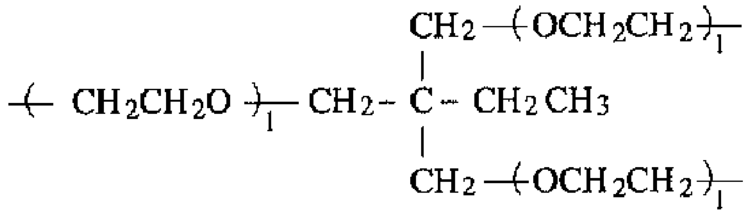

(14)

(In the formula (14), 1 is an integer of 1 to 10.)

[Chemical Formula 23]

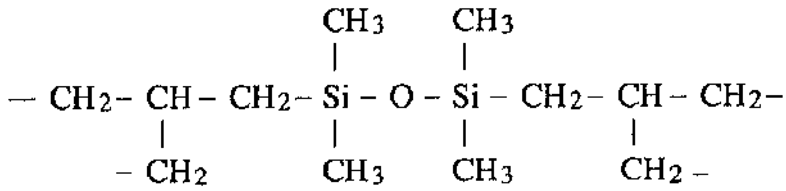

(15)

Specific examples of the compounds having 3 to 4 oxetane rings include the compounds shown in the following formula (16):

[Chemical Formula 24]

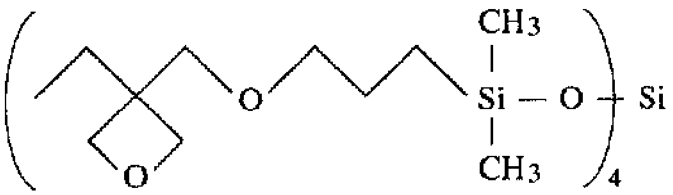

(16)

.

Further examples of the compounds having 1 to 4 oxetane rings other than those described above include the compounds shown in the following formula (17):

[Chemical Formula 25]

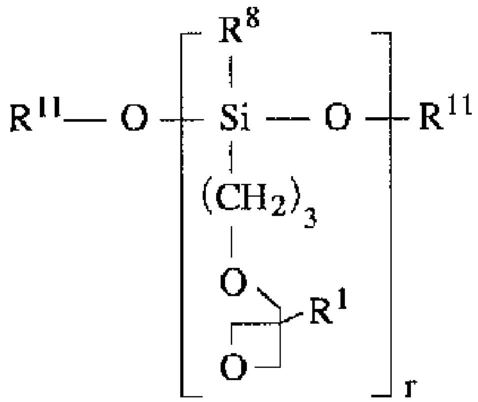

(17)

.

In the formula (17), $R^8$ is the same as in the formula (6); $R^{11}$ is an alkyl group or trialkylsilyl group having 1 to 4 carbon atoms, such as methyl group, ethyl group, propyl group, or butyl group; and r is 1 to 4.

Specific examples of the oxetane compounds for use in the present invention include the compounds shown below.

[Chemical Formula 26]

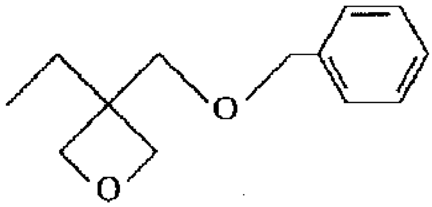

(18)

[Chemical Formula 27]

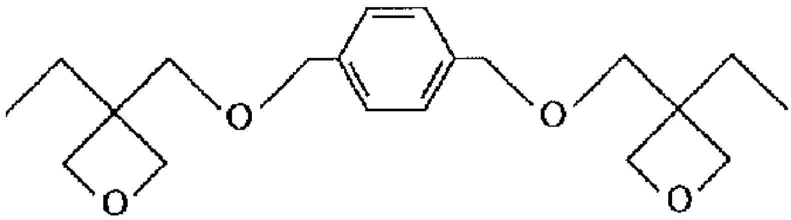

(19)

[Chemical Formula 28]

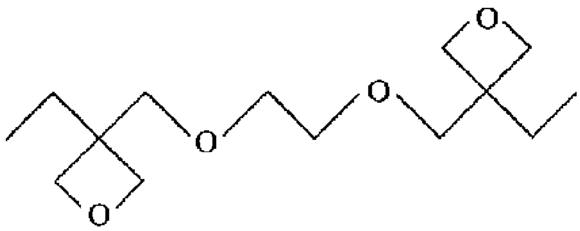

(20)

and

[Chemical Formula 29]

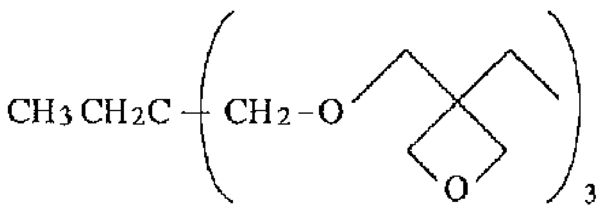

(21)

.

In addition to the compounds shown above, compounds having 1 to 4 oxetane rings having a high molecular weight of about 1000 to 5000 may also be used. Examples of such compounds include the compounds shown below:

[Chemical Formula 30]

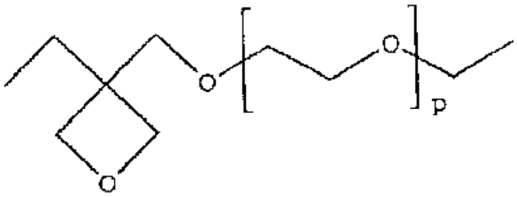

(22)

(where p is 20 to 200.);

[Chemical Formula 31]

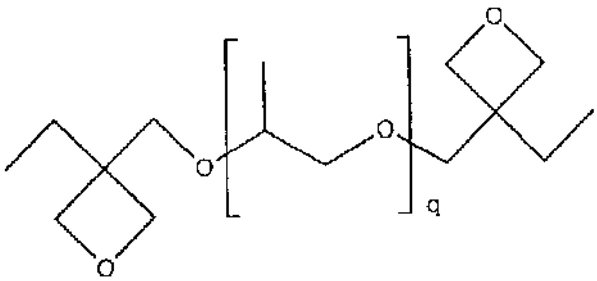

(23)

(where q is 15 to 100); and

[Chemical Formula 32]

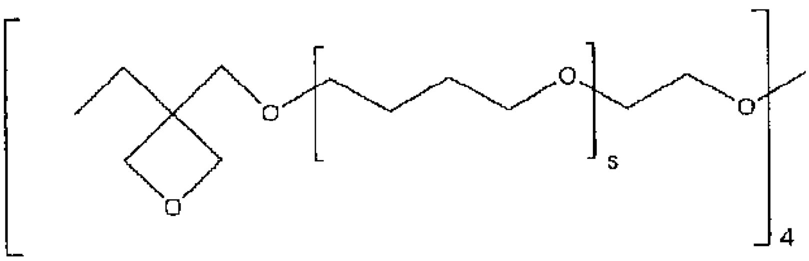

(24)

(where s is 20 to 200.).

In the chemical formulas shown above that show the compounds having oxetane rings, the groups present in the same molecule and represented by the same symbol may or may not be identical to one another.

Of the above-described preferred oxetane compounds, di[1-ethyl(3-oxetanyl)]methyl ether represented by the following formula (25) is particularly preferred because of its rate of the curing reaction, reduced contraction upon curing, toughness, and the low viscosity of the system to which the compound is added.

[Chemical Formula 33]

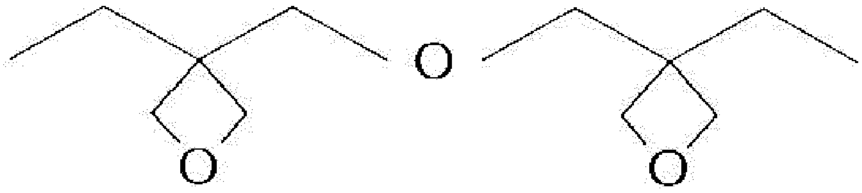

(25)

One example of the di[1-ethyl(3-oxetanyl)]methyl ether represented by the formula (25) above is OXT-221 manufactured by Toagosei Co., Ltd.

(c) Vinyl ether compound

The component (c) of the composition of the present invention is a vinyl ether compound.
Examples of the vinyl ether compounds (c) include vinyl ethers of alkyl or alkenyl alcohols, such as ethyl vinyl ether, isobutyl vinyl ether, n-butyl vinyl ether, tert-butyl vinyl ether, n-amyl vinyl ether, i-amyl vinyl ether, n-hexyl vinyl ether, n-octyl vinyl ether, 2-ethylhexyl vinyl ether, octadecyl vinyl ether, n-dodecyl vinyl ether, stearyl vinyl ether and oleyl vinyl ether; vinyl ethers of monoalcohols having an aliphatic ring or an aromatic ring, such as cyclohexyl vinyl ether, 2-methylcyclohexyl vinyl ether, cyclohexylmethyl vinyl ether and benzyl vinyl ether;
mono- to polyethers of polyols, such as 1,4-cyclohexanedimethanol divinyl ether (CHDM), glycerol monovinyl ether, 1,4-butanediol monovinyl ether, 1,4-butanediol divinyl ether, 1,6-hexanediol divinyl ether, neopentyl glycol divinyl ether, pentaerythritol divinyl ether, pentaerythritol tetravinyl ether, trimethylolpropane divinyl ether, trimethylolpropane trivinyl ether, 1,4-dihydroxycyclohexane monovinyl ether, 1,4-dihydroxycyclohexane divinyl ether, 1,4- dihydroxycyclohexane monovinyl ether and 1,4-dihydroxymetylcyclohexane divinyl ether;
polyalkylene glycol mono- to divinyl ethers, such as diethylene glycol divinyl ether, tetraethylene glycol divinyl ether, triethylene glycol divinyl ether and diethylene glycol monobutyl monovinyl ether; other vinyl ethers, such as glycidyl vinyl ether and ethylene glycol vinyl ether methacrylate; and hydroxybutyl vinyl ether.
Of these, triethylene glycol divinyl ether and 1,4-cyclohexane dimethanol divinyl ether (CHDM) are preferred.

(d) Modifier

The component (d) used in the present invention is a modifier.
The modifier (d) maybe, for example, at least one selected from the group consisting of (d-1) a polyol having a hydroxyl value of 40 to 330 mg KOH/g; (d-2) a polyol having a hydroxyl value of 40 to 330 mg KOH/g and an acid value of 2 to 20 mg KOH/g; (d-3) a modified rubber; and (d-4) a compound having an epoxy equivalent of 150 to 700 g/mol.
(d-1) A polyol having (i) a hydroxyl value of 40 to 330 mg KOH/g will now be described.
The hydroxyl value of the component (d) contributes to improving the characteristic feature of the present invention, which is the selective adhesion to the adherends (soft and hard vinyl chloride resins; polystyrene; polycarbonate; glass; aluminum; steel plates (e.g., SPCC); a polyolefin resin modified by a polar group-containing compound or a copolymer of an olefin and a polar group-containing compound; magnesium; acrylonitrile-butadiene-styrene copolymers; polyester resins; or acrylic resins) (which may be referred to as "specific adherends (B)," hereinafter).
While the polyol (d-1) having (i) a hydroxyl value of 40 to 330 mg KOH/g includes aromatic-based, aliphatic-based, polybutadiene-based, castor oil-based and polyisoprene-based polyols, any type of polyol that has a hydroxyl value in the above-specified range can exhibit high adhesion to the specific adherends (B).
The hydroxyl value is preferably from (i) 40 to 330 mg KOH/g and more preferably from 150 to 300 mg KOH/g in terms of the above-described selective adhesion.
In terms of the selective adhesion to the specific adherends (B), the polyols (d-1) having (i) a hydroxyl value of 40 to 330 mg KOH/g more preferably include:

(d-1-1) castor oil-based polyols having (i) a hydroxyl value of 40 to 330 mg KOH/g;
(d-1-2) polybutadiene-based polyols having (i) a hydroxyl value of 40 to 330 mg KOH/g;
(d-1-3) polyisoprene-based polyols having (i) a hydroxyl value of 40 to 330 mg KOH/g; and
(d-1-4) epoxy polyol resins having (i) a hydroxyl value of 40 to 330 mg KOH/g.

In the present invention, the polyols of the component (d) may be used as a mixture of two or more polyols if necessary.

(d-1-1) Castor oil-based polyol having (i) a hydroxyl value of 40 to 330 mg KOH/g will now be described.

The above-described "castor oil" is an oil that contains a triester compound formed of ricinoleic acid and glycerol. While castor oil is typically available as a natural oil or a processed natural oil, synthetic natural oils may also be used as long as they contain the above-described compound. Ricinoleic acid that composes the triester compound present in castor oil preferably composes 90 mol% or more of the fatty acids that compose the entire triester compound. The castor oil may be a processed product, such as hydrogenated product (typically hydrogenated at unsaturated bonds between carbons in the ricinoleic acid backbone). Generally, castor oil contains 90 mol% or more (including 100 mol%) of the above-described triester compound (or in the case of hydrogenated castor oil, hydrogenated product of the triester compound) with respect to the total amount of oil.

The above-described "castor oil-based polyol" is an ester compound formed of ricinoleic acid and/or hydrogenated ricinoleic acid and a polyol. As long as the castor oil-based polyol has such a composition, it may be either a polyol obtained by using castor oil as the starting material, or a polyol obtained using starting materials other than castor oil. The polyol is not limited to particular polyols.

The castor oil-based polyols include polyols derived from castor oil and polyols obtained by modifying castor oil.

The polyols derived from castor oil are fatty acid ester-based polyols derived from castor oil, including polyols obtained by replacing some of the ricinoleic acid present in the glycerol ester with oleic acid, polyols obtained by esterification of ricinoleic acid obtained by saponification of castor oil with trimethylol propane or other short-chained polyols, and mixtures of these polyols and castor oil.

Examples of the polyols obtained by modifying castor oil include modified vegetable oil-based polyols and modified polyols containing an aromatic backbone (such as bisphenol A). Modified vegetable oil-based polyols can be obtained by replacing some of the ricinoleic acid present in the glycerol ester with fatty acids derived from other plants, such as linoleic acid, linolenic acid, oleic acid and other higher fatty acids derived from soybean oil, canola oil, olive oil and other vegetable oils.

Of these castor oil-based polyols, the above-described castor oil-based polyols (d-1-1) having (i) a hydroxyl value of 40 to 330 mg KOH/g are preferred in terms of the advantages of the present invention.
Also, the aromatic-based castor oil-based polyols (d-1-1-1) having (i) a hydroxyl value of 40 to 330 mg KOH/g are preferred since they can improve the toughness (*i.e*,. impact-resistance), flexibility, and adhesion to different materials of the adhesive layer. More preferably, the aromatic-based castor oil-based polyols have a hydroxyl value of 150 to 240 mg KOH/g.

The component (d-1-1-1) is a modified polyol that is derived from castor oil having an aromatic backbone (such as bisphenol A). The component (d-1-1-1) is commercially available, for example, as URIC AC series (Itoh Oil Chemicals, Co., Ltd.). Adducts formed by adding polyalkylene glycol and bisphenol A with ricinoleic acid exhibit particularly desirable adhesion to the specific adherends (B). For example, such adducts may be represented by the following formula (26):

[Chemical Formula 34]

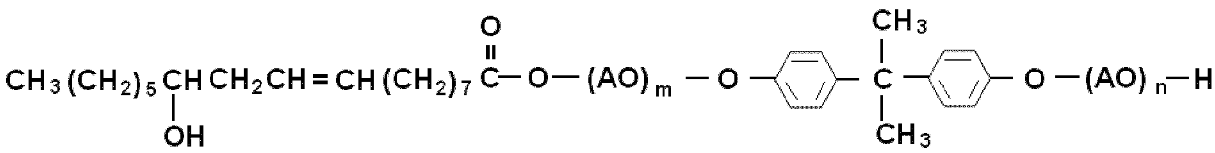

(26)

.

In the formula (26), m represents a number of 2 to 5 on average; and n represents a number of 2 to 5 on average.

The modified polyols derived from castor oils represented by the formula (26) above are available, for example, from Itoh Oil Chemicals, Co., Ltd. under trade names of URIC AC-005 (hydroxyl value = 194 to 214 mg KOH/mg, viscosity = 700 to 1500 mPa·s/25° C), AC-006 (hydroxyl value = 168 to 187 mg KOH/mg, viscosity = 3000 to 5000 mPa·s/25° C), AC-008 (hydroxyl value = 180 mg KOH/mg, viscosity = 1600 mPa·s/25° C) and AC-009 (hydroxyl value = 225 mg KOH/mg, viscosity = 1500mPa·s/25° C).

(d-1-2) Polybutadiene-based polyol having (i) a hydroxyl value of 40 to 330 mg KOH/g will now be described.

Examples of the polybutadiene-based polyols for use in the present invention include homopolymers such as 1,2-polybutadiene polyol and 1,4-polybutadiene polyol; copolymers such as poly(pentadiene·butadiene)polyol, poly (butadiene·styrene)polyol and poly(butadiene·acrylonitrile)polyol; and hydrogenated polybutadiene-based polyols obtained by hydrogenation of these polyols.

These polybutadiene-based polyols are commercially available, for example, from Idemitsu Kosan Co., Ltd. as Poly bd R-15HT (hydroxyl value = 102.7 mg KOH/mg, Mw1200) and Poly bd R-45HT (hydroxyl value = 46.6 mg KOH/mg, Mw2800).

Also, the polybutadiene-based polyols (d-1-2) preferably have a hydroxyl value of 40 to 330 mg KOH/g, more preferably 40 to 110 mg KOH/g, in terms of the advantages of the present invention.

The polybutadiene-based polyols (d-1-2) preferably have a weight-average molecular weight (GPC) of 50 to 3,000, more preferably 800 to 1,500.

(d-1-3) Polyisoprene-based polyol having (i) a hydroxyl value of 40 to 330 mg KOH/g and hydrogenated products thereof will now be described.

An example of the component (d-1-3) is Poly ip (trademark registered) (hydroxyl-terminated liquid polyisoprene) from Idemitsu Co., Ltd. Poly ip (trademark registered) (hydroxyl value = 46.6 mg KOH/mg, Mn2500) is a liquid polymer of polyisoprene-type having highly reactive hydroxyl groups at the terminals of its molecule.

An example of the hydrogenated product is EPOLE (trademark registered) (hydroxyl-terminated liquid polyolefin) from Idemitsu Co., Ltd. EPOLE (trademark registered) (hydroxyl value = 50.5 mg KOH/mg, Mn2, 500) is a liquid polyolefin obtained by hydrogenation of Poly ip (trademark registered). The product has few double bonds remaining in its molecule.

(d-1-4) Epoxy polyol resin having (i) a hydroxyl value of 40 to 330 mg KOH/g

The epoxy polyol resin (d-1-4) having (i) a hydroxyl value of 40 to 330 mg KOH/g for use in the present invention is obtained by reacting an active hydrogen compound with an epoxy resin.

Examples of the epoxy resins that can be used include polyglycidyl ether compounds of mononuclear polyhydric phenol compounds, such as hydroquinone, resorcin, pyrocatechol and phloroglucinol; polyglycidyl ether compounds of polynuclear polyhydric phenol compounds, such as dihydroxynaphthalene, biphenol, methylenebisphenol (bisphenol F), methylenebis(orthocresol), ethylidenebisphenol, isopropylidenebisphenol (biphenol A), isopropylidenebis(orthocresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol, phenol novolac, orthocresol novolac, ethylphenol novolac, butylphenol novolac, octylphenol novolac, resorcin novolac, bisphenol A novolac, bisphenol F novolac and terpenediphenol; polyglycidyl ether compounds of ethylene oxide and/or propylene oxide adducts of the above-described mononuclear or polynuclear polyhydric phenol compounds; polyglycidyl ether compounds of hydrogenation products of the above-described mononuclear polyhydric phenol compounds; polyglycidyl ethers of polyols, such as ethylene glycol, propylene glycol, butylene glycol, hexanediol, polyglycol, thiodiglycol, glycerol, trimethylolpropane, pentaerythritol, sorbitol and bisphenol A-ethylene oxide adducts; homopolymers or copolymers of glycidyl methacrylate and glycidyl esters of aliphatic, aromatic or alicyclic polybasic acids, such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid and endomethylene tetrahydrophthalic acid; epoxy compounds having a glycidylamino group, such as N,N-diglycidylaniline and bis(4-(N-methyl-N-glycidylamino)phenyl)methane; epoxidized cyclic olefin compounds, such as vinylcyclohexene diepoxide, dicyclopentanediene diepoxide, 3,4-epoxycyclohexylmethyl-3,4-epoxycyclohexanecarboxylate, 3,4-epoxy-6-methylcyclohexylmethyl-6-methylcyclohexanecarboxyl ate and bis(3,4-epoxy-6-methylcyclohexylmethyl) adipate; epoxidized conjugated diene polymers, such as epoxidized polybutadiene and epoxidized styrene-butadiene copolymers; and heterocyclic compounds, such as triglycidyl isocyanurate. These epoxy resins may be internally crosslinked with an isocyanate-terminated prepolymer.

Of these epoxy resins, preferred are polyglycidyl ether compounds and other bisphenol-type epoxy resins, such as biphenol, methylenebisphenol (bisphenol F), methylenebis(orthocresol), ethylidenebisphenol (bisphenol AD), isopropylidenebisphenol (biphenol A), isopropylidenebis(orthocresol), tetrabromobisphenol A, 1,3-bis(4-hydroxycumylbenzene) and 1,4-bis(4-hydroxycumylbenzene). These epoxy resins are preferably used to form coating films with high adhesion and decorativeness.

The epoxy polyol resin (d-1-4) having (i) a hydroxyl value of 40 to 330 mg KOH/g is obtained by the reaction of the epoxy groups of the above-described epoxy resin with an active hydrogen compound such as a carboxylic acid compound, polyol and amino compound.

Examples of the carboxylic acid compounds include aliphatic, aromatic or alicyclic monocarboxylic acids, such as acetic acid, propionic acid, 2,2-dimethylolpropionic acid, 12-hydroxystearic acid, lactic acid, butyric acid, octilic acid, ricinoleic acid, lauric acid, benzoic acid, toluic acid, cinnamic acid, phenylacetic acid and cyclohexanecarboxylic acid, maleic acid, fumaric acid, itaconic acid, succinic acid, glutaric acid, adipic acid, dimer acid, phthalic acid, isophthalic acid, terephthalic acid, hexahydro acid and hydroxypolycarboxylic acid.

Examples of the polyols include low molecular weight polyols such as ethylene glycol, diethylene glycol, 1,2-propylene glycol, 1,3-propylene glycol, 2-methyl-1,3-propylene glycol, 2,2-dimethyl-1,3-propylene glycol, 1,2-butanediol, 1,3-butanediol, 1,4-butanediol, 1,5-pentanediol, 2,2,4-trimethyl-1,5-pentanediol, 1,6-hexanediol, 2-ethyl-1,6-hexanediol, 1,2-octanediol, 1,8-octanediol, 2-methyl-1,8-octanediol, 1,9-nonanediol, 1,10-decanediol, 1,12-octadecanediol, glycerol, trimethylolpropane and pentaerythritol.

Examples of the amino compounds include dialkylamine compounds, such as dibutylamine and dioctylamine; alkanolamine compounds, such as methylethanolamine, butylethanolamine, diethanolamine, diisopropanolamine and dimethylaminopropylethanolamine; and heterocyclic amine compounds, such as morpholine, piperidine and 4-methylpiperazine.

Of the above-described active hydrogen compounds, alkanolamine compounds such as diethanolamine are preferred.

Alternatively, compounds having two or more active hydrogen groups such as monoethanolamine and monoisopropanolamine may be used to extend the epoxy resin chain.

The reaction of the active hydrogen compound with the epoxy resin can be carried out by a common process for adding an active hydrogen compound to an epoxy resin. In one exemplary process, the epoxy resin and the active hydrogen compound are heated to 60 to 200° C in the presence of known catalysts such as tertiary amine compounds and phosphonium salts and the reaction is carried out for 3 to 10 hours.

The epoxy polyol resin (d-1-4) having (i) a hydroxyl value of 40 to 330 mg KOH/g preferably has a hydroxyl value of 100 to 140 mg KOH/g in terms of the advantages of the present invention.

An example of the epoxy polyol resin (d-1-4) having (i) a hydroxyl value of 40 to 330 mg KOH/g is a EPICLON U-125-60BT (hydroxyl value = 100 to 140 mg KOH/g) manufactured by DIC Corporation.

(d-2) Polyol having (i) a hydroxyl value of 40 to 330 mg KOH/g and (ii) an acid value of 2 to 20 mg KOH/g will now be described.

The polyol (d-2) having (i) a hydroxyl value of 40 to 330 mg KOH/g and (ii) an acid value of 2 to 20 mg KOH/g can improve the selective adhesion to the specific adherends (B) (in particular, adhesion between different materials), which is the characteristic feature of the present invention, by satisfying the hydroxyl value condition (i) and the acid value condition (ii) whether the polyol (d-2) is an aromatic, aliphatic or castor oil-based polyol.
The hydroxyl value of (i) is more preferably from 230 to 300 mg KOH/g.
The acid value of (ii) is more preferably from 4 to 15 mg KOH/g.

Given that the conditions (i) and (ii) are satisfied, the polyol (d-2) having (i) a hydroxyl value of 40 to 330 mg KOH/g and (ii) an acid value or 2 to 20 mg KOH/g may be a castor oil-based polyol (d-2-1) having (i) a hydroxyl value of 40 to 330 mg KOH/g and (ii) an acid value or 2 to 20 mg KOH/g.

The castor oil-based polyol (d-2-1) having (i) a hydroxyl value of 40 to 330 mg KOH/g and (ii) an acid value or 2 to 20 mg KOH/g is a polyol derived from castor oil and may be a polyol composition as described in Japanese Patent Application Laid-Open No. 2005-89712, which contains a castor oil-based polyol derived from ricinoleic acid, an acidic phosphate compound having 12 or more total carbon atoms, and optionally a terpene phenol. Such compositions are available from Itoh Oil Chemicals, Co., Ltd. under trade names of URIC H-1262 and H-2151U.

URIC H-1262 available from Itoh Oil Chemicals, Co., Ltd. is a polyol containing a castor oil-based polyol and an acidic phosphate compound having 12 or more total carbon atoms (viscosity = 3,500 to 8,500 mPa·s/25° C, hydroxyl value = 240 to 250 (Unit: mg KOH/g), acid value = 4 to 15 (Unit: mg KOH/g)). It exhibits high adhesion to the specific adherends (B) and has particularly high adhesion to metals and high hydrolysis resistance.
URIC H-2151U available from Itoh Oil Chemicals, Co., Ltd. is a polyol containing a castor oil-based polyol, an acidic phosphate compound having 12 or more total carbon atoms and a terpene phenol (viscosity = 3,500 to 8,500 mPa·s/25°C, hydroxyl value = 240 to 290 (Unit: mg KOH/g), acid value = 4 to 15 (Unit: mg KOH/g)). It exhibits high adhesion to the specific adherends (B) and has particularly high adhesion to metals and high hydrolysis resistance.

(d-3) Modified rubber will now be described.
Examples of the modified rubber (d-3) for use in the present invention include liquid carboxylated polyisoprene (d-3-1) and carboxylated polybutadiene (d-3-2).

(d-3-1) Carboxylated polyisoprene

The carboxylated polyisoprene (d-3-1) for use in the present invention serves primarily to improve the wettability of the surface of substrates and thus the adhesion thereto when the composition of the present invention is adhered to metal substrates or glass substrates.
An example of the component (d-3-1) is LIR-420, a maleic polyisoprene manufactured by Kuraray Co., Ltd.

(d-3-2) Carboxylated polybutadiene

The carboxylated polybutadiene (d-3-2) for use in the present invention serves primarily to improve the wettability of the surface of substrates and thus the adhesion thereto when the composition of the present invention is adhered to metal substrates or glass substrates.
The component (d-3-2) is a liquid polymer that is transparent at room temperature and has the polybutadiene backbone microstructure consisting of vinyl 1,2-linkage, *trans* 1,4-linkage and *cis* 1,4-linkage. The vinyl 1,2-linkage is preferably 30 wt% or less. The vinyl 1,2-linkage greater than 30 wt% can lead to decreased storage stability of the resulting composition and is thus undesirable. The *cis* 1, 4-linkage is preferably 40 wt% or more. The *cis* 1, 4-linkage less than 40 wt% can lead to decreased adhesion of the resulting composition and is thus undesirable.
The carboxylated polybutadiene component (d-3-2) can be obtained by reacting a carboxyl group-introducing compound with a liquid polybutadiene. 1,3-butadiene that composes the liquid polybutadiene and the carboxyl group-introducing compound are preferably used in respective proportions of 80 to 98% by mass (1,3-butadiene) and 2 to 20% by mass (carboxyl group-introducing compound).
The liquid polybutadiene used in the reaction preferably has a number average molecular weight of 500 to 10,000, and more preferably 1,000 to 7,000. The liquid polybutadiene desirably has a wide distribution of the molecular weight. More preferably, the liquid polybutadiene has an iodine value 30 to 500 g iodine/100 g of the material as determined according to DIN53241. Preferably, the liquid polybutadiene has a molecular structure that is composed of 70 to 90% of *cis* double bonds, 10 to 30% of *trans* double bonds and 0 to 3% of vinyl double bonds.
Examples of the carboxyl group-introducing compounds that can be used include ethylene-based unsaturated dicarboxylic compound, such as ethylene-based unsaturated dicarboxylic acids and anhydrides or monoesters thereof. Specific examples of the compounds include maleic acid, fumaric acid, itaconic acid, 3,6-tetrahydrophthalic acid, itaconic anhydride, 1,2-dimethylmaleic anhydride, maleic acid monomethyl ester or maleic acid monoethyl ester. Of these, maleic anhydride is preferred because of its safety, economy and reactivity (maleic polybutadiene is preferred).
The polybutadiene/maleic anhydride adduct formed of polybutadiene and maleic anhydride can be produced by a known process.
The maleic liquid polybutadiene preferably has an acid value of 50 to 120 (mg KOH/g), and more preferably 70 to 90 (mg KOH/g), as determined according to DIN ISO 3682. An acid value less than 50 (mg KOH/g) results in decreased adhesion of the resulting composition, whereas an acid value greater than 120 (mg KOH/g) leads to increased viscosity of the resulting composition, making the composition less workable.
The maleic percentage of the maleic liquid polybutadiene is preferably 6 to 20%, more preferably 6 to 15%, and even more preferably 7 to 10% although it needs to be taken into account along with the viscosity.
The viscosity of the maleic liquid polybutadiene (at 20°C) as determined by DIN 53214 is preferably from 3 to 16 Pa·s, more preferably from 5 to 13 Pa·s, and even more preferably from 6 to 9 Pa·s.
Further, the maleic liquid polybutadiene contains 30% or less of vinyl double bonds. A liquid polybutadiene in which *cis* double bonds are present within the above-specified range tends to have a higher flexibility and a higher maleic percentage (i.e., acid value) as described above as compared to a liquid polybutadiene in which the cis double bonds are present at a lower percentage than the above-specified lower limit. As a result, the composition will have a high adhesion and a sufficient polarity imparted thereto, making it possible to make a more flexible composition and to readily adjust the flexibility of the composition of the present invention. Further, the resulting composition has improved decorativeness.
While the viscosity of a liquid polybutadiene in which the cis double bonds are present at a lower percentage than the above-specified lower limit rapidly increases with increasing maleic percentage, the viscosity of a liquid polybutadiene having cis double bonds within the above-specified range exhibits only a small increase. The low viscosity within the above-specified range ensures high reactivity and improves workability. Also, the resulting composition has improved decorativeness.
An example of the maleic liquid polybutadiene is POLYVEST OC 800S and 1200S manufactured by Degussa AG.
(d-4) Compound having an epoxy equivalent of 150 to 700 g/mol will now be described.
One form of the compound (d-4) having an epoxy equivalent of 150 to 700 g/mol for use in the present invention is a polyepoxy compound (d-4-1) having an epoxy equivalent of 150 to 250 g/mol.
Examples of the polyepoxy compound (d-4-1) having an epoxy equivalent of 150 to 250 g/mol include polyglycidyl ether compounds of mononuclear polyhydric phenol compounds, such as hydroquinone, resorcin, pyrocatechol and phloroglucinol; polyglycidyl ether compounds of polynuclear polyhydric phenol compounds, such as dihydroxynaphthalene, biphenol, methylenebisphenol (bisphenol F), methylenebis(orthocresol), ethylidenebisphenol, isopropylidenebisphenol (biphenol A), isopropylidenebis(orthocresol), tetrabromobisphenol A, 1,3-bis(4-hydroxycumylbenzene), 1,4-bis (4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol, phenol novolac, orthocresol novolac, ethylphenol novolac, butylphenol novolac, octylphenol novolac, resorcin novolac and terpenediphenol; polyglycidyl ethers of polyols, such as ethylene glycol, propylene glycol, butylene glycol, hexanediol, polyglycol, thiodiglycol, glycerol, trimethylolpropane, pentaerythritol, sorbitol and bisphenol A-ethylene oxide adducts; homopolymers or copolymers of glycidyl methacrylate and glycidyl esters of aliphatic, aromatic or alicyclic polybasic acids, such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid and endomethylene tetrahydrophthalic acid; epoxy compounds having a glycidylamino group, such as N,N-diglycidylaniline, bis(4-(N-methyl-N-glycidylamino)phenyl)methane and diglycidyl orthotoluidine; epoxidized cyclic olefin compounds, such as vinylcyclohexene diepoxide, dicyclopentanediene diepoxide, 3,4-epoxycyclohexylmethyl-3,4-epoxycyclohexanecarboxylate, 3,4-epoxy-6-methylcyclohexylmethyl-6-methylcyclohexanecarboxyl ate and bis(3,4-epoxy-6-methylcyclohexylmethyl) adipate; epoxidized conjugated diene polymers, such as epoxidized polybutadiene and epoxidized styrene-butadiene copolymers; and heterocyclic compounds, such as triglycidyl isocyanurate.

In terms of adhesion to metals, more preferred examples of the polyepoxy compound (d-4-1) having an epoxy equivalent of 150 to 250 g/mol for use in the present invention include polyglycidyl ethers of bisphenol compounds, such as biphenol, methylenebisphenol (bisphenol F), methylenebis(orthocresol), ethylidenebisphenol, isopropylidenebisphenol (biphenol A), isopropylidenebis(orthocresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol and terpenediphenol.

An example of the polyglycidyl ethers of bisphenol compounds having an epoxy equivalent of 150 to 250 g/mol is ADEKA RESIN EP-4100E (ADEKA Corporation; bisphenol A diglycidyl ether, epoxy equivalent = 190).

Another form of the compound (d-4) having an epoxy equivalent of 150 to 700 g/mol for use in the present invention is a polyolefin-based polymer (d-4-2) having an epoxy equivalent of 500 to 700 g/mol. Preferably, the polyolefin-based polymer has a hydroxyl group on one end thereof and has an epoxy group introduced therein. More preferably, the polyolefin-based polymer is a liquid.

An specific example of the compound (d-4) having an epoxy equivalent of 150 to 700 g/mol is L-207 manufactured by Kuraray Co., Ltd. (identical to KRATON LIQUID (trademark) L-207 POLYMER). L-207 is a polymer with a fully saturated backbone (with an epoxidized ethylene·propylene-ethylene·butylene-OH structure) that has an epoxy equivalent of 590 g/mol, a hydroxyl equivalent of 7,000 g/mol and a glass transition point of -53°C. It is preferably used in the present invention because of its adhesion to metals.

(e) Photocationic polymerization initiator

The composition of the present invention contains a photocationic polymerization initiator (e) as an essential component.

The photocationic polymerization initiator for use in the present invention is not particularly limited and may be any of a variety of photocationic polymerization initiators. Exemplary initiators include onium salts, such as iodonium salts, diazonium salts and sulfonium salts. Examples of these include aromatic diazonium salts, aromatic sulfonium salts (e.g., triarylsulfonium salts), aromatic iodonium salts (e.g., diaryliodonium salts), aromatic sulfoxonium salts, metallocene compounds or iron arene compounds.

Specifically, photocationic polymerization initiators are salts in the form of $A^+B^-$ that generate a cation active species upon irradiation with light. The cation $A^+$ is preferably an aromatic iodonium ion or an aromatic sulfonium ion. An aromatic iodonium ion can be represented by the formula $Ar^1$- $I^+$ -$Ar^2$, where the $Ar^1$ and $Ar^2$ groups bound to $I^+$ are preferably each independently an aromatic group, in particular a phenyl group, which may or may not be substituted.

An aromatic sulfonium ion can be represented by the following formula:

[Chemical Formula 35]

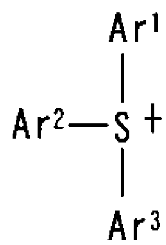

where $Ar^1$, $Ar^2$ and $Ar^3$ bound to the central $S^+$ are preferably each independently an aryl group, in particular a phenyl

group, which may or may not be substituted.

The photocationic polymerization initiator preferably contains at least an initiator in which the anion $B^-$ is $SbF_6^-$ or $B(aryl)_4^-$ ion, such as $B(C_6F_6)_4^-$. In addition to $B(C_6F_5)_4^-$, examples of the $B(aryl)_4^-$ include $B(C_6F_4OCF_3)_4^-$ and $B(C_6F_4CF_3)_4^-$. Specific examples include the compounds represented by the following formulas:

[Chemical Formula 36]

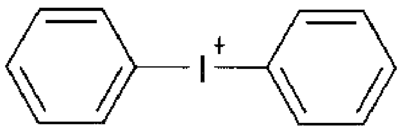 $SbF_6^-$ (e-1)

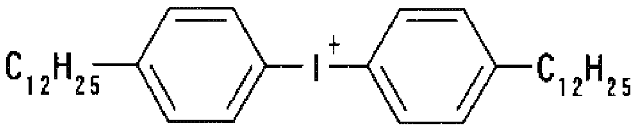 $SbF_6^-$ (e-2)

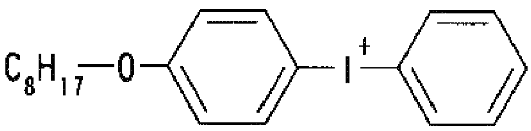 $SbF_6^-$ (e-3)

[Chemical Formula 37]

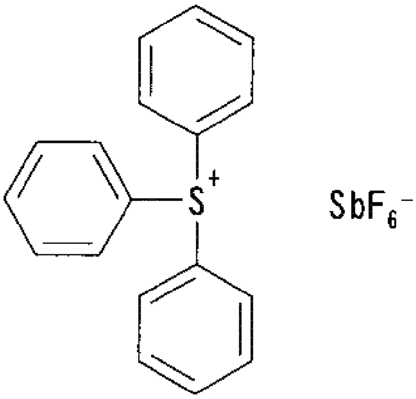

(e-4)

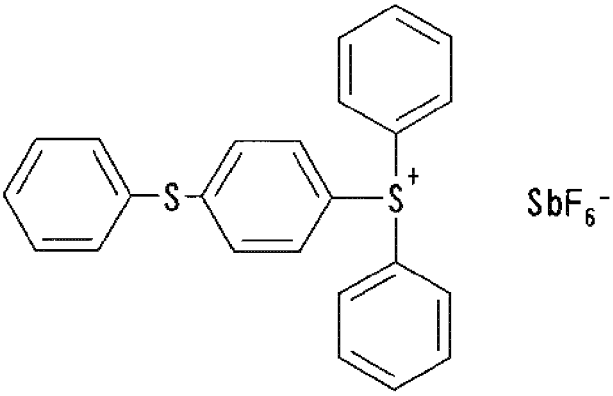

(e-5)

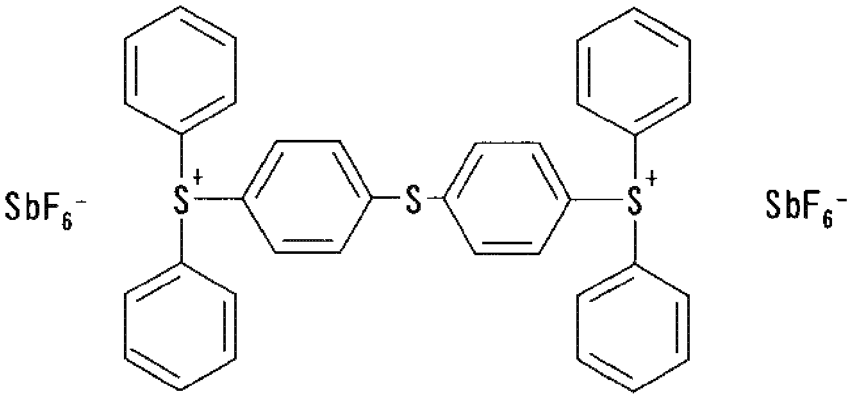

(e-6)

[Chemical Formula 38]

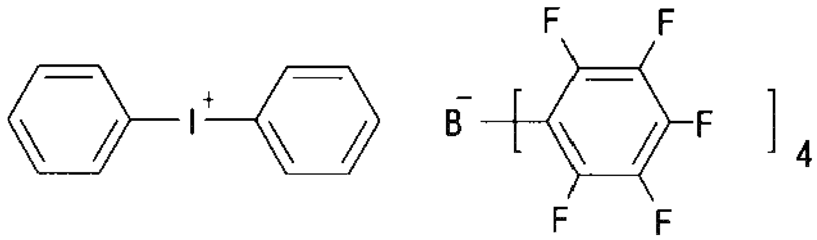

(e-7)

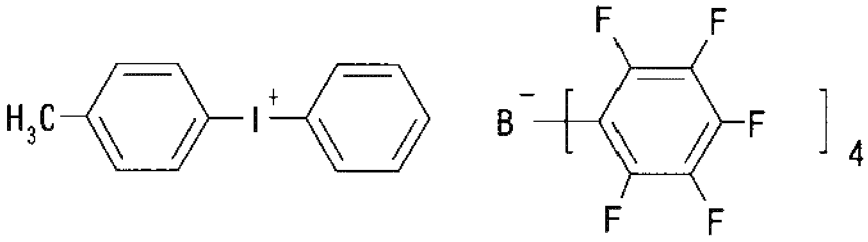

(e-8)

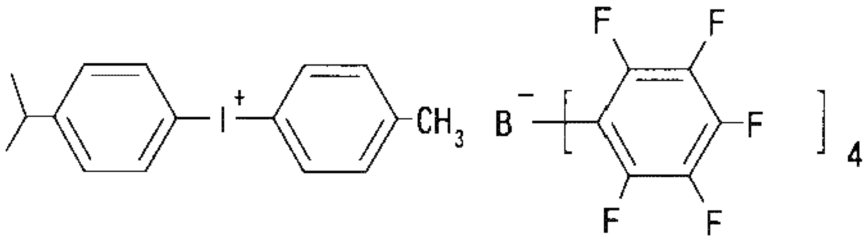

(e-9)

The initiators in which the anion $B^-$ is $SbF_6^-$ or $B(aryl)_4^-$ ion can cure fast. In order to further improve the adhesion, the photocationic polymerization initiator may contain, in addition to the above-described initiators, an initiator in which the anion $B^-$ is an anion other than $SbF_6^-$ and $B(aryl)_4^-$ ion. These initiators cure slowly, but can advantageously enhance the adhesion strength, such that they may be used in combination with the initiators in which the anion $B^-$ is $SbF_6^-$ or $B(aryl)_4^-$ ion. The anion $B^-$ of such initiators includes $PF_6$, $AsF_6^-$ and $BF_4^-$. Examples of specific compounds include salts of the above-described compounds that have $SbF_6^-$ replaced with $PF_6^-$, $AsF_6^-$ or $BF_4^-$.

Exemplary commercial products of the photocationic polymerization initiator to serve as the component (e) include the followings:

VPS-1001: a polycondensation product of
4,4'-azobis(4-cyanovaleric acid) and
$\alpha,\omega$-bis(3-aminopropyl)polydimethylsiloxane (Wako Pure Chemical Industries Ltd.);
WPI-113 (50% propylene carbonate): iodonium hexafluoric acid salt (Wako Pure Chemical Industries Ltd.) (Onium salt-based);
WPI-116 (50% propylene carbonate): iodonium hexafluoroantimonic acid salt (Wako Pure Chemical Industries Ltd.);
WPI-170: iodonium hexafluorophosphate (Wako Pure Chemical Industries Ltd.); and
SP-170: sulfonium·hexafluoroantimony-based polymerization initiator (ADEKA Corporation).

The composition of the present invention may contain an ionic liquid (g) to serve as an antistatic material. The ionic liquid (f) is a salt formed of a cation and an anion and is in the form of liquid.
The ionic liquid (f) preferably contains at least one cation selected from the group consisting of imidazolium, pyridinium, pyrrolidinium, phosphonium, ammonium and sulfonium. Examples of such cations are given below:
[Chemical Formula 39]

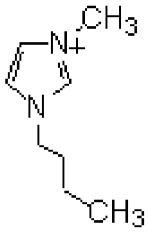
(1 - 1)

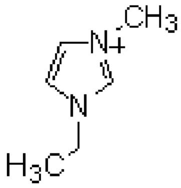
(1 - 2)

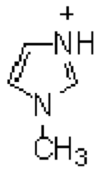
(1 - 3)

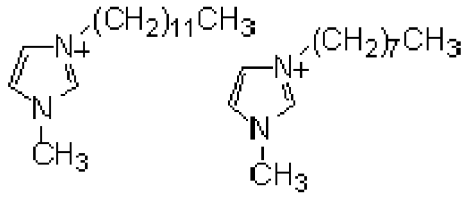
(1 - 4)

(1 - 5)

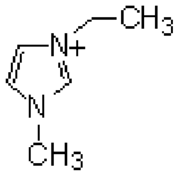
(1 - 6)

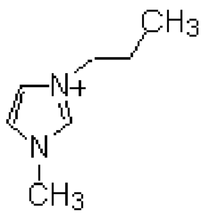
(1 - 7)

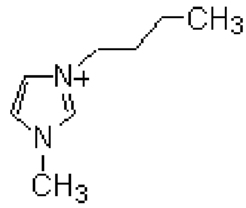
(1 - 8)

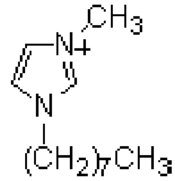
(1 - 9)

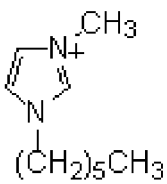
(1 - 1 0)

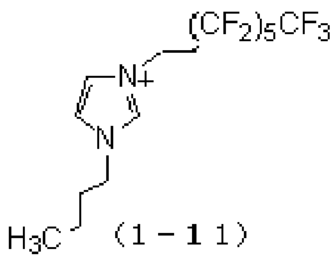
(1 - 1 1)

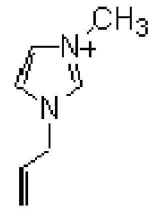
(1 - 1 2)

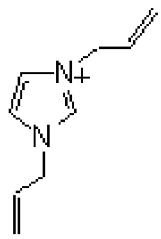
(1 - 1 3)

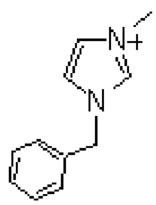
(1 - 1 4)

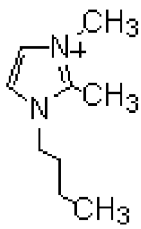
(1 - 1 5)

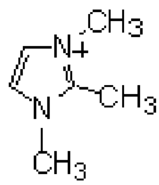
(1 - 1 6)

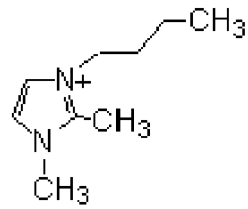
(1 - 1 7)

[Chemical Formula 40]

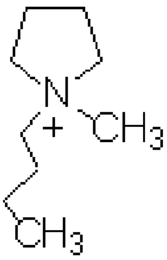 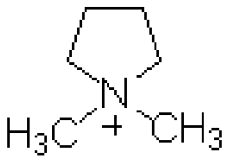 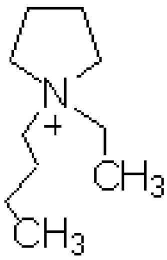 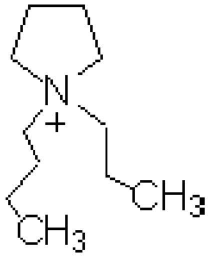

(2 - 1) (2 - 2) (2 - 3) (2 - 4)

[Chemical Formula 41]

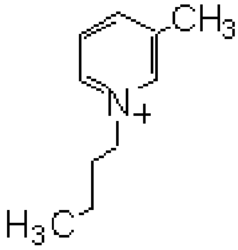 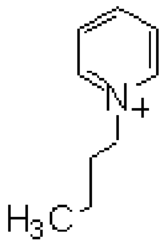 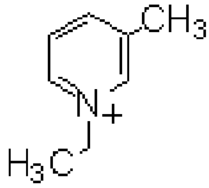 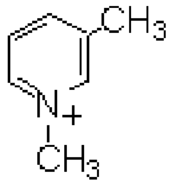

(3 - 1) (3 - 2) (3 - 3) (3 - 4)

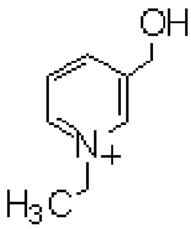 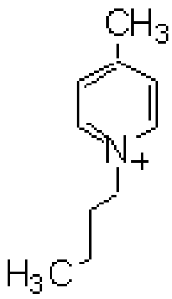 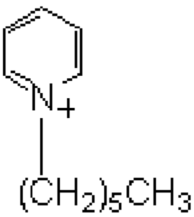 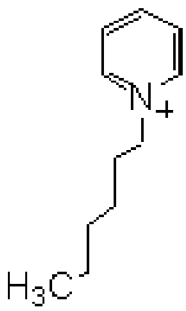

(3 - 5) (3 - 6) (3 - 7) (3 - 8)

[Chemical Formula 42]

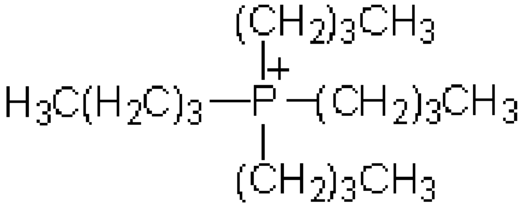

(4 - 1)

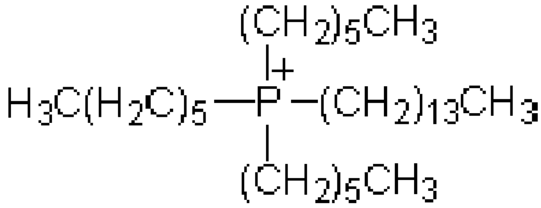

(4 - 2)

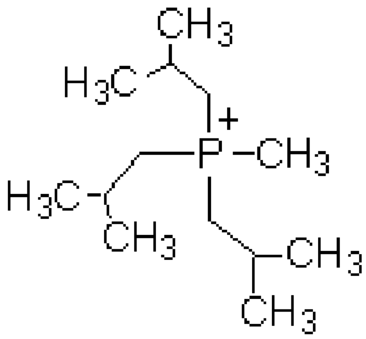

(4 - 3)

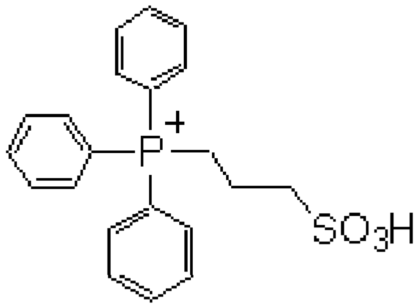

(4 - 4)

[Chemical Formula 43]

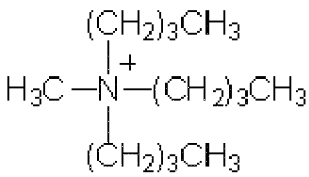

(5 − 1)

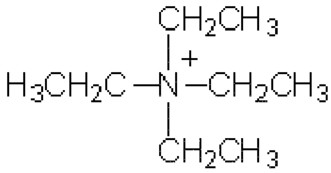

(5 − 2)

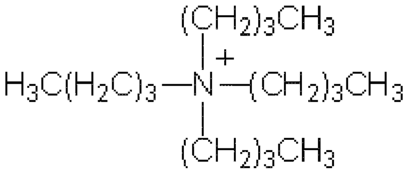

(5 − 3)

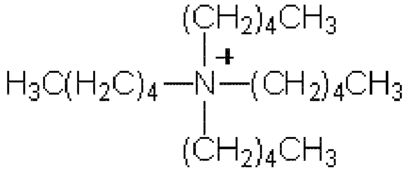

(5 − 4)

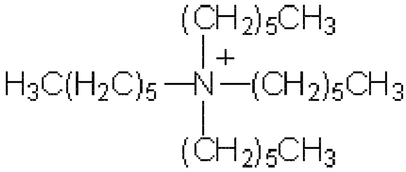

(5 − 5)

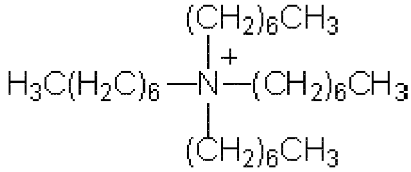

(5 − 6)

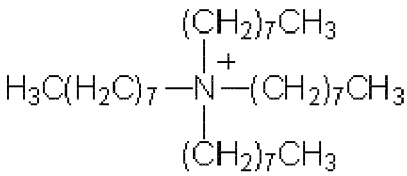

(5 − 7)

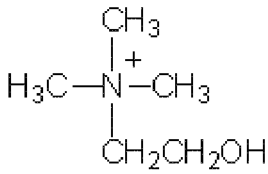

(5 − 8)

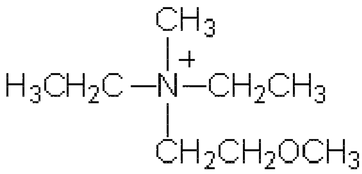

(5 − 9)

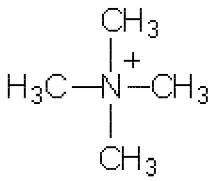

(5 −10)

[Chemical Formula 44]

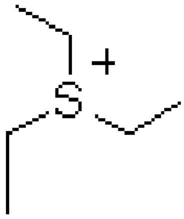
(6-1)

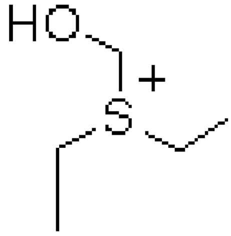
(6-2)

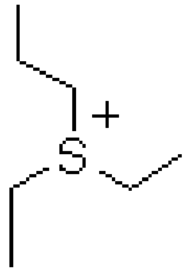
(6-3)

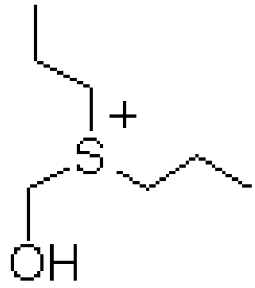
(6-4)

The ionic liquid (f) preferably contains an anion selected from the group consisting of halogens, carboxylates, sulfates, sulfonates, thiocyanates, aluminates, borates, phosphates, phosphinates, amides, antimonates, imides and methides. Examples of such anions are given below:

[Chemical Formula 45]

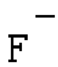
(7-1)

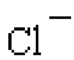
(7-2)

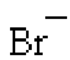
(7-3)

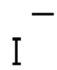
(7-4)

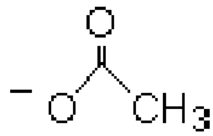
(7-5)

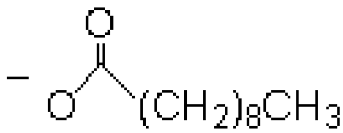
(7-6)

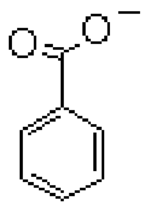
(7-7)

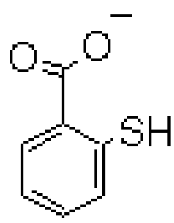
(7-8)

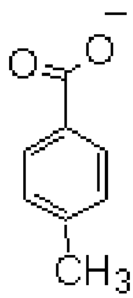
(7-9)

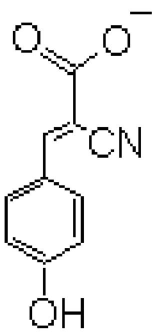
(7-10)

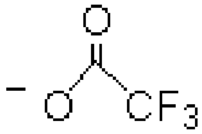
(7-11)

[Chemical Formula 46]

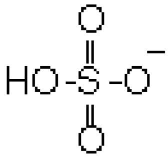

(8 - 1)

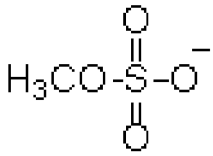

(8 - 2)

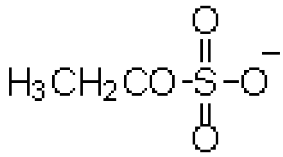

(8 - 3)

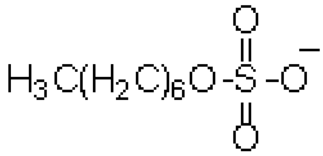

(8 - 4)

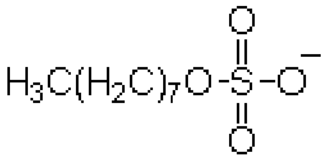

(8 - 5)

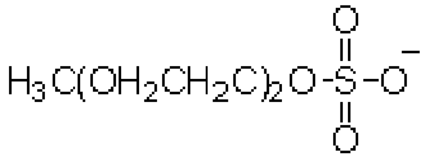

(8 - 6)

[Chemical Formula 47]

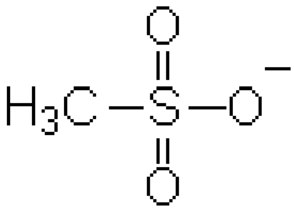

(9 - 1)

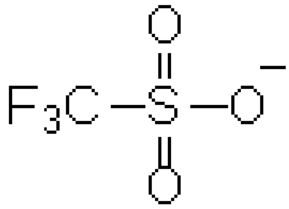

(9 - 2)

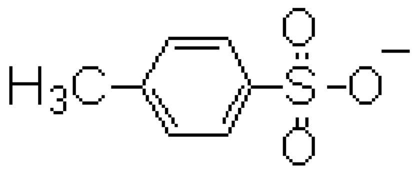

(9 - 3)

[Chemical Formula 48]

$SCN^-$ (10-1) $ALCl_4^-$ (10-2) $PF_6^-$ (10-3) $BF_4^-$ (10-4)

$NO_3^-$ (10-5) $SbF_6^-$ (10-6) $HSO_4^-$ (10-7)

[Chemical Formula 49]

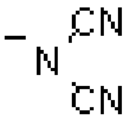

(11-1)

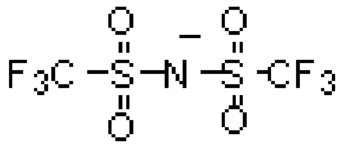

(11-2)

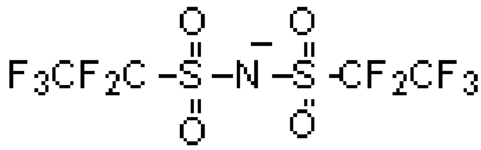

(11-3)

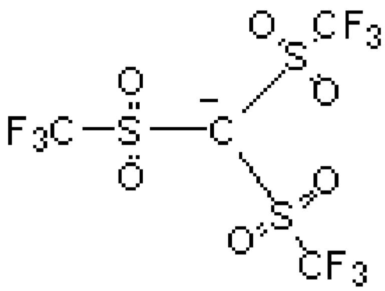

(11-4)

[Chemical Formula 50]

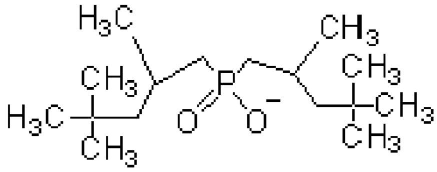

(12-1)

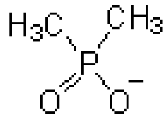

(12-2)

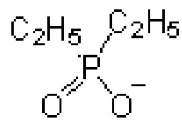

(12-3)

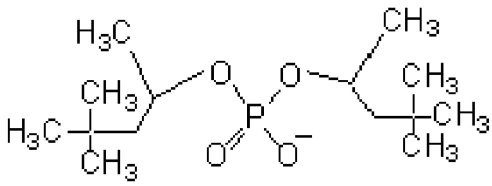

(12-4)

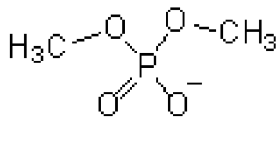

(12-5)

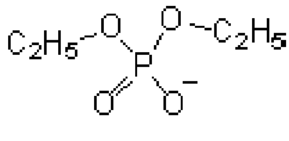

(12-6)

.

Preferably, the ionic liquid is water-soluble.

The ionic liquid preferably includes ion pairs as shown by the following combinations of a cation and an anion: (1-1) and (10-1), (1-1) and (10-4), (1-1) and (11-1), (1-2) and (8-3), (1-2) and (10-1), (1-2) and (10-2), (1-2) and (10-4), (1-2) and (11-1), (1-6) and (7-11), (1-6) and (8-3), (1-6) and (8-5), (1-6) and (8-6), (1-6) and (9-1), (1-6) and (9-2), (1-6) and (9-3), (1-6) and (10-1), (1-6) and (10-4), (1-6) and (10-7), (1-6) and (11-1), (1-6) and (12-5), (1-6) and (12-6), (1-8) and (8-2), (1-8) and (8-5), (1-8) and (8-6), (1-8) and (9-1), (1-8) and (10-4), (1-12) and (10-4), (1-13) and (10-4), (1-17) and (10-4), (2-1) and (9-1), (2-1) and (9-2), (3-1) and (8-2), (3-1) and (8-3), (3-1) and (11-1), (3-5) and (8-3), (3-6) and (10-4), (3-8) and (9-2), (5-8) and (12-5), and (5-9) and (10-4). The ionic liquids including ion pairs of (1-2) and (8-3), (1-2) and (10-1), or (1-2) and (10-2) are particularly preferred among other pairs since the advantages of the present invention can be effectively achieved by such ionic liquids (*i.e.*, adhesion to the specific adherends (B) in combination with an antistatic property) . The ionic liquids including the ion pair of (1-2) and (8-3) are even more preferred since they exhibit particularly high adhesion to the specific adherends (B) and a high antistatic property.

The coating material of the present invention may further contain an antistatic improver (g). The antistatic improver (g) may be at least one selected from the group consisting of acidic phosphates (g-1) and carbodiimide compounds (g-2).

The acidic phosphate (g-1) for use in the present invention may be any acidic phosphate commonly used as an additive to plastics. For example, acidic phosphates obtained by the substitution of 1 to 3 or more of the active hydrogens of phosphoric acids may be used. Examples of such phosphoric acids include phosphoric acid, metaphosphoric acid, orthophosphoric acid, phosphorous acid, phosphonic acid, pyrophosphoric acid, diphosphinic acid, diphosphoric acid and dipshophonic acid. Examples of the substituents for the active hydrogen include alkyl group, aryl group, alkenyl group and hydroxyalkyl group (each having 1 to 30 carbon atoms). Examples of the acidic phosphates include monoalkylesters, monoaryl esters, dialkyl esters or diaryl esters of phosphoric acids; monoalkyl esters of phosphorous acid; and trialkyl esters of pyrophosphoric acid. Of these, preferred are those represented by the following formula (g-1-1):

[Chemical Formula 51]

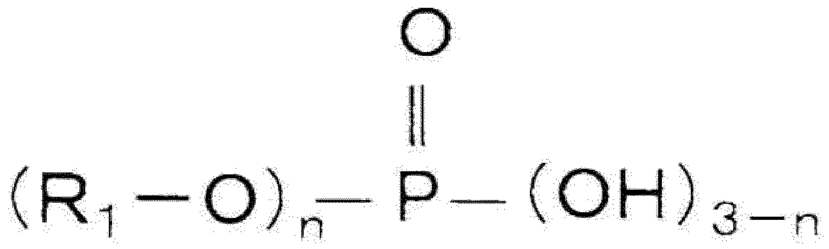

(g-1-1)

[wherein $R_1$ is a monovalent hydrocarbon group having 1 to 30 carbon atoms; n is 1 or 2; and when n is 2, $R_1$ may be the same or different from each other]. Examples of the alkyl group having 1 to 30 carbon atoms represented by $R_1$ in the formula (g-1-1) include methyl, ethyl, n- and i-propyl, n-, i-, sec- and butyl, amyl, tert-amyl, hexyl, octyl, isooctyl, 2-ethylhexyl, tert-octyl, nonyl, *tert*-nonyl, isononyl, decyl, isodecyl, dodecyl, tridecyl, isotridecyl, tetradecyl, hexadecyl, octadecyl, eicosyl and triacontyl groups. When n is 2, the two $R_1$ groups may be the same or different from each other. Acidic phosphates in which $R_1$ has 8 to 30 carbon atoms are more preferred. Particularly preferred are monolauryl ester of phosphoric acid, monostearyl ester of phosphoric acid, distearyl ester of phosphoric acid, or combinations thereof.

The acidic phosphates can be synthesized by a process involving hydrolysis of a corresponding trialkyl phosphate or a triester or tetraester of a corresponding phosphoric acid; by a process involving reacting phosphorus oxychloride with a corresponding alkanol, followed by hydrolysis; by a process involving reacting phosphorus pentaoxide with a corresponding alkanol; or by any other known processes.

The carbodiimide compound (g-2) in the present invention is preferably a compound having two or more carbodiimide groups (-N=C=N-) in its molecule and may be a known polycarbodiimide.

The carbodiimide compound may be a high molecular weight polycarbodiimide produced by subjecting a diisocyanate to decarboxylative condensation in the presence of a carbodiimidization catalyst.
Such compounds include compounds obtained by decarboxylative condensation of the diisocyanates given below.
The diisocyanate may be one or a mixture of 4,4'-diphenylmethane diisocyanate, 3,3'-dimethoxy-4,4'-diphenylmethane diisocyanate, 3,3'-dimethyl-4,4'-diphenylmethane diisocyanate, 4,4'-diphenylether diisocyanate, 3,3'-dimethyl-4,4'-diphenyl ether diisocyanate, 2,4-tolylene diisocyanate, 2,6-tolylene diisocyanate, 1-methoxyphenyl-2,4-diisocyanate, isophorone diisocyanate, 4,4'-dicyclohexylmethane diisocyanate and tetramethyl xylylene diisocyanate.

The carbodiimide catalyst may be a phospholene oxide, such as 1-phenyl-2-phospholene-1-oxide, 3-methyl-2-phospholene-1-oxide, 1-ethyl-3-methyl-2-phospholene-1-oxide, 1-ethyl-2-phospholene-1-oxide or a 3-phospholene isomer thereof.

An example of the high molecular weight polycarbodiimide is CARBODILYTE series manufactured by Nisshinbo Chemical Ltd. Of these products, CARBODILYTE V-01, 03, 05, 07, 09 are preferred because of their ability to effectively improve the antistatic property.

Colorant (h) (optional component)

When the coating composition of the present invention is used as an inkjet ink or a primer, it preferably contains a colorant (h).
While the colorant that can be used in the present invention is not particularly limited, it is preferably a pigment or an oil-soluble dye with high weather resistance and good color reproducibility and may be any of the known colorants such as soluble dyes. The colorant suitable for use in the coating composition of the present invention, when it is intended for use as an inkjet ink or a primer, is preferably a compound that does not act as a polymerization inhibitor in the polymerization reaction to cure the composition, such that the colorant does not cause a decrease in the sensitivity of the curing reaction by an active radiation.

(Pigment)

The pigment that can be used in the present invention is not particularly limited and may be any of the organic or inorganic pigments designated by the following numbers according to the color index:

Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2,

81:3, 81:4, 88, 104, 108, 112, 122, 123, 144, 146, 149, 166, 168, 169, 170, 177, 178, 179, 184, 185, 208, 216, 226, 257, Pigment Violet 3, 19, 23, 29, 30, 37, 50, 88, Pigment Orange 13, 16, 20, 36 for red or magenta pigments;
Pigment Blue 1, 15, 15:1, 15:2, 15:3, 15:4, 15:6, 16, 17-1, 22, 27, 28, 29, 36, 60 for blue or cyan pigments;
Pigment Green 7, 26, 36, 50 for green pigments;
Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, 193 for yellow pigments;
Pigment Black 7, 28, 26 for black pigments; and
Pigment White 6, 18, 21 for white pigments.

These pigments can be suitably used depending on the intended purpose.

(Oil-soluble dye)

The oil-soluble dyes that can be used in the present invention will now be described.
The term "oil-soluble" dye for use in the present invention means a dye that is essentially insoluble in water. Specifically, it refers to an oil-soluble dye that has a solubility in water at 25°C of 1 g or less, preferably 0.5 g or less, or more preferably 0.1 g or less. Thus, the oil-soluble dye includes so-called water-insoluble pigments and oil-soluble dyes, with oil-soluble dyes particularly preferred.
Of the above-described oil-soluble dies that can be used in the present invention, the yellow dye may be any suitable yellow dye. Examples include aryl or heteryl azo dyes containing as a coupler, for example, a phenol, anaphthol, an aniline, a pyrazolone, a pyridone, or an open-chain active methylene compound; azomethine dyes containing as a coupler, for example, an open-chain active methylene compound; methane dyes such as benzylidene dyes and monomethine oxonol dyes; and quinone dyes such as naphthoquinone dyes and anthraquinone dyes. In addition to these dyes, quinophthalone dyes, nitro·nitroso dyes, acridine dyes and acridinone dyes may also be used.
Of the above-described oil-soluble dies that can be used in the present invention, the magenta dye may be any suitable magenta dye. Examples include aryl or heteryl azo dyes containing as a coupler, for example, a phenol, a naphthol, or an aniline; azomethine dyes containing as a coupler, for example, a pyrazolone, or pyrazolo-triazole; methine dyes such as arylidene dyes, styryle dyes, merocyanine dyes, and oxonol dyes; carbonium dyes such as diphenylmethane dyes, triphenylmethane dyes, and xanthene dyes; quinone dyes such as naphthoquinone, anthraquinone, and anthrapyridone; and condensed polycyclic dyes such as dioxazine.
Of the oil-soluble dyes that can be used in the present invention, the cyan dye may be any suitable cyan dye. Examples include indoaniline dyes; indophenol dyes; azomethine dyes containing as a coupler, for example, a pyrrolotriazole; polymethine dyes such as cyanine dyes, oxonol dyes, and merocyanine dyes; carbonium dyes such as diphenylmethane dyes, triphenylmethane dyes, and xanthene dyes; phthalocyanine dyes; anthraquinone dyes; aryl or heteryl azo dyes containing as a coupler, for example, a phenol, a naphthol, or an aniline; and indigo/thioindigo dyes.
Each of the above-described dyes may be such that it exhibits each color, which is yellow, magenta or cyan, only when a part of the chromophore dissociates. In that case, the counter cation may be an inorganic cation such as an alkali metal and ammonium or an organic cation such as pyridinium and a quaternary ammonium salt. The counter cation may also be a polymer cation that contains any of the above-described cations as a part of its structure.
Preferred examples include, but are not limited to, C. I. Solvent Black 3, 7, 27, 29, and 34; C. I. Solvent Yellow 14, 16, 19, 29, 30, 56, 82, 93, and 162; C. I. Solvent Red 1, 3, 8, 18, 24, 27, 43, 49, 51, 72, 73, 109, 122, 132, and 218; C. I. Solvent Violet 3; C. I. Solvent Blue 2, 11, 25, 35, 38, 67, and 70; C. I. Solvent Green 3 and 7; and C. I. Solvent Orange 2. Particularly preferred examples include Nubian Black PC-0850, Oil Black HBB, Oil Yellow 129, Oil Yellow 105, Oil Pink 312, Oil Red 5B, Oil Scarlet 308, Vali Fast Blue 2606, Oil Blue BOS (manufactured by Orient Chemical Industries, Ltd.), Aizen Spilon Blue GNH (manufactured by Hodogaya Chemical Co., Ltd.), Neopen Yellow 075, Neopen Magenta SE1378, Neopen Blue 808, Neopen Blue FF4012, and Neopen Cyan FF4238 (manufactured by BASF).
In the present invention, the oil-soluble dyes may be used either individually or as a mixture of more than one dye.
When the colorant used is the oil-soluble dye, other water-soluble dyes, disperse dyes, pigments and other colorants may be used along with the oil-soluble dye as desired, given that such colorants do not affect the advantages of the present invention.
In the present invention, a disperse dye may also be used as long as it can dissolve in a water-immiscible organic solvent. While the disperse dye typically includes water-soluble dyes, it is preferably used in an amount that can dissolve in a water-immiscible organic solvent. Specific preferred examples of the disperse dyes include C. I. Disperse Yellow 5, 42, 54, 64, 79, 82, 83, 93, 99, 100, 119, 122, 124, 126, 160, 184; 1, 186, 198, 199, 201, 204, 224, and 237; C. I. Disperse Orange 13, 29, 31:1, 33, 49, 54, 55, 66, 73, 118, 119, and 163; C. I. Disperse Red 54, 60, 72, 73, 86, 88, 91, 92, 93, 111, 126, 127, 134, 135, 143, 145, 152, 153, 154, 159, 164, 167; 1, 177, 181, 204, 206, 207, 221, 239, 240, 258, 277, 278, 283, 311, 323, 343, 348, 356, and 362; C. I. Disperse Violet 33; C. I. Disperse Blue 56, 60, 73, 87, 113, 128, 143, 148, 154, 158, 165, 165; 1, 165; 2, 176, 183, 185, 197, 198, 201, 214, 224, 225, 257, 266, 267, 287, 354, 358, 365, and

368; and C.I. Disperse Green 6:1 and 9.

When the coating material of the present invention is intended for use as an ink or a primer, the colorant for use in the present invention preferably disperses in the ink to an appropriate extent after its addition to the ink. To disperse the colorant, various dispersing apparatuses may be used, including a ball mill, a sand mill, an attritor, a roll mill, an agitator, a Henschel mixer, a colloidal mill, an ultrasonic homogenizer, a pearl mill, a wet jet mill, or a paint shaker.

One or two or more of these colorants may be properly selected depending on the intended use.

When the coating composition of the present invention is intended for use as an inkjet ink or a primer and the colorant used is a pigment or other colorants that exist as a solid in the coating composition, the colorant, the dispersant, the selection of dispersing medium, and the conditions for the dispersion and filtration are preferably adjusted so that the resulting colorant particle preferably has an average size of from 0.005 to 0.5 μm, more preferably from 0.01 to 0.45 μm, and even more preferably from 0.015 to 0.4 μm. Managing the particle size in this manner is preferred since the clogging of head nozzles can be reduced, and the storage stability of ink, the ink transparency and the curing sensitivity can be maintained.

While the amount of the colorant in the coating composition of the present invention is properly selected depending on the color and the intended use of the coating composition, it is generally preferred that the colorant be present in an amount of 0.01 to 30 % by mass with respect to the total mass of the coating material.

(i) Dispersant

In the present invention, a dispersant (i) is preferably added upon dispersing the colorant (g). In other words, the coating material of the present invention preferably contains the colorant (g) along with the dispersant (i).

In the present invention, the dispersant (i) is preferably an acidic dispersant.

An acidic dispersant is a dispersant having acidic functional groups.

The acidic dispersant preferably has an acid value of 10 mg KOH/g or higher, more preferably 20 mg KOH/g or higher, and still more preferably 40 mg KOH/g or higher. Preferably, the acidic dispersant has an acid value that is greater than its amine value.

The term "amine value" as used herein indicates the total amount of primary, secondary and tertiary amines expressed by the number of milligrams of KOH equivalent to the hydrochloric acid required to neutralize one gram of a sample. The term "acid value" is the number of milligrams of KOH required to neutralize free fatty acids, resin acids or other acids present in one gram of a sample.

While the dispersant is not particularly limited and may be any acidic dispersant, it is preferably a polymer dispersant, more preferably a polymer dispersant that has an acid value greater than its amine value.

In the present invention, the difference between the acid value and the amine value of the dispersant is preferably 5 mg KOH/g or more, more preferably 10 mg KOH/g or more, and still more preferably 20 mg KOH/g or more.

Specific examples of the dispersant having an acid value greater than its amine value include polymer dispersants, such as DisperBYK-101 (acid value: 30 mg KOH/g, amine value: 0 mg KOH/g), DisperBYK-102 (acid value: 101 mg KOH/g, amine value: 0 mg KOH/g), DisperBYK-103 (acid value: 101 mg KOH/g, amine value: 0 mg KOH/g), DisperBYK-106 (acid value: 132 mg KOH/g, amine value: 74 mg KOH/g), DisperBYK-111 (acid value: 129 mg KOH/g, amine value: 0 mg KOH/g) (each manufactured by BYK Chemie) ; EFKA4010 (acid value: 10-15 mg KOH/g, amine value: 4-8 mg KOH/g) (each manufactured by Efka Additives B. V.); and various Solsperse dispersants, such as Solsperse 36000 (acid value: 45 mg KOH/g, amine value: 0 mg KOH/g), Solsperse 41000 (acid value: 50 mg KOH/g, amine value: 0 mg KOH/g), Solsperse 3000 (acid value: 3, 000 mg KOH/g, amine value: 0 mg KOH/g), Solsperse 21000 (acid value: 72 mg KOH/g, amine value: 0 mg KOH/g), Solsperse 26000 (acid value: 50 mg KOH/g, amine value: 0 mg KOH/g), Solsperse 36600 (acid value: 23 mg KOH/g, amine value: 0 mg KOH/g), Solsperse 39000 (acid value: 33 mg KOH/g, amine value: 0 mg KOH/g), Solsperse 41090 (acid value: 23 mg KOH/g, amine value: 0 mg KOH/g), Solsperse 43000 (acid value: 8 mg KOH/g, amine value: 0 mg KOH/g), Solsperse 44000 (acid value: 12 mg KOH/g, amine value: 0 mg KOH/g), Solsperse 53095 (acid value: 47 mg KOH/g, amine value: 0 mg KOH/g), and Solsperse 54000 (acid value: 47 mg KOH/g, amine value: 0 mg KOH/g) (each manufactured by Zeneca Inc.)

In the present invention, the dispersant (i) may be used either individually or in a combination of more than one dispersant.

Alternatively, other known dispersants may also be used. Specific examples include DisperBYK-161 (amine value: 11 mg KOH/g, acid value: 0 mg KOH/g), DisperBYK-162 (amine value: 13 mg KOH/g, acid value: 0 mg KOH/g), DisperBYK-163 (amine value: 10 mg KOH/g, acid value: 0 mg KOH/g), DisperBYK-164 (amine value: 18 mg KOH/g, acid value: 0 mg KOH/g), DisperBYK-166 (amine value: 20 mg KOH/g, acid value: 0 mg KOH/g), DisperBYK-167 (amine value: 13 mg KOH/g, acid value: 0 mg KOH/g), DisperBYK-168 (amine value: 10 mg KOH/g, acid value: 0 mg KOH/g), DisperBYK-182 (amine value: 13 mg KOH/g, acid value: 0 mg KOH/g) (each manufactured by BYK Chemie) ; EFKA4046 (amine value: 17-21 mg KOH/g, acid value: 0 mg KOH/g), EFKA4060 (amine value: 6-10 mg KOH/g, acid value: 0mg KOH/g), EFKA4080 (amine value: 3.6-4.1 mg KOH/g, acid value: 0 mg KOH/g), EFKA4800 (amine value: 37-43 mg KOH/g, acid

value: 0 mg KOH/g), EFKA7462 (amine value: 8 mg KOH/g, acid value: 0 mg KOH/g) (each manufactured by Efka Additives B. V.); various Solsperse dispersants, such as Solsperse 13240 (basic dispersant), Solsperse 13940 (basic dispersant), Solsperse 24000 (amine value: 47 mg KOH/g, acid value: 24 mg KOH/g), Solsperse 28000 (basic dispersant), Solsperse 32000 (amine value: 180 mg KOH/g, acid value: 15 mg KOH/g) (each manufactured by Zeneca Inc.); and Disperlon DA-234 (amine value: 20 mg KOH/g, acid value: 16 mg KOH/g), and Disperlon DA-325 (amine value: 20 mg KOH/g, acid value: 14 mg KOH/g) (each manufactured by Kusumoto Chemicals Ltd.).

While the amount of the dispersant in the coating material of the present invention is properly selected depending on the intended use of the coating material, the dispersant is preferably present in an amount of 0.01 to 50 % by mass, more preferably 0.1 to 30 % by mass, and still more preferably 1 to 10 % by mass with respect to the mass of the colorant. The amount of the dispersant that is 0.01 % by mass or more is preferred since when present in this range, the dispersant can effectively disperse the pigment and can ensure dispersion stability. The amount of the dispersant that is 50 % by mass or less is also preferred since the dispersant present in this range enables the ink to remain stable over time.

(Blending proportions of the composition)

In the composition of the present invention, the epoxy resin (a) is added in an amount of 10 to 30 % by mass, more preferably in an amount of 15 to 25 % by mass, in view of the adhesion and high hardness. If the amount of the component (a) is less than 10 % by mass, then the adhesion and the hardness will be reduced. If the amount of the component (a) is more than 30 % by mass, then the composition tends to contract significantly, resulting in decreased adhesion and impact resistance.

In the composition of the present invention, the oxetane compound (b) is added in an amount of 25 to 55 % by mass, more preferably in an amount of 30 to 50 % by mass, in view of the rate of curing, impact characteristics and toughness. If the amount of the component (b) is less than 25 % by mass, then the adhesion and the hardness will be reduced. If the amount of the component (b) is greater than 55% by mass, then the composition tends to contract significantly, resulting in undesirable impact characteristics.

In the composition of the present invention, the vinyl ether compound (c) is added in an amount of 25 to 55 % by mass, more preferably in an amount of 30 to 53 % by mass, in view of the low viscosity and low contraction. If the amount of the component (c) is less than 25 % by mass, then its effectiveness in reducing the contraction and viscosity will be decreased. The component (c), when present in an amount greater than 55% by mass, causes a decrease in the adhesion.

In the composition of the present invention, the modifier (d) is added in an amount of 1 to 15 % by mass, more preferably in an amount of 5 to 10 % by mass, in view of the adhesion and low contraction. If the amount of the component (d) is less than 1 % by mass, then its effectiveness in reducing the contraction as well as its effectiveness in improving the adhesion will be decreased. The component (d), when present in an amount greater than 15 % by mass, can result in decreased transparency and adhesion (The total amount of the components (a) to (d) is 100 % by mass).

In the composition of the present invention, the photocationic polymerization initiator (e) is added in an amount of 3 to 15 parts by mass with respect to 100 parts by mass of the total amount of the components (a) to (d) in view of a practical time duration for photocuring (irradiation for 10 seconds or less at an irradiation intensity of 500 mJ/$cm^2$). The photocationic polymerization initiator (e) is preferably added in an amount of 5 to 10 parts by mass in view of a more practical time duration for photocuring (irradiation for 3 seconds or less at an irradiation intensity of 500 mJ/$cm^2$). If the amount of the component (e) is less than 3 parts by mass, then the composition will not cure. The component (e), when present in an amount greater than 15 parts by mass, can result in undesirable contraction.

In the composition of the present invention, the ionic liquid (f) is preferably added in an amount of 0.5 to 10 parts by mass, more preferably in an amount of 2 to 7 parts by mass, with respect to 100 parts by mass of the total amount of the components (a) to (d). The antistatic improver (g) is added preferably in the range of 0.02 to 30 parts by mass, more preferably in the range of 0.03 to 20 parts by mass, and particularly preferably in the range of 0.04 to 3 parts by mass with respect to 1 part by mass of the ionic liquid (f).

If necessary, a functional filler or other materials that are commonly used as a filler material may be added as long as it does not affect the objectives of the present invention.

To impart stiffness, talc, mica and other suitable materials may be used either alone or in a combination of two or more.

To impart heat conductivity, barium sulfate, magnesium oxide or other suitable materials may be used either alone or in a combination of two or more.

To impart a thermal expansion property, a thermally expandable microcapsule and other suitable materials may be used.

To impart a leveling property, a silicone leveling agent and other suitable materials may be used.

While the viscosity of the composition of the present invention at 25°C is not limited to any particular viscosity, it is preferably 3000 mPa·s or less and, more preferably, 100 to 2, 000 mPa·s. The composition with the viscosity within

this range not only achieves high storage stability without separating over time, but also generates little bubbles and can therefore achieve smooth surfaces. The viscosity can be measured by a type-B viscometer.

The composition of the present invention exhibits particularly high adhesion to such adherends as soft and hard vinyl chloride resins; polystyrene; polycarbonate; glass; aluminum; steel plates; a polyolefin resin modified by a polar group-containing compound or a copolymer of an olefin and a polar group-containing compound; magnesium; acrylonitrile-butadiene-styrene copolymer; polyester resins (e.g., polyethylene terephthalate (PET) and polybutylene terephthalate); or acrylic resins (e.g., PMMA) (referred to as a specific adherend layer (B1) or a specific adherend layer (B2), hereinafter). No disclosure can be found in prior art regarding adhesive compositions that exhibit high adhesion to these adherends.

The composition of the present invention exhibits particularly high adhesion when different materials of the above-described adherends are used in the adherend layer B1 and the adherend layer B2 (i.e., adhesion between different materials) .

By saying "between different materials," it is meant to specifically include hard vinyl chloride resin and glass; soft vinyl chloride resin and glass; a polystyrene resin and aluminum; a polycarbonate resin and aluminum; an acrylonitrile-butadiene-styrene copolymer (ABS) and glass; glass and aluminum; magnesium and a polycarbonate resin; a steel plate and an acrylic resin (e.g., polymethyl methacrylate (PMMA)); a polyester (e.g., polyethylene terephthalate) and an acrylonitrile-butadiene-styrene copolymer (ABS); and an acrylic resin (e.g., polymethyl methacrylate (PMMA)) and an acrylonitrile-butadiene-styrene copolymer (ABS).

The polyolefin resin modified with a polar group-containing compound is a polyolefin that has a polar group, such as -OH, $-NO_2$, -CO, $-NH_2$, -NH, $-OCH_3$, and $-SO_3H$ introduced therein. Examples include polyolefin resins grafted with at least one selected from maleic anhydride and glycidyl methacrylate. Specific examples include polyethylenes and polypropylenes grafted with maleic anhydride, and polyethylenes and polypropylenes grafted with glycidyl methacrylate. Examples of the copolymers of an olefin and a polar group-containing compound include copolymers of ethylene and vinyl acetate (EVA); copolymers of ethylene and (meth)acrylic acid (e.g., EAA and EMA); and copolymers of ethylene and (meth)acrylates (e.g., EEA).

(Adhesion method of the present invention)

The adhesion method of the present invention includes Step I of mixing the above-described components (a) to (e) and optionally other filler materials in any order and in the above-described blending proportions to prepare an adhesive composition of the present invention. This is followed by Step II of laminating the adhesive composition onto the specific adherend layer (B1) to form an adhesive composition layer (A1). This is followed by Step III of further laminating the adhesive composition layer (A) with the specific adherend layer (B2). According to such an adhesion method of the present invention, a strong adhesion of the three layers (B1)-(A)-(B2) can be achieved.

While the adhesive composition layer (A) or the coating composition layer (A) (i.e., cured coating film) may have any thickness, it preferably has a thickness in the order of 2 μm to 50 μm, preferably 5 μm to 30 μm, and more preferably 8 μm to 20 μm (Since the contraction of the composition of the present invention is small when the composition is blended without using any solvents (volatile), the thickness of the applied coating and the thickness of the cured film does not differ significantly). Adjusting the coating film thickness within this range can help improve the transparency, reduce the degree of warping of the resin article caused by the contraction upon curing, and prevent the decrease in the surface hardness caused by incomplete curing of the binder resin components. Preferred coating methods include spin coating, (doctor) knife coating, micro gravure coating, direct gravure coating, offset gravure coating, reverse gravure coating, reverse roll coating, (Meyer) bar coating, die coating, spray coating, dip coating. One example of spin coaters is a manual spinner (Model ASS-301 manufactured by Able Inc.).

In an exemplary process for preparing the adhesive composition or the coating composition, the components (b) and (c) to serve as reactive diluents are added to the component (a) in a container equipped with a stirrer. To add these components, the component (b) is first added to the component (a) and the mixture is thoroughly stirred at room temperature. If the mixture is too thick, the mixture may be stirred while heating at 100°C or below. Heating above 100°C can cause rapid vaporization of the component (b) and is undesirable in terms of work environment. Subsequently, the components (c) and (d) are added and the mixture is stirred. Once the temperature of the mixture has reached room temperature, the component (e) is added and the mixture is thoroughly stirred until no undissolved solid remains.

When it is desired to add other components, they are added at the end and the mixture is thoroughly stirred.

The resulting composition is immediately processed or stored in a cold, dark place.

(Laminate of the present invention)

The laminate of the present invention is in the form of (B1)-(A) and is obtained by preparing the adhesive composition or the coating composition of the present invention in the above-described manner, and laminating the

adhesive composition or the coating composition onto the specific adherend layer (B1) to form the layer (A) of the adhesive composition or the coating composition.
In another embodiment, the laminate of the present invention is in the form of (B1)-(A)-(B2) and is obtained by laminating the adhesive composition onto the specific adherend layer (B1) to form the adhesive composition layer (A), and further laminating the specific adherend layer (B2) onto the layer (A).
In the laminate of the present invention, the adhesion between the specific adherend layers (B1) and (B2) and the adhesion composition layer (A) is sufficiently high and the laminate has transparency, surface smoothness, flexibility and impact resistance in a well-balanced manner.
For the laminate in the form of (B1)-(A), the layer (A) of the adhesive composition or the coating composition also serves effectively as the primer layer for the layer (B1). The primer layer can contribute to the adhesion to an additional coating material, which may be applied to the primer layer depending on the intended use of the laminate.
In addition to the above-described laminates, the layers of the specific adherend and the layers of the adhesive composition may be stacked multiple times in an alternating manner. Such laminates are also encompassed by the laminates as defined by the present invention.
The coating composition of the present invention, which exhibits high adhesion to adherends formed of the above-described substrates (B) and has a low viscosity, desirable color development of images, high impact resistance and high flexibility, is suitable for use in an inkjet ink.
The inkjet ink may have any suitable composition. For example, colorants, dispersants, surfactants, sensitizers, anti-discoloration agents, conductive salts and other known additives commonly used in inkjet inks may be added. The colorants and the dispersants are as described above.
The coating composition of the present invention, which also exhibits high adhesion to adherends formed of the above-described substrates (B) and exhibits high adhesion to commercially available inkjet inks, is also suitable for use in a primer for inkjet ink provided on an inkjet recording medium. The primer for an inkjet ink may be disposed using an inkjet-recording apparatus. While the primer layer for inkjet ink may have any suitable thickness, it preferably has a thickness of for example 20 to 150 μm, preferably 10 to 40 μm, and particularly preferably 15 μm to 35 μm.
The inkjet-recording apparatus is not particularly limited and may be any known inkjet-recording apparatus that can achieve a desired resolution. The inkjet ink of the present invention can be cured to provide the printed articles of the present invention. The printed article of the present invention achieves desirable color development of images and has improved impact resistance and flexibility. As a result, the printed article can achieve high durability of images.

## Examples

The present invention will now be described with reference to Examples and Comparative Examples, which are not intended to limit the present invention.
Materials used in Examples and Comparative Examples are as follows:

(a) Epoxy resin

3,4-epoxycyclohexylmethyl-3,4-epoxycyclohexane carboxylate represented by the above-described formula (a-2) (CELLOXIDE 2021P manufactured by Daicel Corporation).

(b) Oxetane compound

Di[1-ethyl(3-oxetanyl)]methyl ether represented by the above-described structure formula (25) (OXT-221 manufactured by Toagosei Co., Ltd.).

(c) Vinyl ether compound

(i) Triethylene glycol divinyl ether, DVE-3 (manufactured by BASF); viscosity at 25°C = 2.6 mPa·s
(ii) 1,4-cyclohexanedimethanol divinyl ether (CHDM) manufactured by BASF

(d) Modifier

(d-1-2) Polybutadiene-based polyol

Poly bd R-15HT manufactured by Idemitsu Kosan Co., Ltd.; viscosity = 1.5 Pa·s/30°C; hydroxyl value = 102.7

mg KOH/g (d-1-1-1) Aromatic castor oil-based polyol
URIC (trademark) AC-006 manufactured by Itoh Oil Chemicals, Co., Ltd. (a polyol derived from castor oil represented by the formula (26) above); viscosity = 0.7 to 1.5 Pa·s/25°C; hydroxyl value = 194 to 214 mg KOH/g

(d-1-3) Polyisoprene-based polyol

Poly ip (trademark registered) manufactured by Idemitsu Kosan Co., Ltd. (a polyisoprene-type liquid polymer having highly reactive hydroxyl groups at the terminals of its molecule) ; hydroxyl value = 46.6 mg KOH/g; number average molecular weight Mn = 2500 (d-2-1) Castor oil-based polyol
URIC H-1262 manufactured by Itoh Oil Chemicals, Co., Ltd. (a polyol containing a castor oil-based polyol and an acidic phosphate compound having 12 or more total carbon atoms) ; viscosity = 3,500 to 8,500 Pa·s/25°C acid value = 4 to 15 (Unit = mg KOH/g); hydroxyl value = 240 to 290 (Unit = mg KOH/g)

(d-2-1) Castor oil-based polyol

URIC H-2151U manufactured by Itoh Oil Chemicals, Co., Ltd. (a polyol containing a castor oil-based polyol, an acidic phosphate compound having 12 or more total carbon atoms and a terpene phenol) ; viscosity = 3,500 to 8,500 Pa·s/25°C; acid value = 4 to 15 (Unit = mg KOH/g); hydroxyl value = 240 to 290 (Unit = mg KOH/g)

(d-1-3) Hydrogenated product of polyisoprene-based polyol

EPOLE (trademark registered) manufactured by Idemitsu Co., Ltd. (a hydroxyl-terminated liquid polyolefin); viscosity (Pa· s/30°C) = 75; hydroxyl value (mg KOH/mg) = 50.5; number average molecular weight = 2,500

(d-3-1) Maleic polyisoprene

LIR-420 manufactured by Kuraray Co., Ltd.; acid value (mg KOH/g) = 40

(d-3-2) Maleic acid-modified polybutadiene

Ricon130MA8 manufactured by Sartomer; viscosity (Pa·s/30°C) = 6.5; acid value (mg KOH/g) = 46; number average molecular weight = 2,700

(d-3-2) Maleic acid-modified polybutadiene

POLYVEST (trademark) OC800S manufactured by Evonik (1,4-cis double bonds in polybutadiene = 75%, 1, 4-trans double bonds = 24%, vinyl bonds = 1%, maleic percentage = 7.5%); number average molecular weight = 3,300 (GPC), mass average molecular weight = 13, 600 (GPC) ; viscosity (20°C) = 6 to 9 Pa·s (as determined according to DIN53214); acid value = 70 to 90 mg KOH/g; iodine value = 380 to 420 g/100g (polymerized by Ziegler-Natta catalyst)

(d-1-4) Epoxy polyol resin

EPICLON (trademark) U-125-60BT manufactured by DIC; viscosity (Pa·s/30°C) = 70; hydroxyl value (mg KOH/mg) = 120 (d-4-1) Polyepoxy compound having an epoxy equivalent of 150 to 250 g/mol
ADEKA RESIN EP-4100E manufactured by ADEKA Corporation (bisphenol A diglycidyl ether); epoxy equivalent = 190 (d-4-2) Polymer having an epoxy equivalent of 500 to 700 g/mol and having a fully saturated backbone
L-207 manufactured by Kuraray Co., Ltd. (identical to KRATON LIQUID (trademark) L-207 POLYMER); (a polymer having an epoxy equivalent of 590 g/mol, hydroxyl equivalent of 7, 000g/mol and glass transition point of -53°C, and having a fully saturated backbone (epoxidized ethylene·propylene-ethylene·butylene-OH structure))
Each polyol was characterized as described below.

Method to determine viscosity

A single cylindrical rotary viscometer (Type B, TVC-5) is used according to JIS K7117-1.

1. A 500ml beaker (standard) is used in the meter.

2. Standard rotors are selected from two types: M1 to M4 rotors for low to medium viscosity, and H1 to H7 rotors

for medium to high viscosity.

Method to determine hydroxyl value

The hydroxyl value is the number of milligrams of potassium hydroxide required to acetylate OH groups present in one gram of the sample. According to JIS K 1557-1, acetic anhydride is used to acetylate OH groups in the sample and the remaining acetic acid is titrated with a potassium hydroxide solution.

$$Hydroxyl\,value = \frac{(A-B)\times f \times 28.05}{Sample\,(g)} + Acid\,value$$

A: Amount (ml) of a 0.5 mol/l ethanol solution of potassium hydroxide used in the blank test
B: Amount (ml) of 0.5 mol/l ethanol solution of potassium hydroxide used in titration
f: Factor

Method to determine acid value

The acid value is expressed in the number of milligrams of potassium hydroxide required to neutralize the acidic component present in one gram of the sample.
The following is according to JIS K 1557-5:

(1) Determination of endpoint pH

10 mL of a buffer stock solution B is placed in a 200 mL beaker. 100 mL of a titrant is then added and an electrode is immersed in the solution. A pH at which the pH change in 30 seconds becomes 0.1 or smaller is determined to be the buffer endpoint.

(2) Determination of acid value

1. 20 g of the sample is accurately weighed into a 200 mL beaker.

2. 125 mL of a mixed solvent of toluene 2-propanol and pure water is added and the solution is titrated with 0.1 mol/L potassium hydroxide titrant.

According to the results of (1), pH of 11.72 is determined to be the endpoint and the acid value is determined by the equation below. The blank was also determined in the same manner.

$$\text{Acid value (mg KOH/g)} = (D-B) \times K \times F \times M/S$$

where

D = titration value (mL)
B = blank (0.085 mL)
K = molecular weight of KOH (56.1)
F = factor of titrant (1.000)
M = molarity of titrant (0.1 mol/L)
S = amount of collected sample (g)

Component (e): Photocationic polymerization initiator

WPI-113 (50% propylene carbonate): iodonium hexafluoric acid salt (Wako Pure Chemical Industries Ltd.);

Component (f): Ionic liquid

(i) Basionic LQ 01 manufactured by BASF
(1-ethyl-3-methyl-1H-imidazolium ethyl sulfate; an ionic liquid having an ion pair of the above-described (1-2) and (8-3))
(ii) Basionic AC 09 manufactured by BASF
(1-ethyl-3-methyl-imidazolium tetrachloroaluminate; an ionic liquid having an ion pair of the above-described (1-2) and (10-2))
(iii) Basionic VS 01 manufactured by BASF
(1-ethyl-3-methyl-imidazolium thiocyanate, an ionic liquid having an ion pair of the above-described (1-2) and (10-1))
(iv) TMAC-100 manufactured by Lion Akzo Co., Ltd. (tetramethyl ammonium chloride; an ionic liquid having an ion pair of the above-described (5-10) and (7-2))

Component (g-1): Acidic phosphate

(i) ADK STAB AX-71 manufactured by ADEKA Corporation (a mixture of monostearyl phosphoric acid and distearyl phosphoric acid)
(ii) Monolauryl phosphoric acid manufactured by Daihachi Chemical Industry Co., Ltd.

Component (g-2): Carbodiimide compound

CARBODILYTE V-05 manufactured by Nisshinbo Chemical Ltd.; NCO group = 8.2%

Examples 1 to 21 and Comparative Examples 1 to 10

In the respective blending proportions shown in Tables 1 to 9 below, the component (a) and then the component (b) were placed in a container equipped with a stirrer and the mixture was thoroughly stirred at room temperature. Subsequently, the components (c) and (d) were added and the mixture was further stirred. Once the solution reached the room temperature, the component (e) was added and the mixture was thoroughly stirred until no undissolved solid materials remained. This gave a composition. The viscosity (mPa· s) of each composition at 25°C was then measured. Specifically, a portable digital rotary viscometer model TVC-7 (Toki Sangyo Co., Ltd.), along with an appropriate rotor (No. 0 to No. 5) corresponding to the viscosity, was used to measure the viscosity at 25°C. The results are collectively shown in Tables 1 to 9 below.

Each composition was spin-coated (coating thickness = 15 μm to 20 μm) onto each of the specific adherends (B1) (dimension = 150 mm x 25 mm x 1 mm thick) shown in Tables 1 to 9 below. The coating was cured by irradiating with UV light at 500 $mJ/cm^2$ energy in atmosphere to prepare a laminate. When a thermal polymerization initiator was used, 0 to 0.05 parts by mass of 6% naphthene cobalt were added to the composition as desired, and the coating was cured by heating at 100°C for 30 min to prepare a laminate.

The specific adherends (B1) used were as follows:

Hard vinyl chloride resin PVC (trade name RIKEN PVC COMPOUND RE-3844, manufactured by Riken Technos Corp.)
Soft vinyl chloride resin PVC (trade name LEONYL BZL6060N, manufactured by Riken Technos Corp.)
Polystyrene PS (trade name TOYO STYROL GP G100C, manufactured by Toyo Styrene Co., Ltd.)
Polycarbonate PC (trade name PANLITE L-1225L, manufactured by Teijin Chemicals Co., Ltd.)
Acrylonitrile-butadiene-styrene copolymer ABS (trade name UMG ABS EX114, manufactured by UMG Ltd.)
Glass (a glass slide for microscopy preparation)
Aluminum (H5052, Al-Mg based)
Magnesium (AZ31B, manufactured by Osaka Fuji Corporation; 91% or higher Mg content)
Steel plate (SPCC: a cold-rolled steel plate)

PET (UNITIKA POLYESTER MA-2103, manufactured by Unitika Co., Ltd.)
PMMA (ACRYPET VH, manufactured by Mitsubishi Rayon Co., Ltd.)

A grid tape test was conducted on each of the resulting laminates as described below.

(Adhesion test: grid tape test)

According to the grid tape test described in JIS K 5400, measurements were taken in the following manner.
Grid tape test (Cross-cut test; coating thickness = 15 to 20 μm (Spin-coating)): Using a cutter knife, a grid pattern of 1 x 1 mm squares was cut on a test surface (the layer (A) side of the composition). A cutter guide was used. A grid pattern of 10 (vertical) x 10 (horizontal) = 100 squares was cut. A strip of cellophane adhesive tape was placed on the grid pattern and firmly pressed. One end of the tape strip was rapidly peeled off at an angle of 45 ° and the condition of the grid pattern (i.e. the number of squares remaining unpeeled) was visually observed.
The results are collectively shown in Tables 1 to 9 below.

(Test for adhesion between different materials)

The adhesion between different materials was tested by measuring the shear adhesion as described below. The results are shown in Tables below.
Each composition was applied by spin coating (coating thickness = 15 to 20 μm) to a piece of a specific adherend (B1) having a dimension of 150 mm x 1 mm (thickness) x 25 mm (width) to form a layer (A) of the composition. A second specific adherend (B2), shown in Tables below and having the same dimension as the specific adherend (B1), was adhered over the layer (A) and pressed. UV light (wavelength = 325 nm, cumulative irradiation dose = 50 $mJ/cm^2$) was then applied from the side of the transparent layer to cure the composition and, thus, complete a laminate. The specific adherend (B2) was then drawn in a direction parallel to the interface with the composition layer (A) and the tensile strength at break (MPa) was measured.
The results are shown in Tables below. In Tables, each laminate in the form of (B1) - (A) - (B2) is indicated as "(B1) vs (B2) ." For example, when the adherend (B1) is hard PVC and the adherend (B2) is glass, the laminate is indicated as "hard PVC vs glass."

(Test for impact resistance)

Test method: Each composition was applied by spin coating to a 25 mm-wide, 1 mm-thick steel plate to a thickness of 15 to 20 μm. After the coating was cured, a 1 kgw spherical weight was dropped onto the plate from a height of 1 m. Evaluation was made based on the following criteria:

a circle indicates that no peeling was observed;
a triangle indicates that some peeling and cracks were observed; and
a cross indicates that significant peeling and cracks were observed throughout the coating.

(Flexibility)

Test method: Each composition was applied by spin coating to a 25 mm-wide, 1 mm-thick steel plate to a thickness of 15 to 20 μm. After the coating was cured, a 90-degree bending test was conducted. Evaluation was made based on the following criteria:

a circle indicates that no peeling was observed;
a triangle indicates that some peeling and cracks were observed; and
a cross indicates that significant peeling and cracks were observed throughout the coating.

Surface contraction

Test method: Each composition was applied by spin coating to a 25 mm-wide, 1 mm-thick steel plate to a thickness of 15 to 20 μm. The degree of contraction was visually evaluated based on the following criteria:

a circle indicates that the surface was smooth and no contraction was observed; and
a cross indicates that significant surface contraction was observed.

Transparency test

To evaluate transparency, the haze of the articles (glass substrates) of Examples and Comparative Examples was measured using a haze meter (NDH2000, manufactured by Nippon Denshoku Industries Co., Ltd.) according to JIS-K7136: 2000. The haze was evaluated on the following scale: a double circle indicates that the haze was less than 1.0%; a circle indicates that the haze was from 1.0% to less than 2.0%; and a cross indicates that the haze was 2.0% or greater. The measurements were taken on the coated surface.

Surface resistance

Each composition was applied by spin coating to a sample of a polycarbonate (PC) substrate (dimension = 150 mm x 25 mm x 1 mm thickness) (coating thickness = 10 μm). According to ASTM D257, the surface resistivity (Ω/sq.) was measured at an applied voltage of 500 V using HIGH RESTER UP high-resistivity meter (modes MCP-HT450) manufactured by Mitsubishi Chemical Co., Ltd. The resistivity of each sample was determined as the average of the measurements for five substrates (n = 5).

Color development of inkjet ink

Each of the pigments shown below was mixed with a dispersant and 15 parts by mass of this mixture was dispersed into 85 parts by mass of the above-described coating composition. The resulting dispersion was stirred using a fast water-cooled stirrer and was then applied to a polycarbonate substrate by spin coating to a thickness of approximately 30 μm. The substrate was then irradiated with UV light and the color development was evaluated.

Pigment 1: To 80 parts by mass of (f) IRGALITE BLUE GLVO (a cyan pigment manufactured by Ciba Specialty Chemicals (CSC) Co., Ltd.; surface acid level = 18.0; surface base level = 34.0), 20 parts by mass of (g) SOLSPERSE 36000 (a dispersant manufactured by Lubrizol Corporation; acid value = 45 mg KOH/g; amine value = 0 mg KOH/g) were added to obtain Pigment 1. For the preparation of Pigment 1, the materials were placed in a disperser motor mill M50 (Eiger) and dispersed for 4 hours at a circumferential speed of 9 m/s using 0.65 mm zirconia beads.

Pigment 2: To 90 parts by mass of (f) TIPAQUE CR60-2 (a white pigment (titanium oxide) manufactured by Ishihara Sangyo Co., Ltd.; surface acid level = 8; surface base level = 25), 10 parts by mass of (g) SOLSPERSE 36000 (a dispersant manufactured by Lubrizol Corporation; acid value = 45 mg KOH/g; amine value = 0 mg KOH/g) were added to obtain Pigment 2. For the preparation of Pigment 2, the materials were placed in a disperser motor mill M50 (Eiger) and dispersed for 4 hours at a circumferential speed of 9 m/s using 0.65 mm zirconia beads.

The color development was evaluated by visually inspecting printed samples. The color development was evaluated according to the following criteria:

a circle indicates that the color development was acceptable level;
a triangle indicates that the color development was somewhat defective and the sample may not be effective in practical use; and
a cross indicates that the color development was clearly defective and the sample was not suitable for practical use.

Evaluation as primer layer

Coating materials were prepared as in Examples and Comparative Examples above. Each coating material was applied to each of the adherends shown in Tables below to a thickness of approximately 20 μm and was then cured to prepare a laminate. Using spin coating, this laminate was coated with an inkjet ink (UV Ink Cyan (SPC-0371C manufactured by Mimaki Engineering Co., Ltd.; 5% or less Pigment Blue 15, 80 to 90 % acrylic acid ester, and 5 to 15 % other components) or UV Ink Light Cyan (SPC-0371LC-2 manufactured by Mimaki Engineering Co., Ltd.; 1% or less Pigment Blue 15, 80 to 90 % acrylic acid ester, and 10 to 20 % other components)) to a thickness of approximately 30 μm. After the coating was dried, each laminate was subjected to the above-described grid tape test. The results are shown in Tables 1 to 9 below.

Evaluation of long-term storage stability

The long-term storage stability was evaluated as follows: Each coating material was placed in a GOODBOY brown bottle manufactured by As One Co., Ltd.(UV transmittance at 400 nm or shorter range is less than 0.3%; 250 mL

volume), and the bottle was stored in a dark place at 23°C. After 168 hours, the viscosity was measured and evaluated according to the following criteria:

a circle indicates that the increase in viscosity was less than 5 % and the coating has no defects;
a triangle indicates that the increase in viscosity was less than 10 %, but the coating may not be effective in practical use; and
a cross indicates that the viscosity increased by more than 10 % and the coating was not suitable for practical use.

The results are shown in Tables 1 to 9 below.

[Table 1]

| Table 1 | | Ex. 1 | Ex. 2 | Ex. 3 | Ex. 4 |
|---|---|---|---|---|---|
| Components | | | | | |
| (a) Epoxy compound | CELLOXIDE 2021P(Daicel) | 16 | 16 | 16 | 16 |
| (b) Oxetane compound | OXETANE OXT-221 (Toagosei) | 26 | 26 | 26 | 26 |
| (c) Divinyl ether | CHDM (BASF) | 52 | 52 | 52 | 52 |
| (d-1-2) | Polybutadiene-based polyol Poly bd R-15HT | 6 | | | |
| (d-1-1-1) | Aromatic castor oil-based polyol URIC AC-006 | | 6 | | |
| (d-1-3) | Polyisoprene-based polyol Poly ip | | | 6 | |
| (d-2-1) | Castor oil-based polyol URIC H-1262 | | | | 6 |
| (d-2-1) | Castor oil-based polyol URIC H-2151 U | | | | |
| (d-1-3) | Hydroxyl-terminated liquid polyolefin EPOLE | | | | |
| (d-3-1) | Maleic polyisoprene LIR-420 | | | | |
| (d-3-2) | Maleic acid-modified polybutadiene Ricon130MA8 | | | | |
| (d-3-2) | Maleic acid-modified polybutadiene POLYVEST OC | | | | |
| (d-1-4) | Epoxy polyol EPICLON®U-125-60BT | | | | |
| (d-4-1) | Polyepoxy compound ADEKA RESIN EP-4100E | | | | |
| (d-4-2) | L-207 | | | | |
| (e) Initiator | WPI-113(Wako Pure Chemical) | 3.5 | 3.5 | 3.5 | 3.5 |
| | Total | 103.5 | 103.5 | 103.5 | 103.5 |
| (f) (i) | Basionic LQ01 (BASF) | | | | |
| (f) (ii) | Basionic AC09 (BASF) | | | | |
| (f) (iii) | Basionic VS01 (BASF) | | | | |
| (f) (iv) | TMAC-100 (Lion Akzo) | | | | |
| (g-1) (i) | ADK STAB AX-71(ADEKA) | | | | |
| (g-1) (ii) | Monolauryl phosphoric acid(Daihachi Chemical) | | | | |

(continued)

| Table 1 | | Ex. 1 | Ex. 2 | Ex. 3 | Ex. 4 |
|---|---|---|---|---|---|
| Components | | | | | |
| (g-2) | CARBODILYTE V-05(Nisshinbo Chemical) | | | | |
| Results | Viscosity mPa.s(25°C) | 350 | 500 | 700 | 460 |
| Grid tape test | Hard PVC | 100 | 100 | 100 | 100 |
| | Soft PVC | 100 | 100 | 100 | 100 |
| | PS | 100 | 100 | 100 | 100 |
| | PC | 100 | 100 | 100 | 100 |
| | ABS | 95 | 95 | 88 | 89 |
| | glass | 84 | 86 | 83 | 80 |
| | aluminum | 99 | 98 | 100 | 90 |
| | magnesium | 88 | 80 | 80 | 88 |
| | steel plate | 92 | 96 | 93 | 100 |
| | PET | 100 | 100 | 100 | 100 |
| | PMMA | 100 | 100 | 100 | 100 |
| Test for adhesion of different materials (B1)-(A)-(B2) MPa | Hard PVC vs glass | 7.4 | 5.7 | 6.6 | 7.3 |
| | Soft PVC vs glass | 5.7 | 6.8 | 5.6 | 6.9 |
| | PS vs aluminum | 7.6 | 7.8 | 6.5 | 6.9 |
| | PC vs aluminum | 7.1 | 8 | 7 | 7.9 |
| | ABS vs glass | 7.3 | 5.8 | 5.5 | 5.6 |
| | glass vs aluminum | 5.5 | 5.6 | 6.1 | 6.8 |
| | magnesium vs PC | 7.6 | 7.3 | 7.3 | 8.2 |
| | steel plate vs PMMA | 8.4 | 8.4 | 7.9 | 7 |
| | PET vs ABS | 6.9 | 6.8 | 6.8 | 6.8 |
| | PMMA vs ABS | 7.7 | 7.1 | 7.8 | 6.5 |
| Impact resistance | | O | O | O | O |
| Flexibility | | O | O | O | O |
| Contraction | | O | O | O | O |
| Transparency | | O | O | O | O |
| Surface resistivity | | $10^{15}$ | $10^{15}$ | $10^{15}$ | $10^{15}$ |
| Color development (1) | Pigment 1 | O | O | O | O |
| Color development (2) | Pigment 2 | O | O | O | O |
| Primer evaluation (1) | UV Ink Cyan | 100 | 100 | 100 | 100 |
| Primer evaluation (2) | UV Ink Light Cyan | 100 | 100 | 100 | 100 |
| Long storage stability | | O | O | O | O |

[Table 2]

| Table 2 | | Ex. 5 | Ex. 6 | Ex. 7 | Ex. 8 |
|---|---|---|---|---|---|
| Components | | | | | |
| (a) Epoxy compound | CELLOXIDE 2021 P(Daicel) | 16 | 16 | 16 | 16 |
| (b) Oxetane compound | OXETANE OXT-221(Toagosei) | 26 | 26 | 26 | 26 |
| (c) Divinyl ether | CHDM(BASF) | 52 | 52 | 52 | 52 |
| (d-1-2) | Polybutadiene-based polyol Poly bd R-15HT | | | | |
| (d-1-1-1) | Aromatic castor oil-based polyol URIC AC-006 | | | | |
| (d-1-3) | Polyisoprene-based polyol Poly ip | | | | |
| (d-2-1) | Castor oil-based polyol URIC H-1262 | | | | |
| (d-2-1) | Castor oil-based polyol URIC H-2151 U | 6 | | | |
| (d-1-3) | Hydroxyl-terminated liquid polyolefin EPOLE | | 6 | | |
| (d-3-1) | Maleic polyisoprene LIR-420 | | | 6 | |
| (d-3-2) | Maleic acid-modified polybutadiene Ricon130MA8 | | | | 6 |
| (d-3-2) | Maleic acid-modified polybutadiene POLYVEST OC 800S | | | | |
| (d-1-4) | Epoxy polyol EPICLON®U-125-60BT | | | | |
| (d-4-1) | Polyepoxy compound ADEKA RESIN EP-4100E | | | | |
| (d-4-2) | L-207 | | | | |
| (e) Initiator | WPI-113(Wako Pure Chemical) | 3.5 | 3.5 | 3.5 | 3.5 |
| | Total | 103.5 | 103.5 | 103.5 | 103.5 |
| (f) (i) | Basionic LQ01 (BASF) | | | | |
| (f) (ii) | Basionic AC09 (BASF) | | | | |
| (f) (iii) | Basionic VS01 (BASF) | | | | |
| (f) (iv) | TMAC-100 (Lion Akzo) | | | | |
| (g-1) (i) | ADK STAB AX-71(ADEKA) | | | | |
| (g-1) (ii) | Monolauryl phosphoric acid (Daihachi Chemical) | | | | |
| (g-2) | CARBODILYTE V-05(Nisshinbo Chemical) | | | | |
| Results | Viscosity mPa.s(25°C) | 490 | 3850 | 2680 | 650 |

(continued)

| Table 2 | | Ex. 5 | Ex. 6 | Ex. 7 | Ex. 8 |
|---|---|---|---|---|---|
| Components | | | | | |
| Grid tape test | Hard PVC | 100 | 100 | 100 | 100 |
| | Soft PVC | 100 | 100 | 100 | 100 |
| | PS | 100 | 100 | 100 | 100 |
| | PC | 100 | 100 | 100 | 100 |
| | ABS | 95 | 88 | 89 | 91 |
| | glass | 86 | 89 | 80 | 89 |
| | aluminum | 100 | 92 | 90 | 90 |
| | magnesium | 80 | 85 | 88 | 80 |
| | steel plate | 97 | 91 | 97 | 93 |
| | PET | 100 | 100 | 100 | 100 |
| | PMMA | 100 | 100 | 100 | 100 |
| Test for adhesion of different materials (B1)-(A)-(B2) MPa | Hard PVC vs glass | 5.6 | 6.2 | 6.1 | 6.9 |
| | Soft PVC vs glass | 5.7 | 7 | 6.8 | 5.7 |
| | PS vs aluminum | 7.1 | 7.1 | 8.4 | 7.1 |
| | PC vs aluminum | 7.3 | 6.8 | 6.7 | 6.5 |
| | ABS vs glass | 6 | 7.3 | 5.5 | 7 |
| | glass vs aluminum | 5.7 | 6 | 5.6 | 6.4 |
| | magnesium vs PC | 7.5 | 7.6 | 7.2 | 6.8 |
| | steel plate vs PMMA | 8.1 | 7.1 | 7 | 7.8 |
| | PET vs ABS | 6.5 | 8.3 | 7 | 7.4 |
| | PMMA vs ABS | 8.2 | 8.5 | 8 | 6.5 |
| Impact resistance | | O | O | O | O |
| Flexibility | | O | O | O | O |
| Contraction | | O | O | O | O |
| Transparency | | O | O | O | O |
| Surface resistivity | | $10^{15}$ | $10^{15}$ | $10^{15}$ | $10^{15}$ |
| Color development (1) | Pigment 1 | O | O | O | O |
| Color development (2) | Pigment 2 | O | O | O | O |
| Primer evaluation (1) | UV Ink Cyan | 100 | 100 | 100 | 100 |
| Primer evaluation (2) | UV Ink Light Cyan | 100 | 100 | 100 | 100 |
| Long storage stability | | O | O | O | O |

[Table 3]

| Table 3 | | Ex. 9 | Ex. 10 | Ex. 11 | Ex. 12 |
|---|---|---|---|---|---|
| Components | | | | | |
| (a) Epoxy compound | CELLOXIDE 2021 P(Daicel) | 16 | 16 | 16 | 16 |

(continued)

| Table 3 | | Ex. 9 | Ex. 10 | Ex. 11 | Ex. 12 |
|---|---|---|---|---|---|
| Components | | | | | |
| (b) Oxetane compound | OXETANE OXT-221(Toagosei) | 26 | 26 | 26 | 26 |
| (c) Divinyl ether | CHDM(BASF) | 52 | 52 | 52 | 52 |
| (d-1-2) | Polybutadiene-based polyol Poly bd R-15HT | | | | |
| (d-1-1-1) | Aromatic castor oil-based polyol URIC AC-006 | | | | |
| (d-1-3) | Polyisoprene-based polyol Poly ip | | | | |
| (d-2-1) | Castor oil-based polyol URIC H-1262 | | | | |
| (d-2-1) | Castor oil-based polyol URIC H-2151 U | | | | |
| (d-1-3) | Hydroxyl-terminated liquid polyolefin EPOLE | | | | |
| (d-3-1) | Maleic polyisoprene LIR-420 | | | | |
| (d-3-2) | Maleic acid-modified polybutadiene Ricon130MA8 | | | | |
| (d-3-2) | Maleic acid-modified polybutadiene POLYVEST OC 800S | 6 | | | |
| (d-1-4) | Epoxy polyol EPICLON®U-125-60BT | | 6 | | |
| (d-4-1) | Polyepoxy compound ADEKA RESIN EP-4100E | | | 6 | |
| (d-4-2) | L-207 | | | | 6 |
| (e) Initiator | WPI-113(Wako Pure Chemical) | 3.5 | 3.5 | 3.5 | 3.5 |
| | Total | 103.5 | 103.5 | 103.5 | 103.5 |
| (f) (i) | Basionic LQ01 (BASF) | | | | |
| (f) (ii) | Basionic AC09 (BASF) | | | | |
| (f) (iii) | Basionic VS01 (BASF) | | | | |
| (f) (iv) | TMAC-100 (Lion Akzo) | | | | |
| (g-1) (i) | ADK STAB AX-71(ADEKA) | | | | |
| (g-1) (ii) | Monolauryl phosphoric acid (Daihachi Chemical) | | | | |
| (g-2) | CARBODILYTE V-05(Nisshinbo Chemical) | | | | |
| Results | Viscosity mPa.s(25°C) | 630 | 3620 | 3150 | 1750 |

(continued)

| Table 3 | | Ex. 9 | Ex. 10 | Ex. 11 | Ex. 12 |
|---|---|---|---|---|---|
| Components | | | | | |
| Grid tape test | Hard PVC | 100 | 100 | 100 | 100 |
| | Soft PVC | 100 | 100 | 100 | 100 |
| | PS | 100 | 100 | 100 | 100 |
| | PC | 100 | 100 | 100 | 100 |
| | ABS | 88 | 90 | 94 | 91 |
| | glass | 85 | 89 | 88 | 90 |
| | aluminum | 99 | 100 | 99 | 94 |
| | magnesium | 80 | 89 | 82 | 82 |
| | steel plate | 93 | 96 | 92 | 93 |
| | PET | 100 | 100 | 100 | 100 |
| | PMMA | 100 | 100 | 100 | 100 |
| Test for adhesion of different materials (B1)-(A)-(B2) MPa | Hard PVC vs glass | 6.3 | 5.5 | 6.4 | 7.1 |
| | Soft PVC vs glass | 6.9 | 6.3 | 6.5 | 7.1 |
| | PS vs aluminum | 8.1 | 6.6 | 7.7 | 7.5 |
| | PC vs aluminum | 7.7 | 7.8 | 7.8 | 7.3 |
| | ABS vs glass | 6.4 | 5.8 | 7.3 | 5.9 |
| | glass vs aluminum | 7.5 | 6.3 | 6.7 | 7.4 |
| | magnesium vs PC | 7 | 7.1 | 8.5 | 7.9 |
| | steel plate vs PMMA | 7.5 | 6.5 | 6.6 | 7 |
| | PET vs ABS | 7.3 | 7.9 | 6.7 | 7.9 |
| | PMMA vs ABS | 7.5 | 7.4 | 7.1 | 7.1 |
| Impact resistance | | O | O | O | O |
| Flexibility | | O | O | O | O |
| Contraction | | O | O | O | O |
| Transparency | | O | O | O | O |
| Surface resistivity | | $10^{15}$ | $10^{15}$ | $10^{15}$ | $10^{15}$ |
| Color development (1) | Pigment 1 | O | O | O | O |
| Color development (2) | Pigment 2 | O | O | O | O |
| Primer evaluation (1) | UV Ink Cyan | 100 | 100 | 100 | 100 |
| Primer evaluation (2) | UV Ink Light Cyan | 100 | 100 | 100 | 100 |
| Long storage stability | | O | O | O | O |

[Table 4]

| Table 4 | | Ex. 13 | Ex. 14 | Ex. 15 | Ex. 16 |
|---|---|---|---|---|---|
| Components | | | | | |
| (a) Epoxy compound | CELLOXIDE 2021 P(Daicel) | 16 | 16 | 16 | 16 |

(continued)

| Table 4 | | Ex. 13 | Ex. 14 | Ex. 15 | Ex. 16 |
|---|---|---|---|---|---|
| Components | | | | | |
| (b) Oxetane compound | OXETANE OXT-221(Toagosei) | 26 | 26 | 26 | 26 |
| (c) Divinyl ether | CHDM(BASF) | 52 | 52 | 52 | 52 |
| (d-1-2) | Polybutadiene-based polyol Poly bd R-15HT | | | | |
| (d-1-1-1) | Aromatic castor oil-based polyol URIC AC-006 | 6 | 6 | 6 | 6 |
| (d-1-3) | Polyisoprene-based polyol Poly ip | | | | |
| (d-2-1) | Castor oil-based polyol URIC H-1262 | | | | |
| (d-2-1) | Castor oil-based polyol URIC H-2151 U | | | | |
| (d-1-3) | Hydroxyl-terminated liquid polyolefin EPOLE | | | | |
| (d-3-1) | Maleic polyisoprene LIR-420 | | | | |
| (d-3-2) | Maleic acid-modified polybutadiene Ricon130MA8 | | | | |
| (d-3-2) | Maleic acid-modified polybutadiene POLYVEST OC 800S | | | | |
| (d-1-4) | Epoxy polyol EPICLON®U-125-60BT | | | | |
| (d-4-1) | Polyepoxy compound ADEKA RESIN EP-4100E | | | | |
| (d-4-2) | L-207 | | | | |
| (e) Initiator | WPI-113(Wako Pure Chemical) | 3.5 | 3.5 | 3.5 | 3.5 |
| | Total | 103.5 | 103.5 | 103.5 | 103.5 |
| (f) (i) | Basionic LQ01 (BASF) | 3.5 | 5 | 7.5 | |
| (f) (ii) | Basionic AC09 (BASF) | | | | 3.5 |
| (f) (iii) | Basionic VS01 (BASF) | | | | |
| (f) (iv) | TMAC-100 (Lion Akzo) | | | | |
| (g-1) (i) | ADK STAB AX-71(ADEKA) | | | | |
| (g-1) (ii) | Monolauryl phosphoric acid (Daihachi Chemical) | | | | |
| (g-2) | CARBODILYTE V-05(Nisshinbo Chemical) | | | | |
| Results | Viscosity mPa.s(25°C) | 480 | 450 | 430 | 480 |

(continued)

| Table 4 | | Ex. 13 | Ex. 14 | Ex. 15 | Ex. 16 |
|---|---|---|---|---|---|
| Components | | | | | |
| Grid tape test | Hard PVC | 100 | 100 | 100 | 100 |
| | Soft PVC | 100 | 100 | 100 | 100 |
| | PS | 100 | 100 | 100 | 100 |
| | PC | 100 | 100 | 100 | 100 |
| | ABS | 95 | 93 | 95 | 94 |
| | glass | 87 | 86 | 85 | 84 |
| | aluminum | 98 | 98 | 98 | 98 |
| | magnesium | 78 | 81 | 78 | 80 |
| | steel plate | 94 | 97 | 97 | 96 |
| | PET | 100 | 100 | 100 | 100 |
| | PMMA | 100 | 100 | 100 | 100 |
| Test for adhesion of different materials (B1)-(A)-(B2) MPa | Hard PVC vs glass | 4.8 | 5.7 | 5.7 | 5.4 |
| | Soft PVC vs glass | 6.2 | 5.9 | 6.5 | 6.5 |
| | PS vs aluminum | 6.9 | 7.8 | 7.5 | 6.9 |
| | PC vs aluminum | 7.4 | 7.7 | 7.4 | 8 |
| | ABS vs glass | 5.5 | 5.2 | 5.2 | 5.5 |
| | glass vs aluminum | 5 | 4.7 | 4.7 | 4.7 |
| | magnesium vs PC | 6.7 | 7 | 6.4 | 6.7 |
| | steel plate vs PMMA | 8.4 | 7.5 | 8.1 | 8.4 |
| | PET vs ABS | 5.9 | 6.2 | 6.2 | 5.9 |
| | PMMA vs ABS | 6.2 | 6.2 | 7.1 | 6.2 |
| Impact resistance | | O | O | O | O |
| Flexibility | | O | O | O | O |
| Contraction | | O | O | O | O |
| Transparency | | O | O | O | O |
| Surface resistivity | | $10^9$ | $10^8$ | $10^7$ | $10^9$ |
| Color development (1) | Pigment 1 | O | O | O | O |
| Color development (2) | Pigment 2 | O | O | O | O |
| Primer evaluation (1) | UV Ink Cyan | 100 | 100 | 100 | 100 |
| Primer evaluation (2) | UV Ink Light Cyan | 100 | 100 | 100 | 100 |
| Long storage stability | | O | O | O | O |

[Table 5]

| Table 5 | | Ex. 17 | Ex. 18 | Ex. 19 | Ex. 20 |
|---|---|---|---|---|---|
| Components | | | | | |
| (a) Epoxy compound | CELLOXIDE 2021 P(Daicel) | 16 | 16 | 16 | 16 |

(continued)

| Table 5 | | Ex. 17 | Ex. 18 | Ex. 19 | Ex. 20 |
|---|---|---|---|---|---|
| Components | | | | | |
| (b) Oxetane compound | OXETANE OXT-221(Toagosei) | 26 | 26 | 26 | 26 |
| (c) Divinyl ether | CHDM(BASF) | 52 | 52 | 52 | 52 |
| (d-1-2) | Polybutadiene-based polyol Poly bd R-15HT | | | | |
| (d-1-1-1) | Aromatic castor oil-based polyol URIC AC-006 | 6 | 6 | 6 | 6 |
| (d-1-3) | Polyisoprene-based polyol Poly ip | | | | |
| (d-2-1) | Castor oil-based polyol URIC H-1262 | | | | |
| (d-2-1) | Castor oil-based polyol URIC H-2151 U | | | | |
| (d-1-3) | Hydroxyl-terminated liquid polyolefin EPOLE | | | | |
| (d-3-1) | Maleic polyisoprene LIR-420 | | | | |
| (d-3-2) | Maleic acid-modified polybutadiene Ricon130MA8 | | | | |
| (d-3-2) | Maleic acid-modified polybutadiene POLYVEST OC 800S | | | | |
| (d-1-4) | Epoxy polyol EPICLON®U-125-60BT | | | | |
| (d-4-1) | Polyepoxy compound ADEKA RESIN EP-4100E | | | | |
| (d-4-2) | L-207 | | | | |
| (e) Initiator | WPI-113(Wako Pure Chemical) | 3.5 | 3.5 | 3.5 | 3.5 |
| | Total | 103.5 | 103.5 | 103.5 | 103.5 |
| (f) (i) | Basionic LQ01 (BASF) | | | 3.5 | 3.5 |
| (f) (ii) | Basionic AC09 (BASF) | | | | |
| (f) (iii) | Basionic VS01 (BASF) | 3.5 | | | |
| (f) (iv) | TMAC-100 (Lion Akzo) | | 3.5 | | |
| (g-1) (i) | ADK STAB AX-71(ADEKA) | | | 0.2 | |
| (g-1) (ii) | Monolauryl phosphoric acid (Daihachi Chemical) | | | | |
| (g-2) | CARBODILYTE V-05(Nisshinbo Chemical) | | | | 0.2 |
| Results | Viscosity mPa.s(25°C) | 480 | 500 | 500 | 500 |

(continued)

| Table 5 | | Ex. 17 | Ex. 18 | Ex. 19 | Ex. 20 |
|---|---|---|---|---|---|
| Components | | | | | |
| Grid tape test | Hard PVC | 100 | 100 | 100 | 100 |
| | Soft PVC | 100 | 100 | 100 | 100 |
| | PS | 100 | 100 | 100 | 100 |
| | PC | 100 | 100 | 100 | 100 |
| | ABS | 94 | 94 | 95 | 96 |
| | glass | 86 | 85 | 86 | 85 |
| | aluminum | 99 | 97 | 99 | 96 |
| | magnesium | 79 | 79 | 80 | 78 |
| | steel plate | 97 | 95 | 94 | 95 |
| | PET | 100 | 100 | 100 | 100 |
| | PMMA | 100 | 100 | 100 | 100 |
| Test for adhesion of different materials (B1)-(A)-(B2) MPa | Hard PVC vs glass | 5.7 | 4.8 | 4.8 | 5.4 |
| | Soft PVC vs glass | 6.5 | 6.8 | 5.9 | 6.8 |
| | PS vs aluminum | 7.5 | 7.5 | 7.5 | 7.5 |
| | PC vs aluminum | 8 | 7.1 | 7.4 | 7.1 |
| | ABS vs glass | 5.5 | 5.5 | 5.5 | 5.8 |
| | glass vs aluminum | 4.7 | 4.7 | 4.7 | 5.3 |
| | magnesium vs PC | 7.3 | 6.4 | 6.7 | 7.3 |
| | steel plate vs PMMA | 7.5 | 8.4 | 8.4 | 8.4 |
| | PET vs ABS | 6.5 | 6.2 | 5.9 | 6.2 |
| | PMMA vs ABS | 6.5 | 6.8 | 6.2 | 6.2 |
| Impact resistance | | O | O | O | O |
| Flexibility | | O | O | O | O |
| Contraction | | O | O | O | O |
| Transparency | | O | O | O | O |
| Surface resistivity | | $10^9$ | $10^{10}$ | $10^9$ | $10^8$ |
| Color development (1) | Pigment 1 | O | O | O | O |
| Color development (2) | Pigment 2 | O | O | O | O |
| Primer evaluation (1) | UV Ink Cyan | 100 | 100 | 100 | 100 |
| Primer evaluation (2) | UV Ink Light Cyan | 100 | 100 | 100 | 100 |
| Long storage stability | | O | O | O | O |

[Table 6]

| Table 6 | | Example 21 |
|---|---|---|
| Components | | |
| (a) Epoxy compound | CELLOXIDE 2021P(Daicel) | 16 |

(continued)

| Table 6 | | Example 21 |
|---|---|---|
| Components | | |
| (b) Oxetane compound | OXETANE OXT-221 (Toagosei) | 26 |
| (c) Divinyl ether | CHDM(BASF) | 52 |
| (d-1-2) | Polybutadiene-based polyol Poly bd R-15HT | |
| (d-1-1-1) | Aromatic castor oil-based polyol URIC AC-006 | 6 |
| (d-1-3) | Polyisoprene-based polyol Poly ip | |
| (d-2-1) | Castor oil-based polyol URIC H-1262 | |
| (d-2-1) | Castor oil-based polyol URIC H-2151U | |
| (d-1-3) | Hydroxyl-terminated liquid polyolefin EPOLE | |
| (d-3-1) | Maleic polyisoprene LIR-420 | |
| (d-3-2) | Maleic acid-modified polybutadiene Ricon130MA8 | |
| (d-3-2) | Maleic acid-modified polybutadiene POLYVEST OC 800S | |
| (d-1-4) | Epoxy polyol EPICLON®U-125-60BT | |
| (d-4-1) | Polyepoxy compound ADEKA RESIN EP-4100E | |
| (d-4-2) | L-207 | |
| (e) Initiator | WPI-113(Wako Pure Chemical) | 3.5 |
| | Total | 103.5 |
| (f) (i) | Basionic LQ01 (BASF) | 3.5 |
| (f) (ii) | Basionic AC09 (BASF) | |
| (f) (iii) | Basionic VS01 (BASF) | |
| (f) (iv) | TMAC-100 (Lion Akzo) | |
| (g-1) (i) | ADK STAB AX-71(ADEKA) | |
| (g-1) (ii) | Monolaurvl phosphoric acid(Daihachi Chemical) | 0.2 |
| (g-2) | CARBODILYTE V-05(Nisshinbo Chemical | |
| Results | Viscosity mPa.s(25°C) | 500 |
| Grid tape test | Hard PVC | 100 |
| | Soft PVC | 100 |
| | PS | 100 |
| | PC | 100 |
| | ABS | 93 |
| | glass | 87 |
| | aluminum | 98 |
| | magnesium | 82 |
| | steel plate | 95 |
| | PET | 100 |
| | PMMA | 100 |

(continued)

| Table 6 | | Example 21 |
|---|---|---|
| Components | | |
| Test for adhesion of different materials (B1)-(A)-(B2) MPa | Hard PVC vs glass | 5 |
| | Soft PVC vs glass | 9 |
| | PS vs aluminum | 7.3 |
| | PC vs aluminum | 7.2 |
| | ABS vs glass | 5.3 |
| | glass vs aluminum | 4.5 |
| | magnesium vs PC | 6.5 |
| | steel plate vs PMMA | 8.3 |
| | PET vs ABS | 5.7 |
| | PMMA vs ABS | 6.1 |
| Impact resistance | | O |
| Flexibility | | O |
| Contraction | | O |
| Transparency | | O |
| Surface resistivity | | $10^9$ |
| Color development (1) | Pigment 1 | O |
| Color development (2) | Pigment 2 | O |
| Primer evaluation (1) | UV Ink Cyan | 100 |
| Primer evaluation (2) | UV Ink Light Cyan | 100 |
| Long storage stability | | O |

[Table 7]

| Table 7 | | Comp. Ex. 1 | Comp. Ex. 2 | Comp. Ex. 3 | Comp. Ex. 4 |
|---|---|---|---|---|---|
| Components | | | | | |
| (a) Epoxy compound | CELLOXIDE 2021 P (Daicel) | 17 | 13 | 5 | 36 |
| (b) Oxetane compound | OXETANE OXT-221 (Toagosei) | 28 | 23 | 29 | 20 |
| (c) Divinyl ether | CHDM (BASF) | 55 | 46 | 58 | 39 |
| (d-1-2) | Polybutadiene-based polyol Poly bd R-15HT | | | | |
| (d-1-1-1) | Aromatic castor oil-based polyol URIC AC-006 | | 18 | 8 | 5 |
| (d-1-3) | Polyisoprene-based polyol Poly ip | | | | |
| (d-2-1) | Castor oil-based polyol URIC H-1262 | | | | |

(continued)

| Table 7 | | Comp. Ex. 1 | Comp. Ex. 2 | Comp. Ex. 3 | Comp. Ex. 4 |
|---|---|---|---|---|---|
| Components | | | | | |
| (d-2-1) | Castor oil-based polyol URIC H-2151 U | | | | |
| (d-1-3) | Hydroxyl-terminated liquid polyolefin EPOLE | | | | |
| (d-3-1) | Maleic polyisoprene LIR-420 | | | | |
| (d-3-2) | Maleic acid-modified polybutadiene Ricon130MA8 | | | | |
| (d-3-2) | Maleic acid-modified polybutadiene POLYVEST OC 800S | | | | |
| (d-1-4) | Epoxy polyol EPICLON®U-125-60BT | | | | |
| (d-4-1) | Polyepoxy compound ADEKA RESIN EP-4100E | | | | |
| (d-4-2) | L-207 | | | | |
| (e) Initiator | WPI-113(Wako Pure Chemical) | 3.5 | 3.5 | 3.5 | 3.5 |
| | Total | 103.5 | 103.5 | 103.5 | 103.5 |
| Results | Viscosity mPa.s(25°C) | 250 | 1250 | 400 | 380 |
| Grid tape test | Hard PVC | 21 | 22 | 21 | 23 |
| | Soft PVC | 24 | 38 | 27 | 39 |
| | PS | 31 | 29 | 26 | 32 |
| | PC | 26 | 31 | 26 | 20 |
| | ABS | 29 | 40 | 38 | 25 |
| | glass | 40 | 30 | 20 | 35 |
| | aluminum | 27 | 22 | 21 | 27 |
| | magnesium | 25 | 31 | 27 | 32 |
| | steel plate | 31 | 33 | 38 | 29 |
| | PET | 28 | 32 | 36 | 39 |
| | PMMA | 33 | 22 | 25 | 23 |

(continued)

| Table 7 | | Comp. Ex. 1 | Comp. Ex. 2 | Comp. Ex. 3 | Comp. Ex. 4 |
|---|---|---|---|---|---|
| Components | | | | | |
| Test for adhesion of different materials (B1)-(A)-(B2) MPa | Hard PVC vs glass | 3.4 | 2.7 | 2.3 | 3.5 |
| | Soft PVC vs glass | 2.9 | 2.6 | 2.4 | 3.4 |
| | PS vs aluminum | 2.5 | 4.2 | 4.3 | 2.8 |
| | PC vs aluminum | 3.4 | 4.4 | 2.5 | 4.2 |
| | ABS vs glass | 3.1 | 1.7 | 2.7 | 3.5 |
| | glass vs aluminum | 2.1 | 2.9 | 2.8 | 2.5 |
| | magnesium vs PC | 4.1 | 3.8 | 4.3 | 2.7 |
| | steel plate vs PMMA | 2.7 | 4.4 | 2.9 | 3.1 |
| | PET vs ABS | 3.6 | 3 | 3.3 | 3.3 |
| | PMMA vs ABS | 3.1 | 4.5 | 3 | 3.3 |
| Impact resistance | | × | O | Δ | Δ |
| Flexibility | | × | O | Δ | Δ |
| Surface contraction | | Δ | O | × | × |
| Transparency | | O | × | × | × |
| Surface resistivity | | $10^{15}$ | $10^{15}$ | $10^{15}$ | $10^{15}$ |
| Color development (1) | Pigment 1 | Δ | O | × | × |
| Color development (2) | Pigment 2 | Δ | O | × | × |
| Primer evaluation (1) | UV Ink Cyan | 50 | 80 | $10^{15}$ | 5 |
| Primer evaluation (2) | UV Ink Light Cyan | 50 | 85 | 15 | 5 |
| Long storage stability | | Δ | × | × | × |

[Table 8]

| Table 8 | | Comp. Ex. 5 | Comp. Ex. 6 | Comp. Ex. 7 | Comp. Ex. 8 |
|---|---|---|---|---|---|
| Components | | | | | |
| (a) Epoxy compound | CELLOXIDE 2021 P (Daicel) | 17 | 9 | 25 | 13 |
| (b) Oxetane compound | OXETANE OXT-221 (Toagosei) | 21 | 62 | 42 | 20 |
| (c) Divinyl ether | CHDM (BASF) | 55 | 26 | 21 | 62 |
| (d-1-2) | Polybutadiene-based polyol Poly bd R-15HT | | | | |
| (d-1-1-1) | Aromatic castor oil-based polyol URIC AC-006 | 7 | 3 | 12 | 5 |
| (d-1-3) | Polyisoprene-based polyol Poly ip | | | | |
| (d-2-1) | Castor oil-based polyol URIC H-1262 | | | | |

(continued)

| Table 8 | | Comp. Ex. 5 | Comp. Ex. 6 | Comp. Ex. 7 | Comp. Ex. 8 |
|---|---|---|---|---|---|
| Components | | | | | |
| (d-2-1) | Castor oil-based polyol URIC H-2151 U | | | | |
| (d-1-3) | Hydroxyl-terminated liquid polyolefin EPOLE | | | | |
| (d-3-1) | Maleic polyisoprene LIR-420 | | | | |
| (d-3-2) | Maleic acid-modified polybutadiene Ricon130MA8 | | | | |
| (d-3-2) | Maleic acid-modified polybutadiene POLYVEST OC 800S | | | | |
| (d-1-4) | Epoxy polyol EPICLON®U-125-60BT | | | | |
| (d-4-1) | Polyepoxy compound ADEKA RESIN EP-4100E | | | | |
| (d-4-2) | L-207 | | | | |
| (e) Initiator | WPI-113(Wako Pure Chemical) | 3.5 | 3.5 | 3.5 | 3.5 |
| | Total | 103.5 | 103.5 | 103.5 | 103.5 |
| Results | Viscosity mPa.s(25°C) | 390 | 350 | 650 | 300 |
| Grid tape test | Hard PVC | 22 | 31 | 37 | 34 |
| | Soft PVC | 40 | 31 | 20 | 28 |
| | PS | 25 | 36 | 36 | 32 |
| | PC | 21 | 33 | 29 | 37 |
| | ABS | 40 | 36 | 30 | 27 |
| | glass | 20 | 32 | 20 | 33 |
| | aluminum | 40 | 35 | 40 | 35 |
| | magnesium | 28 | 35 | 38 | 24 |
| | steel plate | 32 | 37 | 40 | 34 |
| | PET | 39 | 23 | 30 | 32 |
| | PMMA | 25 | 30 | 26 | 39 |

(continued)

| Table 8 | | Comp. Ex. 5 | Comp. Ex. 6 | Comp. Ex. 7 | Comp. Ex. 8 |
|---|---|---|---|---|---|
| Components | | | | | |
| Test for adhesion of different materials (B1)-(A)-(B2) MPa | Hard PVC vs glass | 1.9 | 2 | 3 | 2.9 |
| | Soft PVC vs glass | 3.3 | 2.9 | 1.8 | 1.5 |
| | PS vs aluminum | 2.6 | 3.4 | 4.4 | 2.5 |
| | PC vs aluminum | 3.5 | 4.3 | 3.5 | 3.5 |
| | ABS vs glass | 2.9 | 1.5 | 1.7 | 1.5 |
| | glass vs aluminum | 2.4 | 3.3 | 2 | 2.7 |
| | magnesium vs PC | 4.5 | 3.1 | 3.3 | 3.6 |
| | steel plate vs PMMA | 3.2 | 2.7 | 4.2 | 4.4 |
| | PET vs ABS | 4.5 | 3.4 | 3.4 | 3.6 |
| | PMMA vs ABS | 3 | 4.1 | 3.1 | 3.4 |
| Impact resistance | | Δ | Δ | Δ | Δ |
| Flexibility | | Δ | Δ | Δ | Δ |
| Surface contraction | | × | × | × | × |
| Transparency | | × | × | × | × |
| Surface resistivity | | $10^{15}$ | $10^{15}$ | $10^{15}$ | $10^{15}$ |
| Color development (1) | Pigment 1 | × | × | × | × |
| Color development (2) | Pigment 2 | × | × | × | × |
| Primer evaluation (1) | UV Ink Cyan | 8 | 5 | 12 | 15 |
| Primer evaluation (2) | UV Ink Light Cyan | 15 | 9 | 13 | 6 |
| Long storage stability | | × | × | × | × |

[Table 9]

| Table 9 | | Comp. Ex. 9 | Comp. Ex. 10 |
|---|---|---|---|
| Components | | | |
| (a) Epoxy compound | CELLOXIDE 2021P(Daicel) | 15 | 14 |
| (b) Oxetane compound | OXETANE OXT-221(Toagosei) | 26 | 26 |
| (c) Divinyl ether | CHDM(BASF) | 52 | 54 |
| (d-1-2) | Polybutadiene-based polyol Poly bd R-15HT | | |
| (d-1-1-1) | Aromatic castor oil-based polyol URIC AC-006 | 7 | 6 |
| (d-1-3) | Polyisoprene-based polyol Poly ip | | |
| (d-2-1) | Castor oil-based polyol URIC H-1262 | | |
| (d-2-1) | Castor oil-based polyol URIC H-2151 U | | |
| (d-1-3) | Hydroxyl-terminated liquid polyolefin EPOLE | | |
| (d-3-1) | Maleic polyisoprene LIR-420 | | |

(continued)

| Table 9 | | Comp. Ex. 9 | Comp. Ex. 10 |
|---|---|---|---|
| Components | | | |
| (d-3-2) | Maleic acid-modified polybutadiene Ricon130MA8 | | |
| (d-3-2) | Maleic acid-modified polybutadiene POLYVEST OC 800S | | |
| (d-1-4) | Epoxy polyol EPICLON®U-125-60BT | | |
| (d-4-1) | Polyepoxy compound ADEKA RESIN EP-4100E | | |
| (d-4-2) | L-207 | | |
| (e) Initiator | WPI-113(Wako Pure Chemical) | 0 | 20 |
| | Total | - | 120 |
| Results | Viscosity mPa.s(25°C) | - | 280 |
| Grid tape test | Hard PVC | - | 40 |
| | Soft PVC | - | 35 |
| | PS | - | 29 |
| | PC | - | 35 |
| | ABS | - | 37 |
| | glass | - | 32 |
| | aluminum | - | 25 |
| | magnesium | - | 26 |
| | steel plate | - | 39 |
| | PET | - | 29 |
| | PMMA | - | 37 |
| Test for adhesion of different materials (B1)-(A)-(B2) MPa | Hard PVC vs glass | - | 3.4 |
| | Soft PVC vs glass | - | 3 |
| | PS vs aluminum | - | 3.9 |
| | PC vs aluminum | - | 3.4 |
| | ABS vs glass | - | 3.3 |
| | glass vs aluminum | - | 2.9 |
| | magnesium vs PC | - | 2.8 |
| | steel plate vs PMMA | - | 4.4 |
| | PET vs ABS | - | 3.3 |
| | PMMA vs ABS | - | 2.7 |
| Impact resistance | | - | × |
| Flexibility | | - | × |
| Surface contraction | | - | × |
| Transparency | | - | × |
| Surface resistivity | | Not Cured | $10^{15}$ |
| Color development (1) | Pigment 1 | × | × |

(continued)

| Table 9 | | Comp. Ex. 9 | Comp. Ex. 10 |
|---|---|---|---|
| Components | | | |
| Color development (2) | Pigment 2 | × | × |
| Primer evaluation (1) | UV Ink Cyan | - | 12 |
| Primer evaluation (2) | UV Ink Light Cyan | - | 7 |
| Long storage stability | | O | × |

As can be clearly seen from Tables 1 to 9, the compositions of Examples of 1 to 21 of the present invention, each containing the components (a), (b), (c), (d) and (e) in a specific quantitative relationship, exhibited high adhesion to polar resins, ceramics, metals and other materials and exhibited desirable impact resistance, flexibility, surface contraction and transparency. Each of the compositions containing the ionic liquid (f) also showed desirable surface resistivity. In comparison, Comparative Example 1, which did not contain the component (d), showed deterioration in the adhesion, impact resistance, flexibility and surface contraction.
Comparative Example 2, which contained the component (b) in a smaller amount than the lower limit defined in the present invention and the component (d) in a larger amount than the upper limit defined in the present invention, showed deterioration in the adhesion, transparency and viscosity.
Comparative Example 3, which contained the component (a) in a smaller amount than the lower limit defined in the present invention and the component (c) in a larger amount than the upper limit defined in the present invention, showed deterioration in the adhesion, impact resistance, flexibility, surface contraction and transparency.
Comparative Example 4, which contained the component (a) in a larger amount than the upper limit defined in the present invention and the component (b) in a smaller amount than the lower limit defined in the present invention, showed deterioration in the adhesion, impact resistance, flexibility, surface contraction and transparency.
Comparative Example 5, which contained the component (b) in a smaller amount than the lower limit defined in the present invention, showed deterioration in the adhesion, impact resistance, flexibility, surface contraction and transparency.
Comparative Example 6, which contained the component (a) in a smaller amount than the lower limit defined in the present invention and the component (b) in a larger amount than the upper limit defined in the present invention, showed deterioration in the adhesion, impact resistance, flexibility, surface contraction and transparency.
Comparative Example 7, which contained the component (c) in a smaller amount than the lower limit defined in the present invention, showed deterioration in the adhesion, impact resistance, flexibility, surface contraction and transparency.
Comparative Example 8, which contained the component (c) in a larger amount than the upper limit defined in the present invention, showed deterioration in the adhesion, impact resistance, flexibility, surface contraction and transparency.
Comparative Example 9, which did not contain the component (e), did not cure and could not be tested.
Comparative Example 10, which contained the component (e) in a larger amount than the upper limit defined in the present invention, showed deterioration in the adhesion, impact resistance, flexibility, surface contraction and transparency.
Each of Comparative Examples 1 to 10 had an insufficient performance as an inkjet ink and a primer layer.

The coating materials used in the inkjet ink color development test in Examples, as well as coating compositions that did not contain any of the pigments, were used in an inkjet-recording experimental apparatus equipped with a piezoelectric inkjet nozzle to record on a recording medium. Each composition produced desirable printing results.
The ink supply system consisted of a source tank, a supply tube, an ink supply tank located just before the inkjet head, a filter, and a piezoelectric inkjet head. The part extending from the ink supply tank to the inkjet head was thermally insulated and heated. Temperature sensors were arranged on each near the ink supply tank and near the nozzle of the inkjet head and the temperature was controlled so that the nozzle area was maintained at 45°C ± 2°C. The piezoelectric inkjet head was operated to eject 8 to 30 pl multi-sized dots at a resolution of 720 x 720 dpi. After the ink droplets hit the medium, UV light was focused so that the light intensity at the exposure surface would be 1, 630 $mW/cm^2$. The exposure system, the main scanning speed and the ejection frequency were adjusted so that the irradiation could be started 0.1 seconds after the ink droplets hit the recording medium. Adjustments were also done such that the cumulative light dose illuminated onto the image would be 4, 500 $mJ/cm^2$. The UV lamp used was a HIGH CURE mercury lamp HAN 250NL (manufactured by GS Yuasa Corporation). As used herein, the term "dpi" means the number of dots per 2.54 cm. The recording medium used was ESTER FILM E5000 (film thickness = 125 μm, Toyobo Co ., Ltd.)
The coating composition of the present invention may also be used as an ink for use in an inkjet-recording apparatus.

It is also useful as a primer. Since a primer is also in many cases applied using an inkjet-recording apparatus, the coating composition of the present invention having a low viscosity is useful as the primer.

Industrial Applicability

The adhesive composition or the coating composition of the present invention exhibits high adhesion to a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin, and has transparency, surface smoothness, flexibility and impact resistance in a well-balanced manner. For this reason, the composition is not only suitable for forming a coating layer or a transparent primer layer on the surface of these specific adherends and for adhering the specific adherends to one another (in particular, adherends of different materials), but it also finds useful application in various construction materials, packaging materials, printing materials, display materials, materials for electric and electronic parts, materials for optical parts, liquid crystal display panels and various other materials.

## Claims

**1.** An adhesive composition, comprising:

(a) 10 to 30 % by mass of an epoxy resin;
(b) 25 to 55 % by mass of an oxetane compound;
(c) 25 to 55 % by mass of a vinyl ether compound;
(d) 1 to 15 % by mass of a modifier, wherein the total amount of the components (a) to (d) is 100 % by mass; and
(e) 3 to 15 parts by mass of a photocationic polymerization initiator with respect to 100 parts by mass of the total amount of the components (a) to (d).

**2.** The adhesive composition according to claim 1, wherein the component (d) is at least one selected from the group consisting of (d-1) a polyol having a hydroxyl value of 40 to 330 mg KOH/g; (d-2) a polyol having a hydroxyl value of 40 to 330 mg KOH/g and an acid value of 2 to 20 mg KOH/g; (d-3) a modified rubber; and (d-4) a compound having an epoxy equivalent of 150 to 700 g/mol.

**3.** The adhesive composition according to claim 2, wherein the component (d-1) is at least one selected from the group consisting of (d-1-1) a castor oil-based polyol having a hydroxyl value of 40 to 330 mg KOH/g; (d-1-2) a polybutadiene-based polyol having a hydroxyl value of 40 to 330 mg KOH/g; and (d-1-3) a polyisoprene-based polyol having a hydroxyl value of 40 to 330 mg KOH/g or a hydrogenated product thereof.

**4.** The adhesive composition according to claim 3, wherein the component (d-1) is (d-1-1-1) an aromatic castor oil-based polyol having a hydroxyl value of 40 to 330 mg KOH/g.

**5.** The adhesive composition according to claim 3, wherein the component (d-2) is (d-2-1) a castor oil-based polyol having a hydroxyl value of 40 to 330 mg KOH/g and an acid value of 2 to 20 mg KOH/g.

**6.** The adhesive composition according to claim 3, wherein the component (d-3) is an acid-modified polybutadiene or an acid-modified polyisoprene.

**7.** The adhesive composition according to claim 3, wherein the component (d-4) is (d-4-1) a polyepoxy compound having an epoxy equivalent of 150 to 250 g/mol.

**8.** The adhesive composition according to claim 3, wherein the component (d-4) is (d-4-2) a polymer with a saturated backbone having an epoxy equivalent of 500 to 700 g/mol.

**9.** The adhesive composition according to any of claims 1 to 8, further comprising (f) an ionic liquid to serve as an antistatic material in an amount of 0.5 to 10 parts by mass with respect to 100 parts by mass of the total amount of the components (a) to (d).

**10.** The adhesive composition according to claim 9, wherein the ionic liquid (f) comprises at least one cation selected from the group consisting of imidazolium, pyridinium, pyrrolidinium, phosphonium, ammonium and sulfonium.

**11.** The adhesive composition according to claim 10, wherein the ionic liquid (f) comprises an anion selected from the group consisting of halogens, carboxylates, sulfates, sulfonates, thiocyanates, aluminates, borates, phosphates, phosphinates, amides, antimonates, imides and methides.

**12.** The adhesive composition according to any of the claims 9 to 11, further comprising (g) an antistatic improver, wherein the antistatic improver (g) is at least one selected from the group consisting of (g-1) an acidic phosphate and (g-2) a carbodiimide compound and is added in an amount in the range of 0.02 to 30 parts by mass with respect to 1 part by mass of the ionic liquid (f).

**13.** The adhesive composition according to any of the claims 1 to 12, wherein an adherend with the adhesive composition is a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin.

**14.** An adhesion method comprising the following Steps of:

(I) preparing an adhesive composition by mixing, in any order, the following components:

(a) 10 to 30 % by mass of an epoxy resin;
(b) 25 to 55 % by mass of an oxetane compound;
(c) 25 to 55 % by mass of a vinyl ether compound;
(d) 1 to 15 % by mass of a modifier, wherein the total amount of the components (a) to (d) is 100 % by mass; and
(e) 3 to 15 parts by mass of a photocationic polymerization initiator with respect to 100 parts by mass of the total amount of the components (a) to (d);

(II) laminating the adhesive composition obtained in Step (1) above onto a surface of a layer (B1) of a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin to form a layer (A) of the adhesion composition; and
(III) further laminating a layer (B2) of a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin onto the layer (A) of the adhesive composition of the laminate obtained in Step (II), wherein the Step (I), (II) and (III) are sequentially carried out in this order.

**15.** A laminate comprising a layer (A) placed adjacent to a layer (B1), wherein the layer (A) comprises an adhesive composition comprising:

(a) 10 to 30 % by mass of an epoxy resin;
(b) 25 to 55 % by mass of an oxetane compound;
(c) 25 to 55 % by mass of a vinyl ether compound;
(d) 1 to 15 % by mass of a modifier, wherein the total amount of the components (a) to (d) is 100 % by mass; and
(e) 3 to 15 parts by mass of a photocationic polymerization initiator with respect to 100 parts by mass of the total amount of the components (a) to (d); and wherein the layer (B1) comprises a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin.

**16.** A laminate comprising a layer (B1), a layer (A) and a layer (B2) that are placed in this order and adjacent to one another, wherein the layer (B1) comprises a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin; wherein the layer (A) comprises an adhesive composition containing:

(a) 10 to 30 % by mass of an epoxy resin;
(b) 25 to 55 % by mass of an oxetane compound;

(c) 25 to 55 % by mass of a vinyl ether compound;
(d) 1 to 15 % by mass of a modifier, wherein the total amount of the components (a) to (d) is 100 % by mass; and
(e) 3 to 15 parts by mass of a photocationic polymerization initiator with respect to 100 parts by mass of the total amount of the components (a) to (d); and wherein the layer (B2) comprises a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin.

**17.** A coating composition, comprising:

(a) 10 to 30 % by mass of an epoxy resin;
(b) 25 to 55 % by mass of an oxetane compound;
(c) 25 to 55 % by mass of a vinyl ether compound;
(d) 1 to 15 % by mass of a modifier, wherein the total amount of the components (a) to (d) is 100 % by mass; and
(e) 3 to 15 parts by mass of a photocationic polymerization initiator with respect to 100 parts by mass of the total amount of the components (a) to (d).

**18.** The coating composition according to claim 17, wherein the component (d) is at least one selected from the group consisting of (d-1) a polyol having a hydroxyl value of 40 to 330 mg KOH/g; (d-2) a polyol having a hydroxyl value of 40 to 330 mg KOH/g and an acid value of 2 to 20 mg KOH/g; (d-3) a modified rubber; and (d-4) a compound having an epoxy equivalent of 150 to 700 g/mol.

**19.** The coating composition according to claim 18, wherein the component (d-1) is at least one selected from the group consisting of (d-1-1) a castor oil-based polyol having a hydroxyl value of 40 to 330 mg KOH/g; (d-1-2) a polybutadiene-based polyol having a hydroxyl value of 40 to 330 mg KOH/g; and (d-1-3) a polyisoprene-based polyol having a hydroxyl value of 40 to 330 mg KOH/g or a hydrogenated product thereof.

**20.** The coating composition according to claim 19, wherein the component (d-1) is (d-1-1-1) an aromatic castor oil-based polyol having a hydroxyl value of 40 to 330 mg KOH/g.

**21.** The coating composition according to claim 19, wherein the component (d-2) is (d-2-1) a castor oil-based polyol having a hydroxyl value of 40 to 330 mg KOH/g and an acid value of 2 to 20 mg KOH/g.

**22.** The coating composition according to claim 19, wherein the component (d-3) is an acid-modified polybutadiene or an acid-modified polyisoprene.

**23.** The coating composition according to claim 19, wherein the component (d-4) is (d-4-1) a polyepoxy compound having an epoxy equivalent of 150 to 250 g/mol.

**24.** The coating composition according to claim 19, wherein the component (d-4) is (d-4-2) a polymer with a saturated backbone having an epoxy equivalent of 500 to 700 g/mol.

**25.** The coating composition according to any of claims 17 to 24, further comprising (f) an ionic liquid to serve as an antistatic material in an amount of 0.5 to 10 parts by mass with respect to 100 parts by mass of the total amount of the components (a) to (d).

**26.** The coating composition according to claim 25, wherein the ionic liquid (f) comprises at least one cation selected from the group consisting of imidazolium, pyridinium, pyrrolidinium, phosphonium, ammonium and sulfonium.

**27.** The coating composition according to claim 26, wherein the ionic liquid (f) comprises an anion selected from the group consisting of halogens, carboxylates, sulfates, sulfonates, thiocyanates, aluminates, borates, phosphates, phosphinates, amides, antimonates, imides and methides.

**28.** The coating composition according to any of claims 25 to 27, further comprising (g) an antistatic improver, wherein the antistatic improver (g) is at least one selected from the group consisting of (g-1) an acidic phosphate, (g-2) a carbodiimide compound and (g-3) a vinyl ether compound and is added in an amount in the range of 0.02 to 30 parts by mass with respect to 1 part by mass of the ionic liquid (f).

**29.** The coating composition according to any of claims 17 to 28, wherein an adherend for the adhesive composition is a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin.

**30.** A laminate comprising a layer (A) placed adjacent to a layer (B1), wherein the layer (A) comprises a coating composition comprising:

(a) 10 to 30 % by mass of an epoxy resin;
(b) 25 to 55 % by mass of an oxetane compound;
(c) 25 to 55 % by mass of a vinyl ether compound;
(d) 1 to 15 % by mass of a modifier, wherein the total amount of the components (a) to (d) is 100 % by mass; and
(e) 3 to 15 parts by mass of a photocationic polymerization initiator with respect to 100 parts by mass of the total amount of the components (a) to (d); and wherein the layer (B1) comprises a soft and hard vinyl chloride resin; polystyrene; polycarbonate; glass; aluminum; a steel plate; a polyolefin resin modified by a polar group-containing compound or a copolymer of an olefin and a polar group-containing compound; magnesium; an acrylonitrile-butadiene-styrene copolymer; a polyester resin; or an acrylic resin.

**31.** An inkjet ink comprising the coating composition according to any of claims 17 to 29.

**32.** The inkjet ink according to claim 31, further comprising a colorant.

**33.** A primer layer disposed on an inkjet recording medium, the primer layer comprising the coating composition according to any of claims 17 to 29.

**34.** A printed article comprising an inkjet recording medium printed using the inkjet ink according to claim 31 or 32.

**INTERNATIONAL SEARCH REPORT**

International application No.
PCT/JP2010/067250

A. CLASSIFICATION OF SUBJECT MATTER
*C09J163/00*(2006.01)i, *C09D4/00*(2006.01)i, *C09D11/00*(2006.01)i, *C09D163/00*(2006.01)i, *C09J4/00*(2006.01)i

According to International Patent Classification (IPC) or to both national classification and IPC

B. FIELDS SEARCHED

Minimum documentation searched (classification system followed by classification symbols)
C09J163/00, C09D4/00, C09D11/00, C09D163/00, C09J4/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 4235698 B2 (Asahi Kasei Chemicals Corp.), 11 March 2009 (11.03.2009), claims; examples<br>& WO 2005/019299 A1 & EP 1657268 A1<br>& US 2006/222999 A1 & KR 2006-057615 A<br>& CN 1839169 A & TW 286145 B1 | 1,2,13-18, 29-34<br>3-12,19-28 |
| Y | JP 8-277385 A (Toagosei Co., Ltd.), 22 October 1996 (22.10.1996), claims; examples<br>(Family: none) | 1-16 |
| Y | JP 2007-177061 A (Fuji Seal International, Inc.), 12 July 2007 (12.07.2007), claims; examples<br>(Family: none) | 17-34 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 November, 2010 (15.11.10) | 22 November, 2010 (22.11.10) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2010/067250

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2010-070665 A (Fujifilm Corp.),<br>02 April 2010 (02.04.2010),<br>claims; examples; paragraph [0032]<br>(Family: none) | 17-24,29-34<br>25-28 |
| Y | JP 2008-037879 A (Konica Minolta Medical & Graphic, Inc.),<br>21 February 2008 (21.02.2008),<br>claims; examples; paragraphs [0022], [0029]<br>(Family: none) | 1-34 |
| Y | JP 2007-224235 A (Daicel Chemical Industries, Ltd.),<br>06 September 2007 (06.09.2007),<br>claims; examples<br>(Family: none) | 1-34 |
| Y | JP 2008-207356 A (Teijin DuPont Films Japan Ltd.),<br>11 September 2008 (11.09.2008),<br>claims<br>& KR 2008-078567 A & TW 200906615 A | 9-12,25-28 |
| Y | JP 9-302582 A (Komatsu Seiren Co., Ltd.),<br>25 November 1997 (25.11.1997),<br>claims<br>(Family: none) | 12,28 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H8208832 B
- JP 2880845 B
- JP 2004514014 A
- JP 2007050620 A
- JP 2005089712 A